# EUROPEAN PATENT APPLICATION

(11) **EP 4 383 020 A1**
(43) Date of publication of application: **12.06.2024**
(21) Application number: 22869196.0
(22) Date of filing: 13.09.2022
(51) Int. Cl.: G05B 15/02

(54) **SMART HOME CONTROL METHOD**

(30) Priority: 16.09.2021 CN 202111089434
(71) Applicant: Huawei Technologies Co., Ltd., Shenzhen, Guangdong 518129 (CN)
(72) Inventor: PAN, Dongxue, Shenzhen, Guangdong 518129 (CN); FANG, Xiwen, Shenzhen, Guangdong 518129 (CN); MA, Xiaoshuang, Shenzhen, Guangdong 518129 (CN); LI, Changting, Shenzhen, Guangdong 518129 (CN)
(74) Representative: Epping - Hermann - Fischer
(86) International application number: PCT/CN2022/118434
(87) International publication number: WO 2023/040827

(57) **Abstract**

A smart home control method is provided, including: A central control device identifies an identity of a user, and determines, based on the identity of the user, a smart home linkage solution associated with the identity of the user. Then, the central control device controls, based on the smart home linkage solution associated with the identity of the user, a public smart home device to enter a corresponding operating mode. When receiving a first operation of the user, the central control device controls, based on the smart home linkage solution associated with the identity of the user, the public smart home device to enter the corresponding operating mode. According to the method, the smart home device can enable, based on different family members, operating modes corresponding to the different family members. The smart home linkage solution can reflect difference in controlling the smart home device by users, to improve user experience.

## Description

This application claims priority to Chinese Patent Application No. 202111089434.X, filed with the China National Intellectual Property Administration on September 16, 2021 and entitled "SMART HOME CONTROL METHOD", which is incorporated herein by reference in its entirety.

### TECHNICAL FIELD

This application relates to the field of smart home technologies, and in particular, to a smart home control method.

### BACKGROUND

With development of terminal technologies, increasingly more smart home devices are used in the life of users. The smart home device is an intelligent device that can implement information exchange and even self-learning by using a wireless communication technology, and can provide convenient and effective services for the users, to reduce workloads of the users.

Currently, a smart home system is generally controlled in a voice manner, and a user needs to perform voice control on the smart home system within a voice receiving range of the smart home system. However, the user can only perform simple control on a smart home device, for example, control on and off of the smart home device in the voice manner, resulting in poor user experience.

### SUMMARY

This application provides a smart home control method, so that a smart home device can distinguish persons, and difference in controlling the smart home device by different users can be reflected, to improve user experience.

According to a first aspect, this application provides a smart home control method. The method includes: A first device receives a first instruction of a first user, and controls a second device to operate by using a first operating parameter; and the first device receives a second instruction of a second user, and controls the second device to operate by using a second operating parameter, or controls a third device to operate by using a third operating parameter. Semantic content of the first instruction is the same as that of the second instruction, the first operating parameter is different from the second operating parameter, and the second device is different from the third device.

That the semantic content of the first instruction is the same as that of the second instruction may mean that text information of the first instruction is the same as that of the second instruction. For example, the semantic content of the first instruction and the semantic content of the second instruction are "Hey Celia, I'm home".

That the semantic content of the first instruction is the same as that of the second instruction may alternatively mean that an identifier of the first instruction is the same as that of the second instruction. For example, both the identifier of the first instruction and the identifier of the second instruction are a "Go home" identifier.

The first instruction and the second instruction may be collected and obtained by the first device, or may be sent by a server to the first device after the server identifies an identity of a user.

According to the method in the first aspect, a smart home device can enable, based on different family members, operating modes corresponding to the different family members. In this way, a smart home linkage solution can reflect difference in controlling the smart home device by users, to improve user experience.

With reference to the first aspect, in a possible implementation, before the first device receives the first instruction of the first user, the method further includes: When the first device detects that a spatial distance between a geographical location of a fourth device of the first user and a geographical location of the second device is within a preset distance, or a time period required for the fourth device to reach a geographical location of the second device is within a preset time period, the first device controls a fifth device to operate by using a fourth operating parameter, where the second device is different from the fifth device.

The geographical location of the second device may be understood as a home location of the first user. When the first user is about to go home and is near home (for example, entering a residential community), or the fourth device of the first user estimates, by using navigation software, that the user is about to go home within a preset time period (for example, 5 minutes), before the first user goes home, the first device requests to control the second device to operate by using the first operating parameter, for example, control an air conditioner in a living room to be turned on, or control an air purifier in a living room to be turned on. In this way, the user can have good home entrance experience when the user goes home.

In a possible implementation, the fourth device and the first device are a same device. The fourth device may be a device associated with the first user, for example, a device like a mobile phone, a tablet, a smartwatch, or a smart band that is frequently used or carried by the first user. In this way, an electronic device that is frequently used or carried by the first user may be used as a central control device to control a smart home device in the home to operate.

With reference to the first aspect, in a possible implementation, after that a first device controls a second device to operate by using a first operating parameter, the method further includes: After the first device controls the second device to operate, for a first time period, by using the first operating parameter, the first device controls a sixth device to operate by using a fifth operating parameter, where the sixth device is different from the second device, and the sixth device is different from the fifth device. In this way, the first device may control different devices to be turned on in sequence. For example, after the user goes home, the user first turns on a lamp and then turns on a television. Compared with a case in which the lamp and the television are turned on at the same time, energy consumption can be reduced.

With reference to the first aspect, in a possible implementation, that a first device receives a first instruction of a first user, and controls a second device to operate by using a first operating parameter specifically includes: The first device receives the first instruction of the first user, detects a first operation of the first user, and controls the second device to operate by using the first operating parameter.

For example, the first operation may be an operation of turning on a lamp in a living room. The first device controls the air conditioner in the living room to be turned on when the first device detects the operation of turning on the lamp by the user. In this way, misidentification by the first device can be prevented, and accuracy of controlling, by the first device, the smart home device to operate can be improved.

With reference to the first aspect, in a possible implementation, after the first device receives the first instruction of the first user, the method further includes: The first device detects a second operation of the first user, and controls a seventh device to operate by using a sixth operating parameter. In this way, the first device may control some devices to automatically enter operating modes. This reduces user operations. The other devices can enter operating modes after the second operation of the user is received, to prevent misidentification by the first device, and improve accuracy of controlling, by the first device, the smart home device to operate.

With reference to the first aspect, in a possible implementation, that a first device receives a first instruction of a first user, and controls a second device to operate by using a first operating parameter specifically includes: The first device receives the first instruction of the first user, and determines a seventh operating parameter that is of the second device and that is indicated by the first instruction; the first device outputs first prompt information when the seventh operating parameter does not meet a first condition; and the first device receives the first operating parameter entered by the first user, and controls the second device to operate by using the first operating parameter. In this way, in an operating start phase, the first device may provide prompt information for an inappropriate operating parameter, to avoid increasing energy consumption when the second device operates by using the inappropriate operating parameter.

With reference to the first aspect, in a possible implementation, after the first device controls the second device to operate by using the first operating parameter, the method further includes: When the first device detects that the first operating parameter does not meet a second condition, the first device controls the second device to operate by using an eighth operating parameter. The second condition may be a time period, a temperature, humidity, operating duration, or the like. In this way, the first device can automatically control the second device to switch the operating mode. This reflects that the first device can intelligently control the smart home device.

With reference to the first aspect, in a possible implementation, after the first device controls the second device to operate by using the first operating parameter, the method further includes: When the first device detects that the first device is about to switch from a first scene mode to a second scene mode, the first device controls an eighth device to operate by using the eighth operating parameter corresponding to the second scene mode. In this way, the first device may control the eighth device to switch the operating mode in advance. This brings better user experience to the user.

With reference to the first aspect, in a possible implementation, after the first device receives the first instruction of the second user, and before the first device controls the second device to operate by using the second operating parameter, the method further includes: The first device outputs second prompt information, where the second prompt information is used to prompt the user whether to modify an operating parameter of the second device; and the first device receives a third instruction entered by the first user or the second user, and controls the second device to operate by using the second operating parameter. In this way, when different users trigger a same smart home device to enter different operating modes, the first device may prompt the user whether to switch the operating mode. This improves user experience.

With reference to the first aspect, in a possible implementation, before the first device receives the first instruction of the first user, the method further includes: The first device receives the eighth parameter that is of the second device and that is entered by the first user; the first device outputs third prompt information when the eighth operating parameter does not meet the second condition; and the first device receives and stores the first operating parameter that is of the second device and that is entered by the first user. The second condition may be a time period, a temperature, humidity, operating duration, or the like. In this way, in a setting phase, for an inappropriate setting, the first device may provide prompt information to prompt the user of the inappropriate setting, to avoid an increase in energy consumption caused by the inappropriate setting.

In another possible implementation, the smart home device in the home may be bound to the identity of the user. When the first user sets a smart home device in a room of the second user, the first device may output prompt information. The prompt information is used to prompt the first user that the first user does not have permission to configure the smart home device in the room of the second user. This reflects association between the identity of the user and the smart home device.

With reference to the first aspect, in a possible implementation, before the first device receives the first instruction of the first user, the method further includes: The first device receives the second parameter that is of the second device and that is entered by the first user or the third operating parameter that is of the third device and that is entered by the first user; and the first device stores the second operating parameter that is of the second device and that is entered by the first user or the third operating parameter that is of the third device and that is entered by the first user. In this way, the first user may help the second user who is not familiar with a setting process set a smart home linkage solution that belongs to the second user.

In another possible implementation, when the first user assists the second user in setting a smart home linkage solution, when some smart home devices are configured, if an age of the second user does not meet a use condition of the smart home device, the first device may output prompt information. The prompt information is used to prompt that the first user is prohibited from configuring the smart home device for the second user.

With reference to the first aspect, in a possible implementation, that a first device receives a first instruction of a first user, and controls a second device to operate by using a first operating parameter specifically includes: The first device receives the first instruction of the first user; the first device obtains identity information of the first user based on the first instruction, where the identity information includes one or more of a fingerprint feature, a voiceprint feature, a facial feature, or a body action type; and the first device determines the second device and the first operating parameter based on the identity information of the first user.

In another possible implementation, that a first device receives a first instruction of a first user, and controls a second device to operate by using a first operating parameter specifically includes: The first device receives the first instruction of the first user; the first device obtains identity information of the first user and the first scene mode based on the first instruction, where the identity information includes one or more of a fingerprint feature, a voiceprint feature, a facial feature, or a body action type; and the first device determines the second device and the first operating parameter based on the identity information of the first user and the first scene mode.

The body action type includes but is not limited to foot stamping frequency and hand clapping frequency.

With reference to the first aspect, in a possible implementation, the first instruction includes one or more of the following: a speech signal, face image information, fingerprint image information, an identifier, and a scene mode identifier.

With reference to the first aspect, in a possible implementation, that a first device receives a first instruction of a first user specifically includes: The first device receives a first speech signal of the first user; and the first device performs semantic analysis on the first speech signal to obtain the first instruction; or the first device determines the first instruction based on an audio feature of the first speech signal. The audio feature includes one or more of the following: a tempo, a rhythm, a pitch, or a melody. In this way, the first device may not only obtain the first instruction based on semantic analysis, but also obtain the first instruction based on the audio feature. This improves interest of user identity identification.

With reference to the first aspect, in a possible implementation, the first device is any one of the following: a smart speaker, a robot housekeeper, a large screen device, a smart door, a mobile phone, a tablet, a smartwatch, a smart band, and a server. The fifth device is any one of the following: a smart air conditioner, a smart fan, an air purifier, and a floor sweeping robot. The second device is any one of the following: a smart lamp. The sixth device is any one of the following: a smart television and a projector.

According to a second aspect, this application provides a smart home control apparatus. The apparatus includes units configured to perform the method according to any one of the first aspect. According to a third aspect, this application provides an electronic device. The electronic device includes one or more processors and one or more memories, the one or more memories are coupled to the one or more processors, and the one or more memories are configured to store computer program code. The computer program code includes computer instructions. The one or more processors invoke the computer instructions to enable the electronic device to perform the method according to any one of the first aspect.

According to a fourth aspect, this application provides a computer-readable storage medium, including instructions. When the instructions are run on an electronic device, the electronic device is enabled to perform the method according to any one of the first aspect.

According to a fifth aspect, this application provides a computer program product. When the computer program product runs on an electronic device, the electronic device is enabled to perform the method according to any one of the first aspect.

It may be understood that the apparatus according to the second aspect, the electronic device according to the third aspect, the computer-readable storage medium according to the fourth aspect, and the computer program product according to the fifth aspect are all configured to perform the method according to embodiments of this application. Therefore, for advantageous effect that can be achieved, refer to advantageous effect in the corresponding method. Details are not described herein again.

### BRIEF DESCRIPTION OF DRAWINGS

FIG. 1 shows an example of a schematic diagram of smart home linkage according to an embodiment of this application;
FIG. 2A and FIG. 2B show an example of a schematic diagram of an architecture according to an embodiment of this application;
FIG. 3 shows an example of a diagram of a configuration functional module in a smart home linkage solution according to an embodiment of this application;
FIG. 4 shows an example of a diagram of a functional module in a smart home linkage solution according to an embodiment of this application;
FIG. 5A to FIG. 5D show examples of a group of schematic diagrams of collecting biological information of a user by a central control device according to an embodiment of this application;
FIG. 6A and FIG. 6B show examples of a group of schematic diagrams of setting a smart speaker as a central control device in a speaker app according to an embodiment of this application;
FIG. 6C and FIG. 6D show examples of a group of schematic diagrams of setting a smart speaker as a central control device in an AI Life app according to an embodiment of this application;
FIG. 7A to FIG. 7P show examples of a group of schematic diagrams of smart home linkage solutions in different scene modes according to an embodiment of this application;
FIG. 8A to FIG. 8J show examples of a group of schematic diagrams of helping, by a first user, a second user set smart home linkage solutions in different scene modes according to an embodiment of this application;
FIG. 9A shows an example of a schematic diagram of a home scenario 90 according to an embodiment of this application;
FIG. 9B shows an example of a schematic diagram of a living room area 910 according to an embodiment of this application;
FIG. 10A to FIG. 10C show examples of a group of schematic diagrams of identifying an identity of a user by a central control device according to an embodiment of this application;
FIG. 11A shows an example of a user interface 7200 of an application (for example, an AI Life application) of a home account associated with an identity of a user according to an embodiment of this application;
FIG. 11B shows an example of another user interface 1100 of an application (for example, an AI Life application) of a home account associated with an identity of a user according to an embodiment of this application;
FIG. 12 shows an example of another schematic diagram of identifying an identity of a user according to an embodiment of this application;
FIG. 13A and FIG. 13B show examples of a group of schematic diagrams of controlling smart home linkage based on identities of different users according to an embodiment of this application;
FIG. 14A and FIG. 14B show examples of a group of schematic diagrams of controlling smart home linkage based on an identity of a first user according to an embodiment of this application;
FIG. 15A and FIG. 15B show examples of a group of schematic diagrams of controlling smart home linkage based on an identity of a second user according to an embodiment of this application;
FIG. 16 shows an example of a schematic diagram of another smart home linkage according to an embodiment of this application;
FIG. 17 shows an example of a schematic diagram of still another smart home linkage according to an embodiment of this application;
FIG. 18 shows an example of a schematic diagram of providing an adjustment suggestion by a central control device according to an embodiment of this application;
FIG. 19A and FIG. 19B show examples of a group of schematic diagrams of outputting prompt information by an electronic device 100 according to an embodiment of this application;
FIG. 20A and FIG. 20B show examples of a group of schematic diagrams of entering, by a public smart home device, a preset operating mode by identifying an identity of a user and a scene mode according to an embodiment of this application;
FIG. 21 shows an example of a schematic diagram of a smart home control method according to an embodiment of this application;
FIG. 22 shows an example of a schematic diagram of a structure of an electronic device 100 according to an embodiment of this application; and
FIG. 23 shows an example of a schematic diagram of a structure of a central control device according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

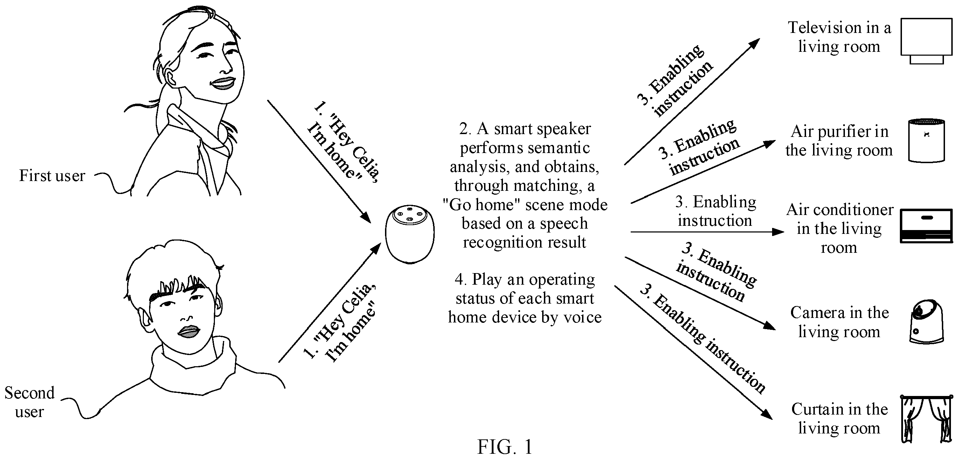

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of the electronic device. Currently, a smart home device linkage solution is implemented. FIG. 1 is a schematic diagram of an example of a smart home device linkage solution.

A user can wake up a smart speaker by voice and control another smart home device in the home to be turned on or off through the smart speaker.

Before the user wakes up the smart speaker by voice, the user needs to input a wakeup word on the smart speaker, and set a scene mode corresponding to the wakeup word. The scene mode includes but is not limited to a "Go home" scene mode, a "Leave home" scene mode, a "Sleep" scene mode, and a "Video watching" scene mode. For example, the wakeup word may be "Hey Celia, I'm home", and the smart speaker controls another smart home device to enable an operating mode corresponding to the "Go home" scene mode.

As shown in FIG. 1, a first user or a second user in family members speaks the wakeup word "Hey Celia, I'm home". The smart speaker is in an online state, identifies a speech result of the first user or the second user, and obtains the "Go home" scene mode through matching based on the identified speech result. Then, the smart speaker sends an enabling instruction to the another smart home device in the "Go home" scene mode based on an operating mode of the another smart home device in the "Go home" scene mode. The instruction is used to trigger the another smart home device in the "Go home" scene mode to enable a corresponding operating mode. For example, the smart speaker sends a start instruction to an air conditioner in a living room. The start instruction indicates the air conditioner in the living room to enable an operating mode corresponding to the "Go home" scene mode, for example, a temperature of the air conditioner is adjusted to 26°C. For another example, the smart speaker sends a start instruction to a curtain in a living room. The start instruction indicates the curtain in the living room to enable an operating mode corresponding to the "Go home" scene mode, for example, the curtain in the living room is opened.

After the another smart home device enables the corresponding operating mode, the another smart home device sends information in response to the start instruction to the smart speaker. The information indicates that the corresponding operating mode of the another smart home device is enabled to the smart speaker. Then, the smart speaker may broadcast an operating state of the another smart home device in a voice manner. For example, speech content may be "Welcome home. The air conditioner in the living room is turned on and the curtain in the living room is opened for you".

It can be learned from the foregoing analysis that, for the current smart home linkage solution, in a same scene mode, different users speak a same speech instruction, and a smart home device in the home is in a same operating mode. In the current smart home linkage solution, people cannot be distinguished, and difference between different family members in controlling the smart home device in the home cannot be reflected.

Therefore, an embodiment of this application provides a smart home control method. The method includes the following steps.

Step 1: A central control device identifies an identity of a user. Specifically, in a possible implementation, the central control device identifies the identity of the user based on biological information of the user. The biological information of the user includes but is not limited to voiceprint information of the user, face image information of the user, fingerprint information of the user, and the like. Biological information of each user is in a one-to-one correspondence with an identity of each user, and the central control device may identify the identity of the user based on the biological information of the user. In another possible implementation, the central control device may identify the identity of the user based on account information of the user. Currently, real-name authentication of account information of a user is completed. Therefore, account information of a user is also in a one-to-one correspondence with an identity of each user, and the smart home device may identify the identity of the user based on the account information of the user. In another possible implementation, the central control device may alternatively identify the identity of the user based on a body action of the user. The body action of the user may include but is not limited to hand clapping, foot stamping, leg raising, another gesture, and the like. When the body movement of the user is hand clapping and foot stamping, identities of users correspond to different hand clapping frequency or foot stamping frequency. In this way, the central control device may identify the identity of the user based on different clasp frequency or different stamping frequency.

Step 2: The central control device determines, based on the identity of the user, a smart home linkage solution associated with the identity of the user. Before the central control device identifies the identity of the user, each user may preset a personal smart home linkage solution, and different users may set different smart home linkage solutions. Then, after the central control device identifies the identity of the user, the central control device may obtain, through matching based on the identity of the user, the smart home linkage solution preset by the user.

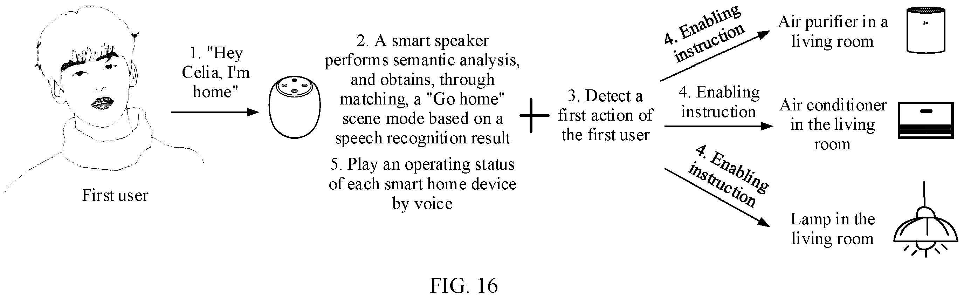

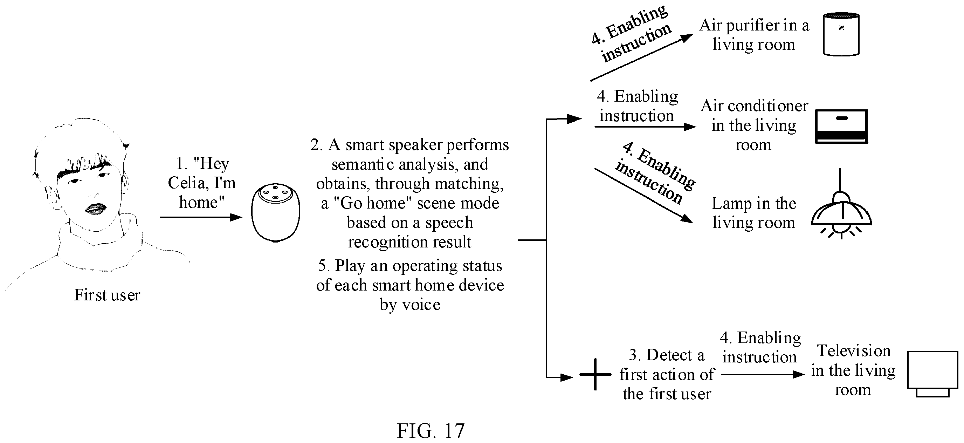

Step 3: The central control device controls, based on the smart home linkage solution associated with the identity of the user, a public smart home device to enter a corresponding operating mode. Optionally, after the central control device determines, based on the identity of the user, the smart home linkage solution associated with the identity of the user, the central control device sends a preset operating parameter to the controlled smart home device. After receiving the preset operating parameter, the controlled smart home device first does not enter a preset operating mode. In a possible implementation, when the central control device detects a first action of the user, the central control device sends an instruction to the controlled smart home device, and after receiving the instruction, the controlled smart home device enters the preset operating mode based on the preset operating parameter. In another possible implementation, when the controlled smart home detects the first action of the user, the controlled smart home automatically enters the preset operating mode based on the preset operating parameter. For details, refer to an embodiment described in FIG. 16 or FIG. 17 subsequently. Details are not described in this embodiment of this application.

The central control device is a device that is authorized to send an instruction to a manageable smart home device, to control the public smart home device in the home to be turned on, turned off, or perform another operation (for example, entering the preset operating mode). In this way, the central control device may replace a function of a mobile phone or a tablet. Even if the user is not at home, the user may send an instruction to the central control device by using the mobile phone or the tablet. After receiving the instruction, the central control device controls the public smart home device in the home to enable the corresponding operating mode.

The central control device may be an electronic device, for example, a mobile phone, a tablet, a smartwatch, or a smart band.

Alternatively, the central control device may be a public smart home device, for example, a smart television, a smart lamp, a smart door, a smart speaker, or a robot housekeeper.

Alternatively, the central control device may be another device, for example, a remote control, a router, a smart gateway, or a cloud server.

In the following embodiments of this application, an example in which the central control device is a smart speaker is used for description.

A public smart home device is a smart home device installed at home, for example, a smart lamp, a smart oven, a smart fan, a smart air conditioner, a smart television, a smart large screen, a smart band, a smart watch, a smart speaker, a smart refrigerator, a smart door or window, an intelligent vehicle, an intelligent monitor, an intelligent robot, an intelligent camera.

According to the method, the public smart home device can enable, based on different family members, operating modes corresponding to different family members. In this way, the smart home linkage solution can reflect difference in controlling the smart home device by the users. This improves user experience.

Optionally, in the method, an intelligent interception module may be further set when the personal smart home linkage solution is set. That is, for an operating mode that is set inappropriately or consumes high energy, prompt information may be provided, and the user is advised to select an operating mode that consumes low energy or is more secure. This reflects intelligent solution setting.

Optionally, in the method, an adjustment suggestion for the smart home linkage solution may further provided based on factors such as time. In this way, intelligent solution setting is reflected. In addition, user experience is improved.

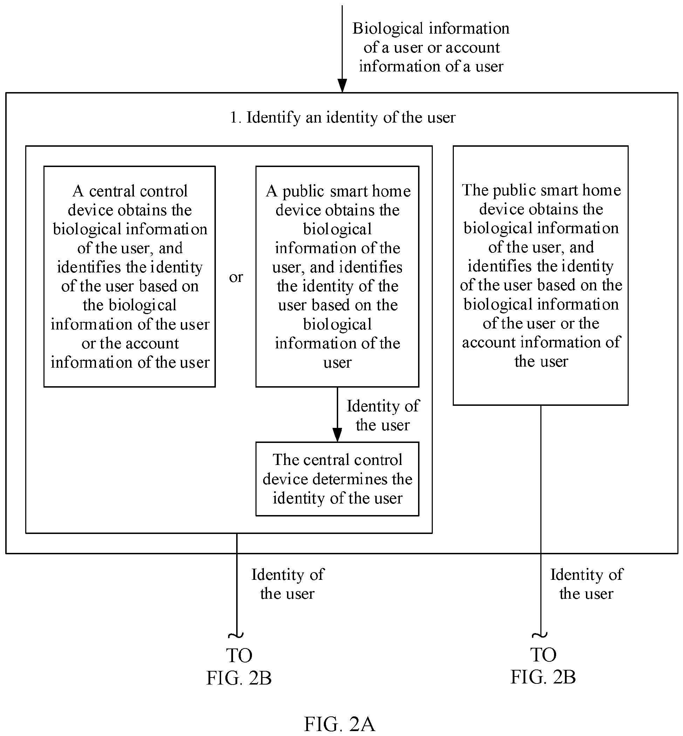

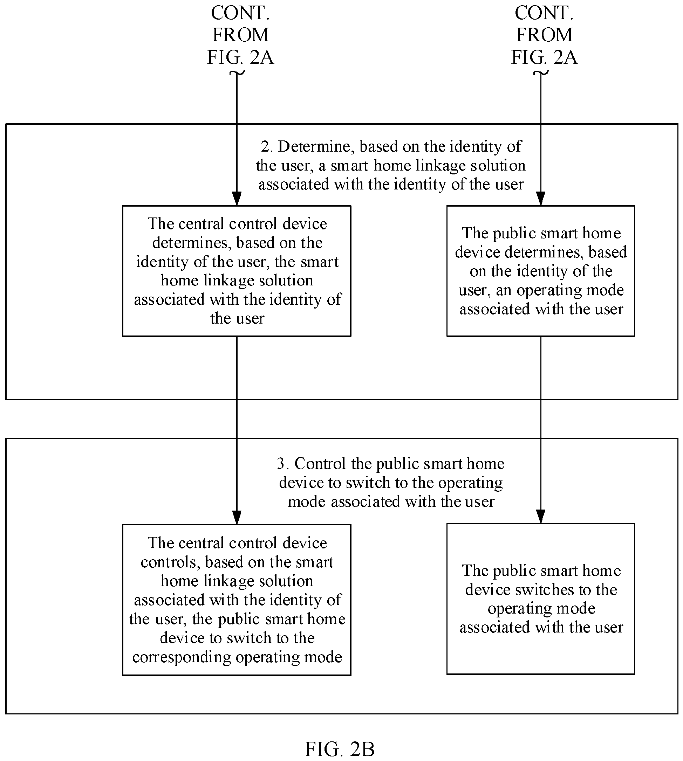

FIG. 2A and FIG. 2B show an example of a schematic diagram of an architecture according to an embodiment of this application.

First, a central control device or a public smart home device identifies an identity of a user based on biological information of the user or account information of the user.

The central control device identifies the identity of the user in either of the following manners. Manner 1: The central control device obtains the biological information of the user, and identifies the identity of the user based on the biological information of the user or the account information of the user.

Manner 2: The public smart home device (for example, a smart lock) obtains the biological information of the user, and identifies the identity of the user based on the biological information of the user. The public smart home device sends the identity of the user to the central control device, and the central control device determines the identity of the user.

Alternatively, the public smart home device obtains the biological information of the user, and sends the biological information of the user to the central control device. After receiving the biological information of the user, the central control device identifies the identity of the user based on the biological information of the user.

The public smart home device identifies the identity of the user in the following manner. Manner 1: The public smart home device identifies the identity of the user based on the biological information of the user or the account information of the user.

Then, the central control device or the public smart home device determines a smart home linkage solution associated with the identity of the user.

After the central control device identifies the identity of the user, the central control device determines, based on the identity of the user, the smart home linkage solution associated with the identity of the user.

Alternatively, after the public smart home device identifies the identity of the user, the public smart home device determines, based on the identity of the user, the smart home linkage solution associated with the identity of the user.

Finally, the central control device or the public smart home device controls the public smart home device to switch to an operating mode associated with the user.

The central control device controls, based on the smart home linkage solution associated with the identity of the user, the public smart home device to switch to the corresponding operating mode. In other words, the central control device may adjust a parameter of the public smart home device in the home based on the smart home linkage solution associated with the identity of the user, and enable the operating mode associated with the identity.

Alternatively, the public smart home device controls, based on the smart home linkage solution associated with the identity of the user, the public smart home device to switch to the corresponding operating mode.

In other words, the public smart home device in the home may not need to be controlled by the central control device, and the public smart home device may identify the identity of the user, and automatically switch to the operating mode associated with the identity of the user. For example, a large screen device (for example, a smart television, a smart projector, or a tablet) identifies the identity of the user, loads a multimedia playing record of the user, and automatically plays a video that the user likes.

For another example, a storage device (for example, a cloud) identifies the identity of the user, and switches to storage space associated with the user.

For another example, a smart speaker identifies the identity of the user, loads an audio playing record of the user, and automatically plays music that the user likes.

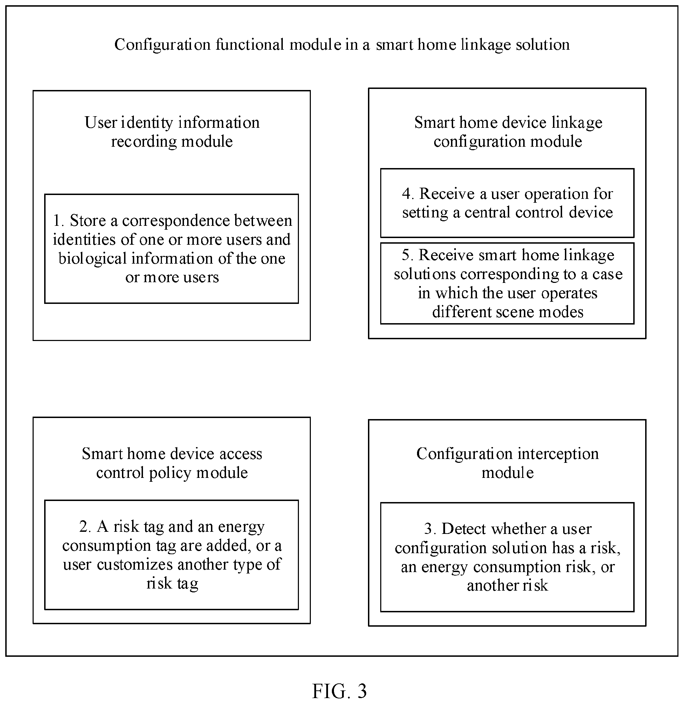

FIG. 3 shows an example of a diagram of a configuration functional module in a smart home linkage solution according to an embodiment of this application.

As shown in FIG. 3, the configuration functional module in the smart home linkage solution may include but is not limited to a user identity information recording module, a smart home device access control policy module, a configuration interception module, and a smart home device linkage configuration module.

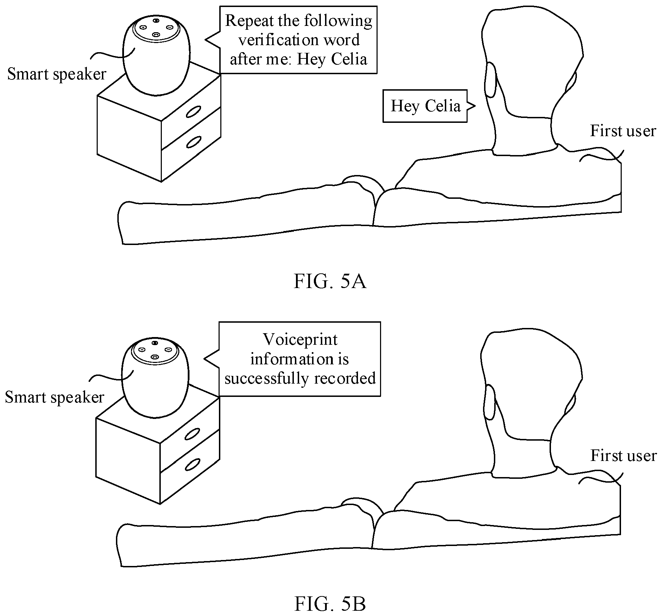

The user identity information recording module is configured to store a correspondence between identities of one or more users and biological information of the one or more users. The user identity information recording module may be located in a central control device, or may be located in a public smart home device. For how the user identity information recording module obtains and stores identity information of the user, refer to the embodiment shown in FIG. 5A to FIG. 5D. Details are not described in this embodiment of this application.

The smart home device access control policy module is configured to receive a user operation for adding a risk tag and an energy consumption tag, or a user customizes another type of risk tag. For example, an energy-saving tag is added to an air conditioner, and a danger tag is added to a microwave oven in a kitchen.

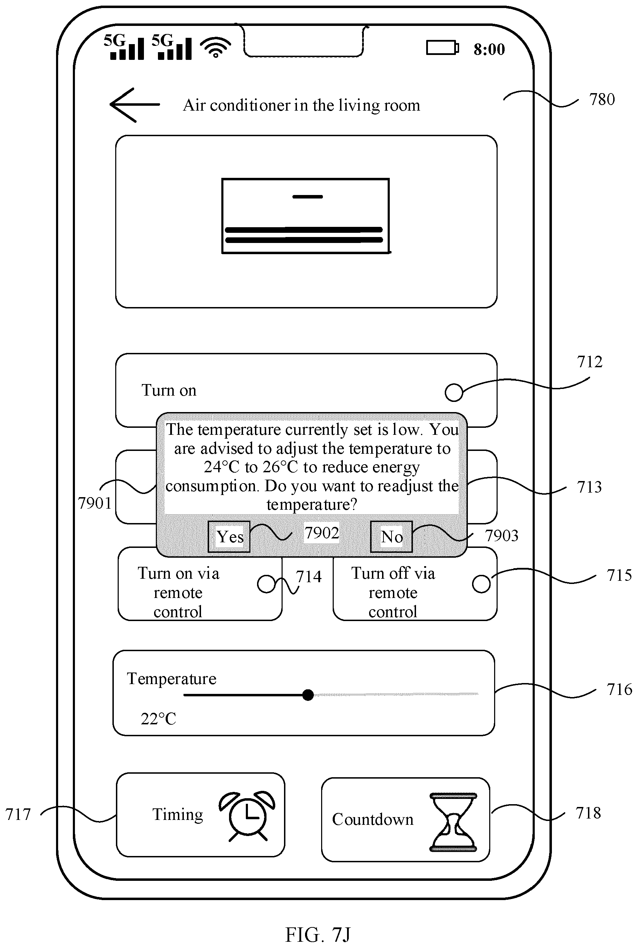

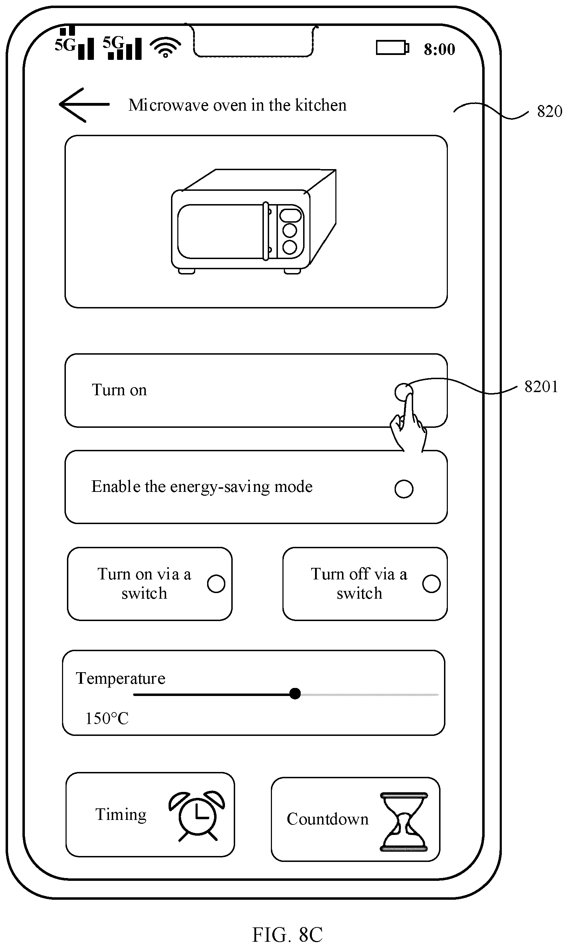

The configuration interception module is configured to: when an operating mode of the public smart home device is set, if an electronic device 100 detects that operating parameters set by the user for some public smart home devices are inappropriate, the electronic device 100 may prompt the user of an inappropriate configuration, and provide a setting suggestion. For details, refer to the embodiments described in FIG. 7J and FIG 8C subsequently. Details are not described in this embodiment of this application.

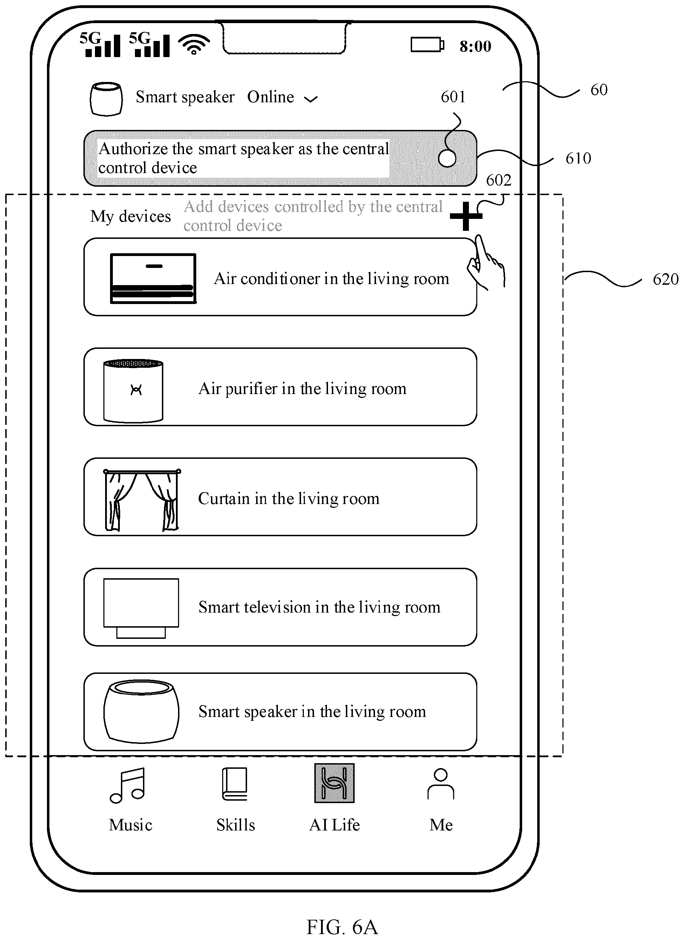

The smart home device linkage configuration module is configured to receive a user operation for setting the central control device. For details, refer to how the electronic device 100 receives the user operation for setting the central control device in FIG. 6A to FIG. 6D. Details are not described in this embodiment of this application.

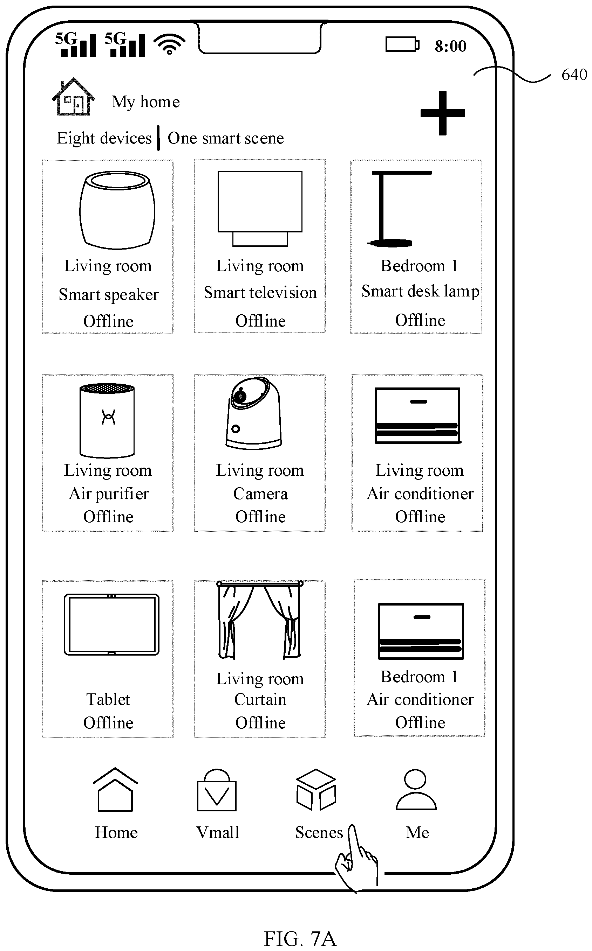

The smart home device linkage configuration module is further configured to receive smart home linkage solutions corresponding to a case in which the user operates different scene modes. For details, refer to the embodiment shown in FIG. 7A to FIG. 7O. Details are not described in this embodiment of this application.

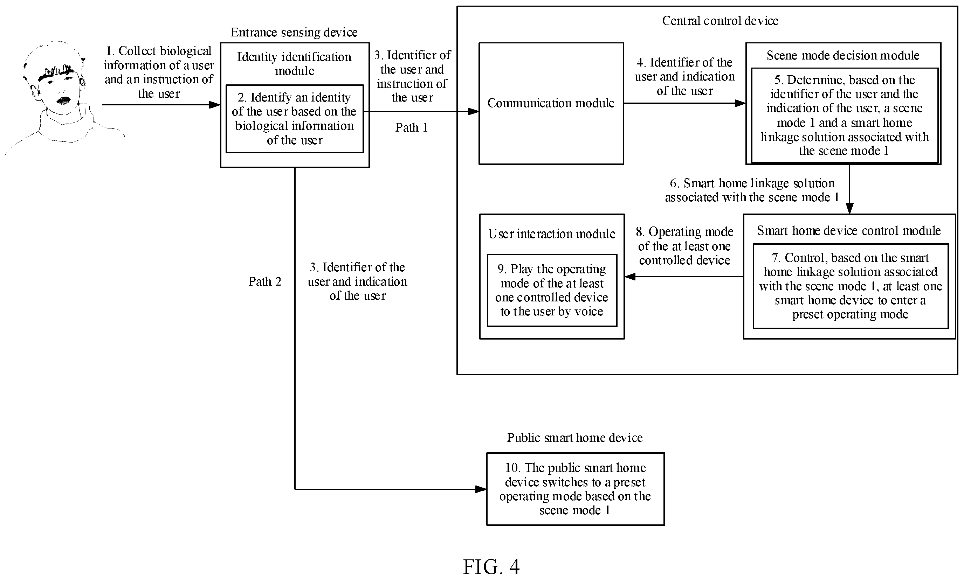

FIG. 4 shows an example of a diagram of a functional module in a smart home linkage solution according to an embodiment of this application.

As shown in FIG. 4, a smart home control solution provided in an embodiment of this application may include two implementations: Path 1 and Path 2.

First, Path 1 is described.

In Path 1, an entrance sensing device includes an identity identification module, and the identity identification module is configured to collect biological information of a user and an instruction of the user. The identity identification module identifies an identity of the user based on the biological information of the user. For how the identity identification module identifies the identity of the user based on the biological information of the user, refer to how a central control device identifies the identity of the user based on the biological information of the user described in a subsequent embodiment. Details are not described in this embodiment of this application.

The entrance sensing device sends an identifier of the user and the instruction of the user to a communication module in the central control device by using the identity identification module, and the communication module in the central control device receives the identifier of the user and the instruction of the user that are sent by the identity identification module.

Optionally, the identity identification module may alternatively be located in the central control device. This is not limited in embodiments of this application.

The communication module in the central control device sends the identifier of the user and the instruction of the user to a scene mode decision module. The scene mode decision module determines, based on the identifier of the user and the indication of the user, a scene mode 1 and a smart home linkage solution associated with the scene mode 1. For how the scene mode decision module determines, based on the identifier of the user and the indication of the user, the scene mode 1 and the smart home linkage solution associated with the scene mode 1, refer to how the central control device determines, based on at least one scene mode associated with the identity of the user, the scene mode 1 described in a subsequent embodiment. Details are not described in this embodiment of this application.

The scene mode decision module sends the smart home linkage solution associated with the scene mode 1 to a smart home device control module, and the smart home device control module controls, based on the smart home linkage solution associated with the scene mode 1, at least one smart home device to enter a preset operating mode. For how the smart home device control module controls, based on the smart home linkage solution associated with the scene mode 1, the at least one smart home device to enter the preset operating mode, refer to how the central control device controls, based on the smart home linkage solution corresponding to the scene mode 1, at least one controlled device to enter a preset operating mode described in a subsequent embodiment. Details are not described in this embodiment of this application.

The scene mode decision module sends the operating mode of the at least one controlled device to a user interaction module, and the user interaction module plays the operating mode of the at least one controlled device to a first user by voice.

Next, Path 2 is described.

Different form Path 1, in Path 2, an involved smart home control solution does not include a central control device. Specifically, an entrance sensing device includes an identity identification module, and the identity identification module is configured to: collect biological information of a user and an instruction of the user, and identity an identity of the user based on the biological information of the user.

Optionally, the identity identification module may alternatively be located in a public smart home device. This is not limited in embodiments of this application.

The identity identification module sends an identifier of the user and the instruction of the user to the public smart home device.

The public smart home device determines, based on the identifier of the user and the instruction of the user, a scene mode 1 associated with an identity of a first user, and the public smart home device enters a preset operating mode based on the scene mode 1 associated with the identity of the first user.

According to a smart home control solution provided in this embodiment of this application, different family members may be distinguished, and a smart home linkage solution associated with an identity of a family member is obtained through matching based on biological information of different family members, account information of different family members, or body actions of different family members.

Therefore, the biological information of different family members or the body actions of different family members need to be recorded in a central control device or a public smart home device.

A principle of recording the body actions of different family members is similar to that of recording the biological information of different family members by the central control device. In the following embodiments of this application, how the central control device records the biological information of different family members is described.

It can be learned from the foregoing embodiment that an identity of a user may be represented by fingerprint information, face image information, and voiceprint information of the user.

Optionally, biological information of the user may be stored in an electronic device 100 (for example, a mobile phone) used by the user. The electronic device 100 (for example, a mobile phone) may establish a communication connection to a central control device or a public smart home device. The electronic device 100 (for example, the mobile phone) sends identity information of the user to the central control device or the public smart home device, and the central control device or the public smart home device locally stores the identity information of the user.

Optionally, the biological information of the user may alternatively be stored in a server. The server may establish a communication connection to the central control device or the public smart home device. The server sends the identity information of the user to the central control device or the public smart home device, and the central control device or the public smart home device locally stores the identity information of the user.

Optionally, the biological information of the user may alternatively be collected and locally stored by the central control device or the public smart home device.

Principles of collecting the biological information of the user by the central control device and the public smart home device are consistent. In this embodiment of this application, how the central control device collects the biological information of the user is used as an example for description. FIG. 5A to FIG. 5D show examples of schematic diagrams of collecting the biological information of the user by the central control device.

In some embodiments, the central control device may be a smart speaker.

When the smart speaker needs to obtain voiceprint information of a user, the smart speaker may prompt, in a voice broadcast manner, a first user to input voiceprint information. For example, as shown in FIG. 5A, the smart speaker may broadcast "Repeat the following verification word after me: Hey Celia" by voice. The first user may speak "Hey Celia" after hearing the prompt of the smart speaker. Further, the smart speaker may collect a speech input of the first user based on the verification word, and extract voiceprint information from the speech input.

When the voiceprint information of the first user is obtained, the smart speaker may compare the voiceprint information with reference voiceprint information stored in a security module. If the voiceprint information matches one piece of voiceprint information in the stored reference voiceprint information, the smart speaker may prompt, in the voice broadcast manner, the first user that the voiceprint information is recorded.

If the voiceprint information does not match any stored reference voiceprint information, the smart speaker may store the voiceprint information in the security module as the voiceprint information of the first user. As shown in FIG. 5B, after the smart speaker records and stores the voiceprint information of the first user, the smart speaker may broadcast "The voiceprint information is successfully recorded" by voice. In this way, the user is prompted that recording of the voiceprint information is completed.

According to the foregoing manner, the smart speaker may collect and store voiceprint information of a plurality of different users (for example, the first user and a second user).

After the smart speaker needs to obtain the voiceprint information of the first user, when the smart speaker includes an image collection module, the smart speaker may prompt, in the voice broadcast manner, the first user to input face image information. Specifically, an operation of collecting and storing the face image information of the first user by the smart speaker is similar to that of collecting and storing the voiceprint information of the first user by the smart speaker. Details are not described in this embodiment of this application.

When the smart speaker is not configured with a face collection apparatus, the smart speaker cannot collect a face image. The smart speaker may search for and invoke a nearby available face collection device to collect the face image. Specifically, the smart speaker may send a broadcast signal to query whether a nearby device is configured with a face collection apparatus. For example, a device near the smart speaker includes the electronic device 100 (the mobile phone or a tablet), the public smart home device (for example, a smart television), and the like. When receiving the broadcast signal from the smart speaker, a device that is near the smart speaker and that is configured with a face collection apparatus may send a response message to the smart speaker. The response message may include a configuration (for example, a 2D camera, a 3D camera, or an infrared camera) of the face collection apparatus.

If response messages sent by a plurality of devices configured with face collection apparatuses are received, the smart speaker may select, based on a factor, for example, a sequence of receiving the response messages and configurations of the face collection apparatuses, one of the plurality of devices for collecting the face image. For example, 3D face authentication is more reliable than 2D face authentication. The smart speaker may select a device with a better configuration, for example, a device configured with a 3D camera.

A sequence of receiving the response messages may reflect a communication delay between the smart speaker and the device configured with the face collection apparatus and a response speed of the device. The smart speaker may select a device corresponding to the first received response message. A manner of selecting, by the smart speaker, a nearby device configured with a face collection apparatus is not limited in embodiments of this application.

A device near the smart speaker may be a device that is in a same local area network as the speaker, or may be a device within a preset distance range of the smart speaker. The preset distance may be determined by a longest communication distance that can be reached by using a communication manner in which the smart speaker sends the broadcast signal. A device near the smart speaker is not limited in embodiments of this application.

The smart speaker may send the broadcast signal through a short-range communication channel, for example, a near field communication channel, a Bluetooth communication channel, or a WLAN direct communication channel. For an implementation of sending the broadcast signal by the smart speaker, refer to the conventional technology. This is not limited in embodiments of this application.

For example, the smart speaker may determine, according to the foregoing method for searching for and selecting the nearby device configured with the face collection apparatus, to invoke the face collection device. In subsequent embodiments of this application, an example in which the face collection device is a smart television is used for description. The smart television is configured with a face collection apparatus. The face collection apparatus configured on the smart television may be a 3D camera.

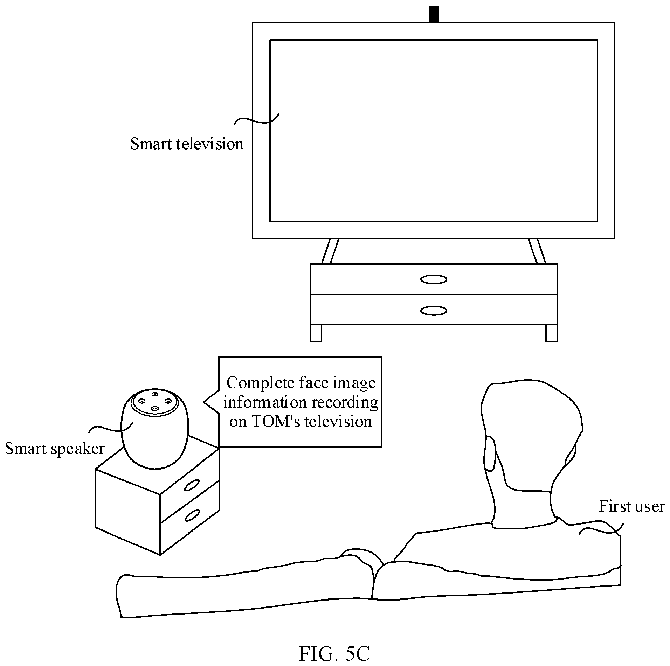

The smart speaker may send, to the smart television, an instruction indicating to enable the face collection apparatus, for example, the camera, to collect face image information. In addition, as shown in FIG. 5C, the smart speaker may broadcast "Complete face image information recording on TOM's television" by voice. In the voice broadcast, "TOM's television" may be a name of the face collection device.

When the smart television receives, from the smart speaker, an instruction indicating to enable the face collection apparatus to collect a face image, the smart television may enable the camera, and send, to the smart speaker, a message indicating that the camera is enabled.

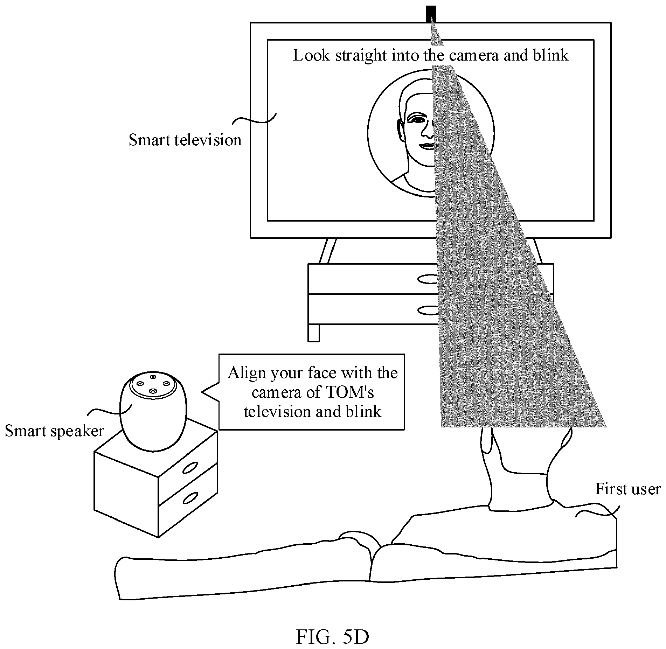

As shown in FIG. 5D, when receiving the foregoing message indicating that the camera is enabled, the smart speaker may broadcast "Align your face with the camera of TOM's television and blink" by voice. In this way, the smart speaker may prompt the first user to input the face image information on the smart television (namely, the television of TOM).

In a possible implementation, the smart television includes a display. When during face image collection, the smart television may further light up the display, to display an image collected by the camera and a text prompt "Look straight into the camera and blink". In this way, the first user may adjust a position of the first user based on the image that is collected by the camera and that is displayed on the display, so that the face of the first user is aligned with the camera.

In another possible implementation, the smart television includes a display, but the display is not lighted up during face image collection. In this case, in a process of collecting the face image by the smart television, the smart speaker may prompt, in the voice broadcast manner, the first user to align the face with the face collection apparatus, for example, broadcast "The face is not aligned with the camera. Please move a little leftward" by voice. In this way, when the display of the smart television is not lighted up, the first user may align the face of the first user with the face collection apparatus based on the speech prompt of the smart speaker.

After obtaining the face image, the smart television may encrypt the face image, and send an encrypted face image to the smart speaker. The smart television can encrypt the face image according to a symmetric encryption algorithm, an asymmetric encryption algorithm, or another encryption method. For a specific implementation process of encryption, refer to the conventional technology. Details are not described herein.

When receiving the encrypted face image, the smart speaker may perform decryption according to an encryption method negotiated with the smart television, to obtain the face image of the first user. Further, the smart speaker may extract face image information from the face image, and store the face image information to the security module as the face image information of the first user. The smart speaker may bind voiceprint information and face image information of a same user. According to the foregoing manner, the smart speaker may collect and store face image information of a plurality of different users (for example, the first user and the second user). After the smart speaker needs to obtain the face image information of the first user, the smart speaker may prompt, in the voice broadcast manner, the first user to input a fingerprint image. Specifically, an operation of collecting and storing the fingerprint image of the first user by the smart speaker is similar to that of collecting and storing the face image information of the first user by the smart speaker. Details are not described in this embodiment of this application. According to the foregoing manner, the smart speaker may collect and store fingerprint image information of a plurality of different users (for example, the first user and the second user).

The smart speaker may bind voiceprint information, face image information, and fingerprint image information of a same user. In this way, the smart speaker may identity an identity of the user based on any one of the voiceprint information, the face image information, and the fingerprint image information.

With reference to the foregoing principle of recording biological information of different users by the central control device, the central control device may record body actions of different users. As shown in Table 1, Table 1 shows an example of a correspondence between an identity of a user, biological information of the user, and a body action of the user.

**Table 1**

| Identity of the user | Biometric information of the user | Body action of the user |
|---|---|---|
| First user | Voiceprint information, face image information, and fingerprint image information of the first user | First hand clapping frequency and first foot stamping frequency |
| Second user | Voiceprint information, face image information, and fingerprint image information of the second user | Second hand clapping frequency and second foot stamping frequency |
| Third user | Voiceprint information, face image information, and fingerprint image information of the third user | Third hand clapping frequency and third foot stamping frequency |

As shown in Table 1, a family includes three members (for example, the first user, the second user, and the third user), and features of the voiceprint information, the face image information, and the fingerprint image information of different users are different. Therefore, the smart speaker may determine an identity of a user based on the voiceprint information, the face image information, and the fingerprint image information that are obtained in real time. For example, the smart speaker may determine, based on the obtained voiceprint information, face image information, and fingerprint image information of the first user, the first hand clapping frequency, and the first foot stamping frequency, that the identity of the user is the first user. The smart speaker may determine, based on the obtained voiceprint information, face image information, and fingerprint image information of the second user, the second hand clapping frequency, and the second foot stamping frequency, that the identity of the user is the second user. The smart speaker may determine, based on the obtained voiceprint information, face image information, and fingerprint image information of the third user, the third hand clapping frequency, and the third foot stamping frequency, that the identity of the user is the third user. The first hand clapping frequency, the second hand clapping frequency, and the third hand clapping frequency are different. The first foot stamping frequency, the second foot stamping frequency, and the third foot stamping frequency are different.

In this embodiment of this application, the central control device may obtain, through matching based on the identity of the user, a smart home linkage solution related to the user. Alternatively, the central control device may not be set, but the public smart home obtains, through matching based on the identity of the user, a smart home linkage solution related to the user. This is not set in this embodiment of this application.

If the central control device obtains, through matching based on the identity of the user, the smart home linkage solution related to the user, the central control device needs to be set before the solution is executed.

In some embodiments, the central control device may be a smart speaker.

There are two manners to set the smart speaker as the central control device. In one manner, the smart speaker is set as the central control device in a speaker app of the smart speaker. In the other manner, the smart speaker is set as the central control device in an app (for example, an AI Life app) that is logged in to by using a home account.

### Manner 1

The smart speaker is set as the central control device in the speaker app of the smart speaker.

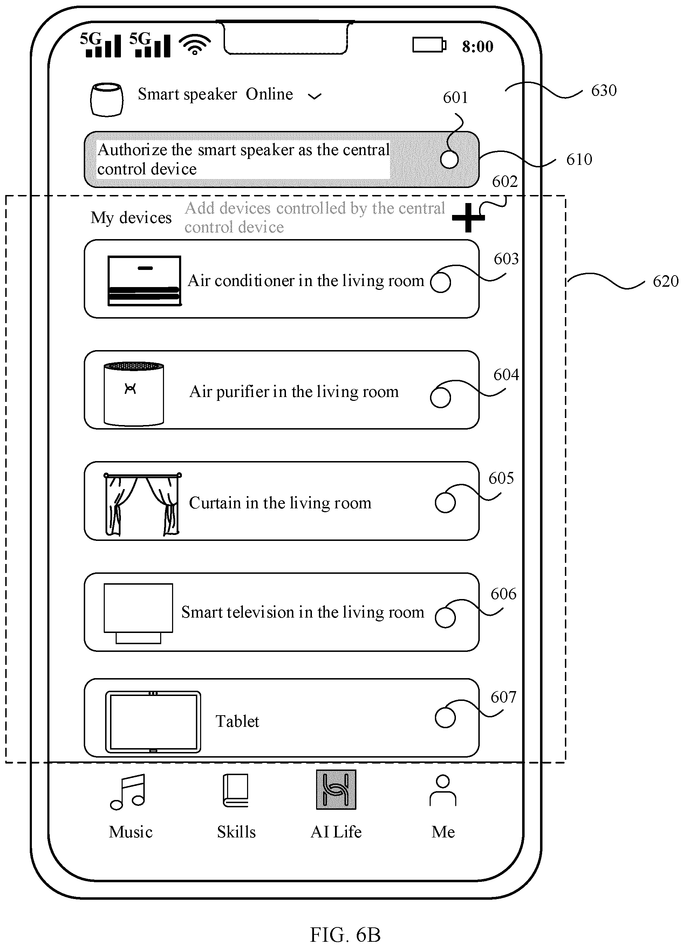

FIG. 6A and FIG. 6B show examples of schematic diagrams of setting the smart speaker as the central control device in the speaker app.

As shown in FIG. 6A, the electronic device 100 (for example, the mobile phone) may display an "AI Life" user interface 60 of the speaker app. The user interface 60 may include a central control device setting area 610 and a device adding area 620.

The electronic device 100 may receive an input operation (for example, a tap operation) of the user on a control 601 in the central control device setting area 610, and in response to the input operation of the user, the electronic device 100 sets the smart speaker as the central control device.

Then, the electronic device 100 may receive an input operation (for example, a tap operation) of the user on a control 602 in the device adding area 620, and the user may add a smart home device that needs to be controlled by the smart speaker.

As shown in FIG. 6A, in response to the tap operation of the user on the control 602, the electronic device 100 displays a user interface 630 shown in FIG. 6B. The user may add, in the user interface 630, the smart home device that needs to be controlled by the smart speaker.

The user interface 630 includes a control 603 for adding an air conditioner in a living room, a control 604 for adding an air purifier in the living room, a control 605 for adding a curtain in the living room, a control 606 for adding a smart television in the living room, a control 607 for adding a tablet, and the like. The user interface 630 may further include a control for adding another smart home device. This is not limited in embodiments of this application.

For example, the electronic device 100 may receive an input operation (for example, a tap operation) on the control 603, and in response to the input operation of the user, the electronic device 100 adds the air conditioner in the living room to devices controlled by the smart speaker. The electronic device 100 may also receive an input operation (for example, a tap operation) on the control 604, and in response to the input operation of the user, the electronic device 100 adds the air purifier in the living room to the devices controlled by the smart speaker.

In this way, by using the foregoing operations, the user may set the smart speaker as the central control device, and add a public smart home device that needs to be controlled by the smart speaker.

### Manner 2

The smart speaker is set as the central control device in the app (for example, the AI Life app) that is logged in to by using the home account.

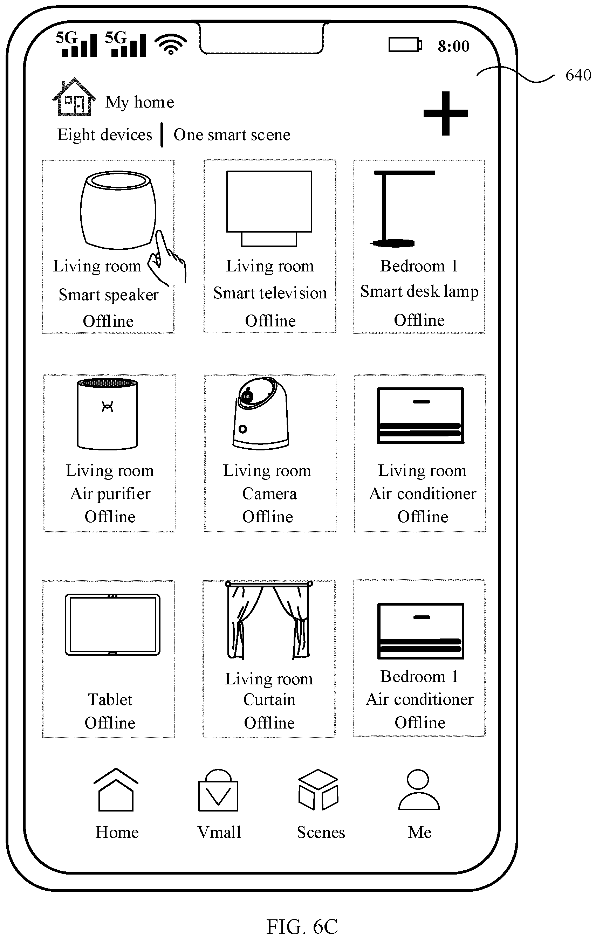

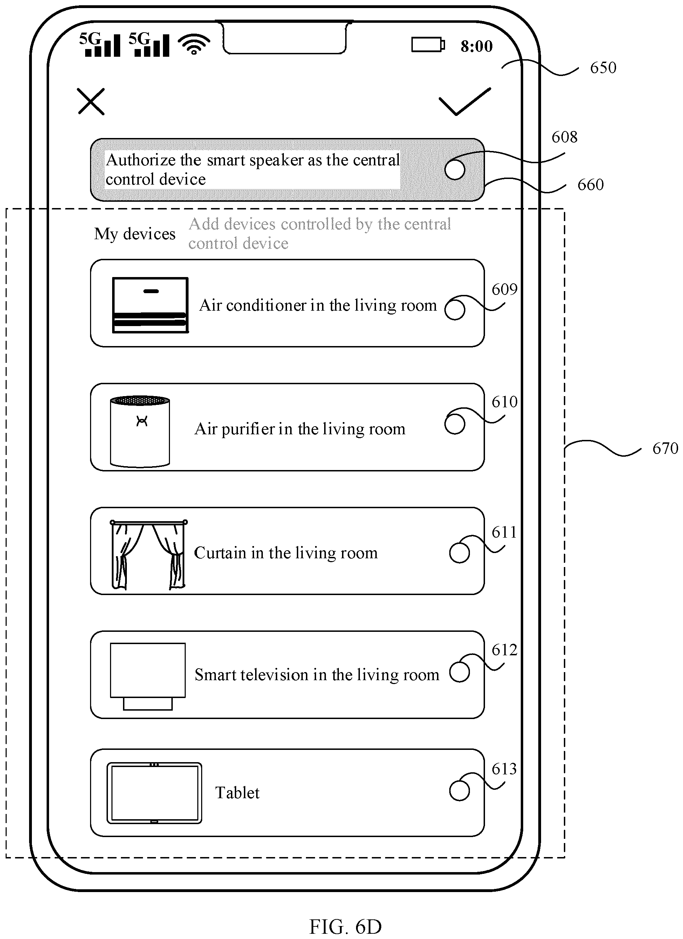

FIG. 6C and FIG. 6D show examples of schematic diagrams of setting the smart speaker as the central control device in the AI Life app.

As shown in FIG. 6C, the electronic device 100 (for example, the mobile phone) may display a user interface 640 of the AI Life app. The user interface 640 may include smart devices associated with a same home account. For example, there may be eight smart devices, for example, the smart speaker in a living room, a smart television in the living room, a smart desk lamp in a bedroom 1, an air purifier in a bedroom, a camera in the living room, an air conditioner in the living room, a tablet, a curtain in the living room, and an air conditioner in the bedroom 1. For example, as shown in the user interface 640, the smart speaker in the living room is in offline, the smart television in the living room is in offline, the smart desk lamp in the bedroom is in offline, the air purifier in the bedroom is in offline, the camera in the living room is in offline, the air conditioner in the living room is in offline, the tablet is in offline, the curtain in the living room is in offline, and the air conditioner in the bedroom 1 is in offline.

As shown in FIG. 6C, the electronic device 100 may receive an input operation on an icon of the smart speaker in the living room, and in response to the input operation, the electronic device 100 displays a user interface 650 shown in FIG. 6D. The user interface 650 includes a central control device setting area 660 and a device adding area 670.

The electronic device 100 may receive an input operation (for example, a tap operation) of the user on a control 608 in the central control device setting area 660, and in response to the input operation of the user, the electronic device 100 sets the smart speaker as the central control device.

Then, the electronic device 100 may receive an input operation (for example, a tap operation) of the user on an add control in the device adding area 670, and the user may add a smart home device that needs to be controlled by the smart speaker.

The device adding area 670 includes a control 609 for adding the air conditioner in the living room, a control 610 for adding the air purifier in the living room, a control 611 for adding the curtain in the living room, a control 612 for adding the smart television in the living room, a control 613 for adding the tablet, and the like. The user interface 670 may further include a control for adding another smart home device. This is not limited in embodiments of this application.

For example, the electronic device 100 may receive an input operation (for example, a tap operation) on the control 609, and in response to the input operation of the user, the electronic device 100 adds the air conditioner in the living room to devices controlled by the smart speaker. The electronic device 100 may also receive an input operation (for example, a tap operation) on the control 610, and in response to the input operation of the user, the electronic device 100 adds the air purifier in the living room to the devices controlled by the smart speaker.

In this way, by using the foregoing operations, the user may set the smart speaker as the central control device, and add a public smart home device that needs to be controlled by the smart speaker. Based on Manner 1 or Manner 2 described above, a family member in the family may log in by using a family account belonging to the family member, and add the central control device and the device controlled by the central control device for each family member of a family account.

As shown in Table 2, Table 2 shows an example of the central control device and the device controlled by the central control device that are added for each family member in the family.

**Table 2**

| Identity of the user | Family account | Central control device | Devices controlled by the central control device |
|---|---|---|---|
| First user | First account | Smart speaker | Air conditioner in the living room, air purifier in the living room, camera in the living room, and smart television in the living room |
| Second user | Second account | Smart speaker | Air conditioner in the living room, air purifier in the living room, camera in the living room, smart television in the living room, air conditioner in the bedroom 1, and smart desk lamp in the bedroom 1 |
| Third user | Third account | Smart speaker | Air conditioner in the living room, air purifier in the living room, camera in the living room, and smart television in the living room |

As shown in Table 2, the first user may log in by using a family account (for example, a first account) of the first user, and set the smart speaker as the central control device. In addition, the devices controlled by the smart speaker may include the air conditioner in the living room, the air purifier in the living room, the camera in the living room, and the smart television in the living room. The second user may log in by using a family account (for example, a second account) of the second user, and set the smart speaker as the central control device. In addition, the devices controlled by the smart speaker may include the air conditioner in the living room, the air purifier in the living room, the camera in the living room, the smart television in the living room, the air conditioner in the bedroom 1, and the smart desk lamp in the bedroom 1. The third user may log in by using a family account (for example, a third account) of the third user, and set the smart speaker as the central control device. In addition, the devices controlled by the smart speaker may include the air conditioner in the living room, the air purifier in the living room, the camera in the living room, and the smart television in the living room.

It should be noted that different family members may set different central control devices. This is not limited in embodiments of this application.

The following describes how to set the smart home linkage solution by the user.

First, an example in which the user sets smart home linkage solutions in different scene modes for the user is described.

The scene modes may include but is not limited to "Go home", "Leave home", "Sleep", "Video watching", "Visitor reception", and the like. For example, a smart home linkage solution in the "Go home" scene mode may be "Turn on the air conditioner in the living room, turn on the air purifier in the living room, and open the curtain in the living room". A smart home linkage solution in the "Leave home" scene mode may be "Turn off the air conditioner in the living room, turn off the air purifier in the living room, close the curtain in the living room, and start a floor sweeping robot to operate". In different scene modes, a public smart home device in the home may operate in different operating modes, that is, an operating mode of the public smart home device changes with a change of the scene mode.

FIG. 7A to FIG. 7P show examples of schematic diagrams of setting smart home linkage solutions in different scene modes.

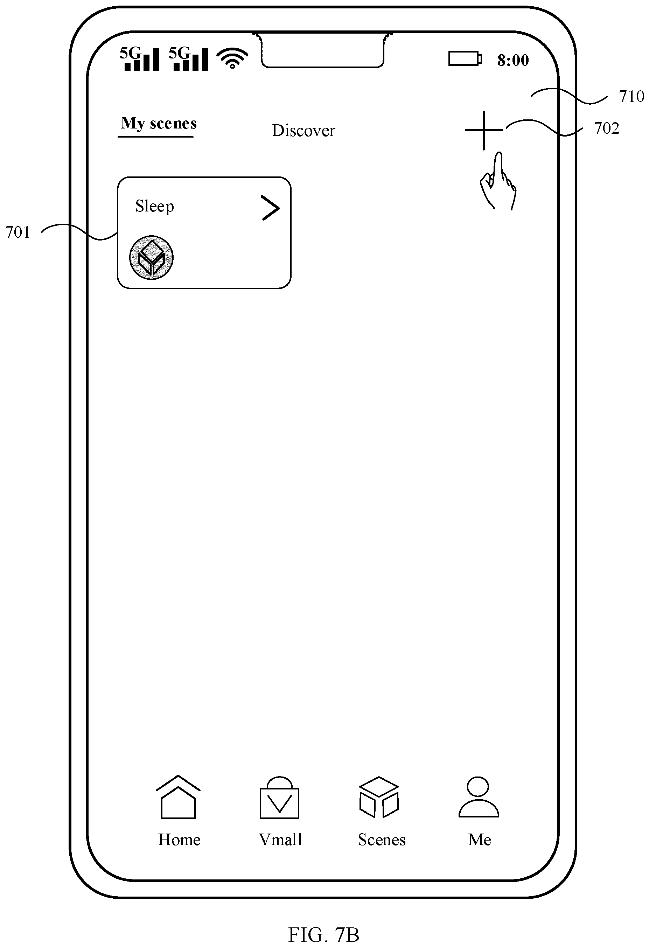

As shown in FIG. 7A, the electronic device 100 receives an input operation (for example, a tap operation) on a "Scenes" icon in the user interface 640, and in response to the input operation of the user, the electronic device 100 displays a "Scenes" setting user interface 710 shown in FIG. 7B.

The user interface 710 may include a scene card 701 created by a user and an add control 702. A key scene on the card 701 is "Sleep". The electronic device 100 may receive an input operation (for example, a tap operation) on the card 701, and in response to the input operation of the user, the electronic device 100 controls a smart home device associated with the "Sleep" scene mode to enter a "Sleep" operating state. The electronic device 100 may also receive an input operation of the user on the add control 702, and in response to the input operation of the user, the electronic device 100 may add another scene mode, and add a card of the another scene mode to the user interface 710.

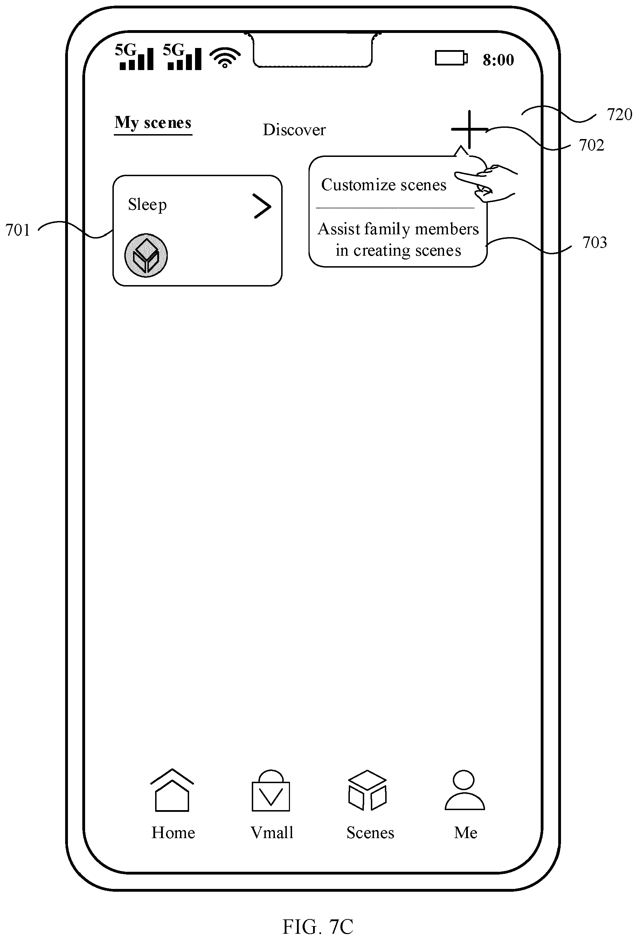

When the user wants to create another scene mode, as shown in FIG. 7B, the electronic device 100 may receive an input operation of the user on the add control 702, and in response to the input operation of the user, the electronic device 100 displays a prompt bar 703 shown in FIG. 7C. The prompt bar 703 is used to prompt the user to choose to create a scene for the user or create a scene for another family member. "Customize scenes" in the prompt bar 703 is to create a scene mode of the user, and "Assist family members in creating scenes" in the prompt bar 703 is to help the another family member create a scene mode.

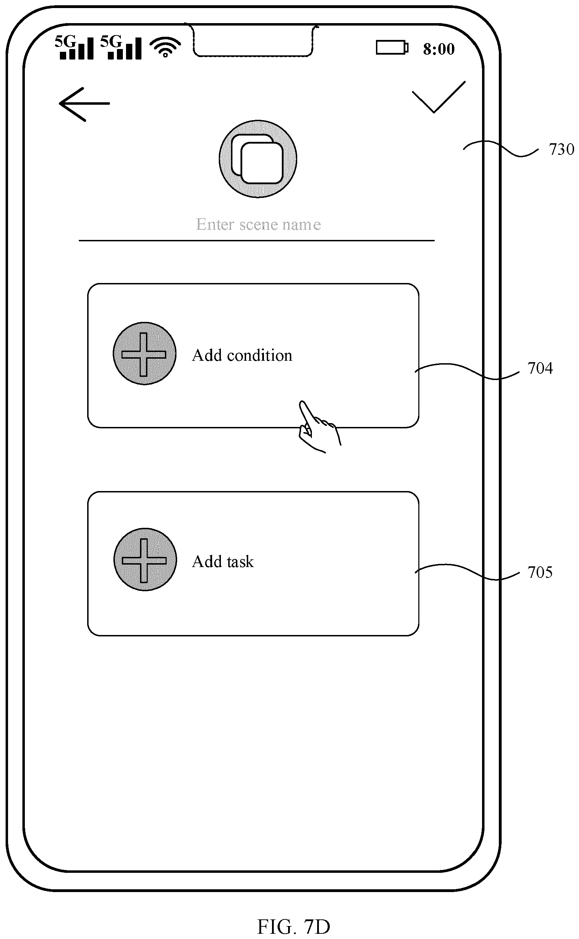

As shown in FIG. 7C, the electronic device 100 may receive an input operation of the user on a "Customize scenes" control, and in response to the input operation of the user, the electronic device 100 displays a user interface 730 shown in FIG. 7D.

The user interface 730 includes a condition add control 704 and a task add control 705. The user interface 730 may further include an input area for adding a name of a scene mode, a return control, a determining control, and the like. The electronic device 100 may receive an input operation of the user on the condition add control 704, and in response to the input operation of the user, the electronic device 100 may receive a user operation for adding a trigger condition of the scene mode. After the user adds the trigger condition of the scene mode, the electronic device 100 may receive an input operation of the user on the task add control 705, and in response to the input operation of the user, the electronic device 100 may receive a user operation for adding one or more smart home devices associated with the scene mode and operating modes of the one or more smart home devices in the scene mode. In this way, according to the foregoing method, the user can add smart home linkage solutions in different scene modes.

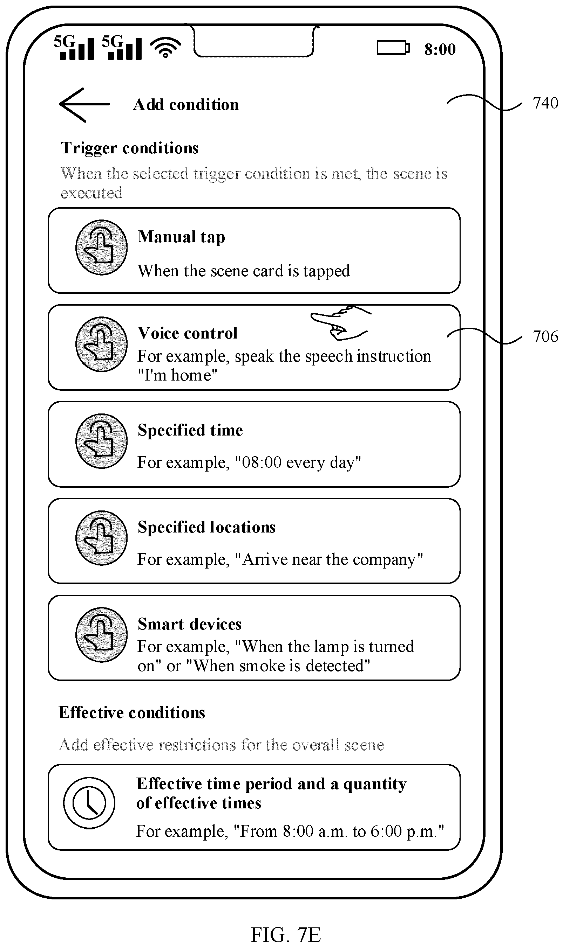

For example, as shown in FIG. 7D, the electronic device 100 may receive an input operation of the user on the condition add control 704, and in response to the input operation of the user, the electronic device 100 displays a user interface 740 shown in FIG. 7E.

The user interface 740 includes one or more condition add controls, for example, a "Manual tap" control, a "Voice control" control 706, a "Specified time" control, a "Specified locations" control, and a "Smart devices" control. The user interface 740 may further include an effective condition of the foregoing trigger condition, for example, an effective time point and a quantity of effective times of the foregoing trigger condition are set.

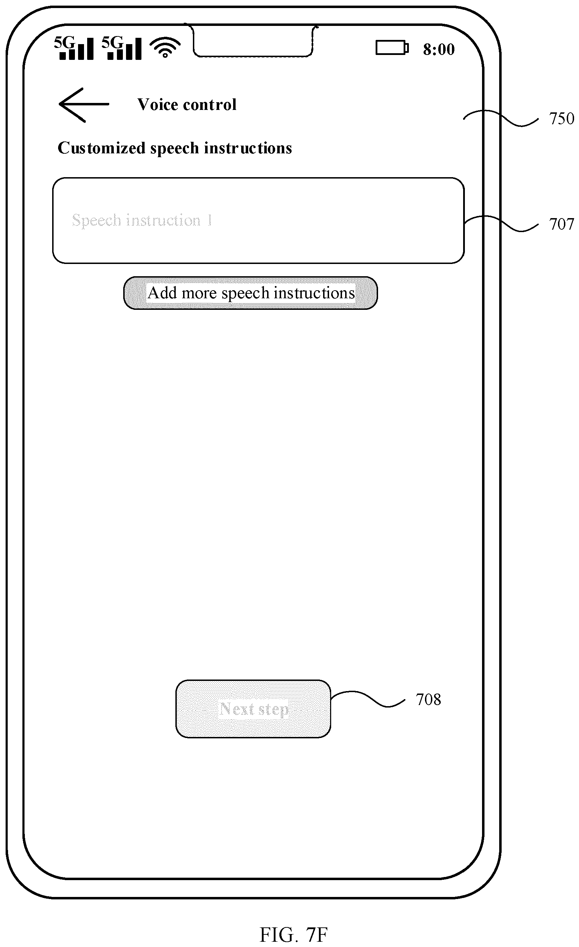

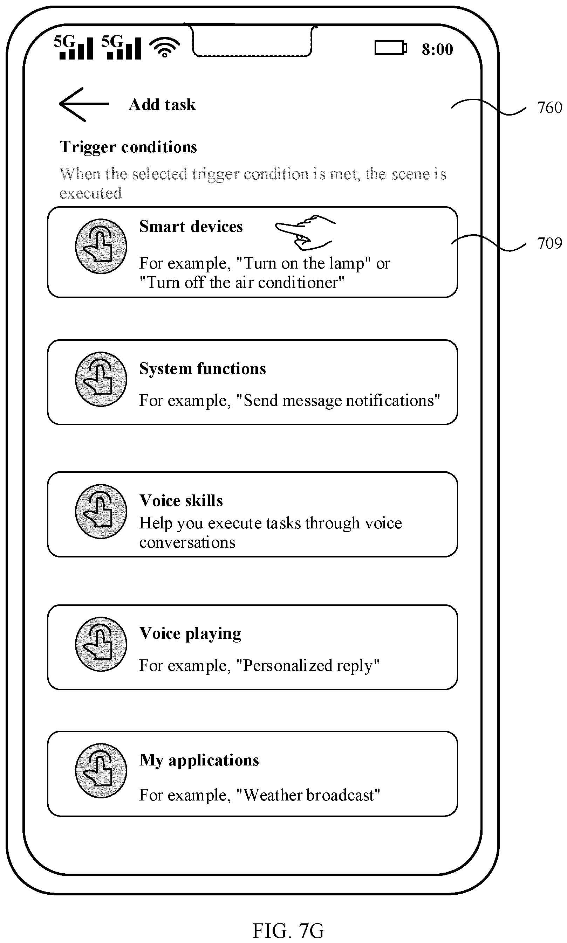

For example, as shown in FIG. 7E, when the user wants to add voice control as a trigger condition, the electronic device 100 may receive an input operation of the user on the "Voice control" control 706, and in response to the input operation of the user, the electronic device 100 displays a user interface 750 shown in FIG. 7F. The user may input a speech instruction in the user interface 750. For example, the user inputs a speech instruction "Hey Celia, I'm home" in a speech instruction input area 707 in the user interface 750. Then, the electronic device 100 receives an input operation on a control 708, and the electronic device 100 enters a user interface for adding a task, for example, displays a user interface 760 shown in FIG. 7G.

The user interface 760 includes one or more task add controls, for example, a "Smart devices" control 709, a "System functions" control 706, a "Voice skills" control, a "Voice playing" control, and a "My applications" control. The electronic device 100 may receive an input operation on the "Smart devices" control 709 for setting a public smart home device that needs to be controlled.

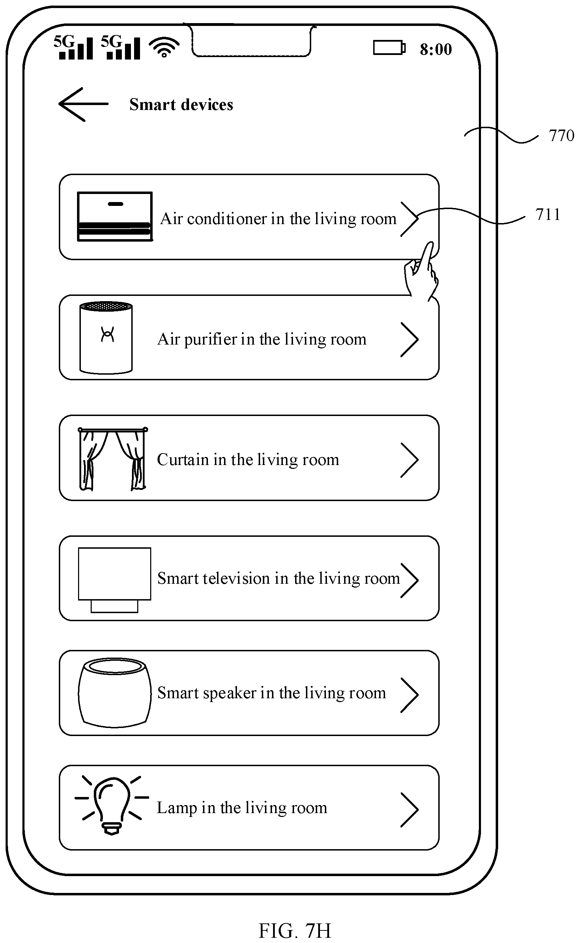

For example, as shown in FIG. 7G, the electronic device 100 may receive an input operation of the user on the "Smart devices" control 709, and in response to the input operation of the user, the electronic device 100 displays a user interface 770 shown in FIG. 7H. The public smart home devices in the home are displayed in the user interface 770. For example, the public smart home devices included in the user interface 770 include the air conditioner in the living room, the air purifier in the living room, the curtain in the living room, the smart television in the living room, the smart speaker in the living room, and a lamp in the living room. Further, more other smart home devices may be included, and are not shown in FIG. 7H. The user may set the one or more smart home devices to enable corresponding operating modes. When a trigger condition is met, the smart home device is in a corresponding operating mode.

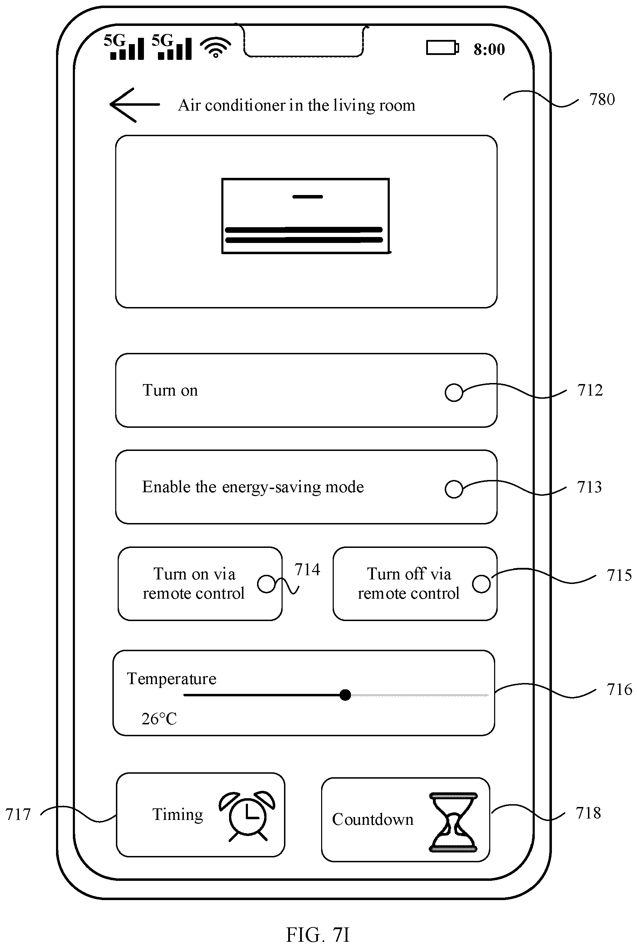

For example, when the user adds the air conditioner in the living room as a smart home device associated with the scene mode, as shown in FIG. 7H, the electronic device 100 may receive an input operation of the user on a control 711, and in response to the input operation of the user, the electronic device 100 displays a user interface 780 shown in FIG. 7I for setting the air conditioner in the living room. The user interface 780 may include a turn-on control 712, an energy-saving mode enabling control 713, a remote control turn-on control 714, a remote control turn-off control 715, a temperature adjustment area 716, a timing control 717, and a countdown control 718.

The user may set an operating mode of the air conditioner in the living room in the user interface 780, for example, set a condition for turning on the air conditioner in the living room (turning on through remote control or turning on not through remote control), set a temperature at which the air conditioner in the living room is turned on, and set a time point for turning on the air conditioner in the living room.

For example, the electronic device 100 may receive an input operation of the user on the turn-on control 712, and then, after the central control device recognizes the speech instruction, the central control device controls the air conditioner in the living room to be turned on.

For example, the electronic device 100 may receive an input operation of the user on the enable control 713, and then, after the central control device recognizes the speech instruction, the central control device controls the air conditioner in the living room to enable an energy-saving mode. The energy-saving mode may be understood as that the air conditioner in the living room may intelligently adjust the temperature of the air conditioner based on a current temperature, or the air conditioner in the living room may intelligently adjust, based on a current temperature, the time point for turning on the air conditioner, and when the temperature is appropriate, the central control device may prompt the user whether to turn off the air conditioner, or the like, to implement energy saving.

For example, the electronic device 100 may receive an input operation of the user on the enable control 714, and then, after the central control device recognizes the speech instruction, the central control device does not control the air conditioner in the living room to be turned on. Only the user can control, by operating a remote control of the air conditioner, the air conditioner in the living room to be turned on or turned off. The electronic device 100 may receive an input operation (for example, a tap operation) of the user on the enable control 715, and then, after the central control device recognizes the speech instruction, the central control device controls the air conditioner in the living room to enable the energy-saving mode.

For example, the electronic device 100 may receive an input operation of the user on the temperature adjustment area 716 for adjusting the temperature at which the air conditioner is turned on. When the central control device recognizes the speech instruction, the central control device may control the air conditioner in the living room to be turned on, and the temperature of the air conditioner is 26°C.

For example, the electronic device 100 may receive an input operation of the user on the timing control 717, and the electronic device 100 may be set to turn on the air conditioner in the living room after a specific time period. For example, when the central control device recognizes the speech instruction, the central control device may control the air conditioner in the living room to be turned on after 5 minutes or 10 minutes. The time period may be customized by the user.

For example, the electronic device 100 may receive an input operation of the user on the timing control 718, and the electronic device 100 may be set to automatically turn off the air conditioner after the air conditioner in the living room is turned on for a specific For example, when the central control device recognizes the speech instruction, the central control device may control the air conditioner in the living room to be automatically turned off after 3 hours or 4 minutes. The time period may be customized by the user.

Optionally, when the user sets the operating mode of the smart home device, and the user sets parameter information (such as a temperature, time, brightness, and volume) of the smart home device, if a value of the parameter information is not within a specified range, the electronic device 100 may display prompt information. The prompt information is used to prompt the user whether the parameter information needs to be readjusted to enable the value of the parameter information to be within the specified range. In this way, unnecessary energy consumption caused by an inappropriate setting can be avoided.

For example, when the user adds the air conditioner in the living room as a smart home device associated with the scene mode, and sets the operating mode of the air conditioner in the living room, if a specified temperature of the air conditioner in the living room is not within a specified range, the electronic device 100 provides prompt information. The prompt information is used to prompt the user whether to reset the temperature because the temperature is set inappropriately. As shown in FIG. 7J, the electronic device 100 receives a user operation for adjusting the temperature of the air conditioner in the living room to 22°C. Because 22°C is lower than a current preset temperature interval, the current preset temperature interval may range from 24°C to 26°C. The electronic device 100 displays prompt information 7901 shown in FIG. 7J. Content in the prompt information 7901 may be "The temperature currently set is low. You are advised to adjust the temperature to 24°C to 26°C to reduce energy consumption. Do you want to readjust the temperature?" The prompt information 7901 is used to prompt the user that the temperature of the air conditioner in the living room is set inappropriately and whether to readjust the temperature. The electronic device 100 may receive an input operation (for example, a tap operation) of the user on a control 7902. In this case, the user agrees to readjust the temperature of the air conditioner in the living room. The electronic device 100 may alternatively receive an input operation (for example, a tap operation) of the user on a control 7903. In this case, the user does not agree to readjust the temperature of the air conditioner in the living room, that is, the user still sets the temperature of the air conditioner to 22°C. In this way, the electronic device 100 may prompt the user that an inappropriate temperature setting causes an increase in energy consumption, and adjusting the temperature to an appropriate temperature can reduce energy consumption. Optionally, when an operating parameter meets a preset condition, the smart home device in the home may automatically switch from an operating mode 1 to an operating mode 2. The preset condition may be operating time, a preset moment, a temperature, humidity, or the like. In this way, the smart home device in the home can implement operating mode switching without being actively triggered by the user. An operation is simple, and energy consumption is reduced.

For example, when a temperature at which the air conditioner in the bedroom 1 is turned on before the user goes to sleep is 26°C, after a period of time, the preset time (for example, 10:00 p.m.) arrives, the air conditioner in the living room enables a sleep mode, that is, automatically switches from a normal mode to the sleep mode. In this way, energy consumption can be reduced.

For example, when the temperature at which the air conditioner in the bedroom 1 is turned on before the user goes to sleep is 26°C, after a period of time, when a room temperature is close to 26°C, the air conditioner in the bedroom 1 enables an energy-saving mode, and the air conditioner in the bedroom 1 automatically increases the specified temperature by 1°C after a specific time period. Because an outdoor temperature has also decreased at night, the room temperature does not increase too fast. The air conditioner in the bedroom 1 is switched from the normal mode to the energy-saving mode. In this way, energy consumption can be reduced. When the air conditioner in the bedroom 1 detects that the room temperature remains below 30°C and does not increase anymore, or current time has exceeded the preset time (for example, 02:00 a.m.), the air conditioner in the bedroom 1 is automatically turned off. In this case, the person is already asleep, and the temperature is appropriate. The air conditioner in the bedroom 1 is automatically turned off, to reduce energy consumption.

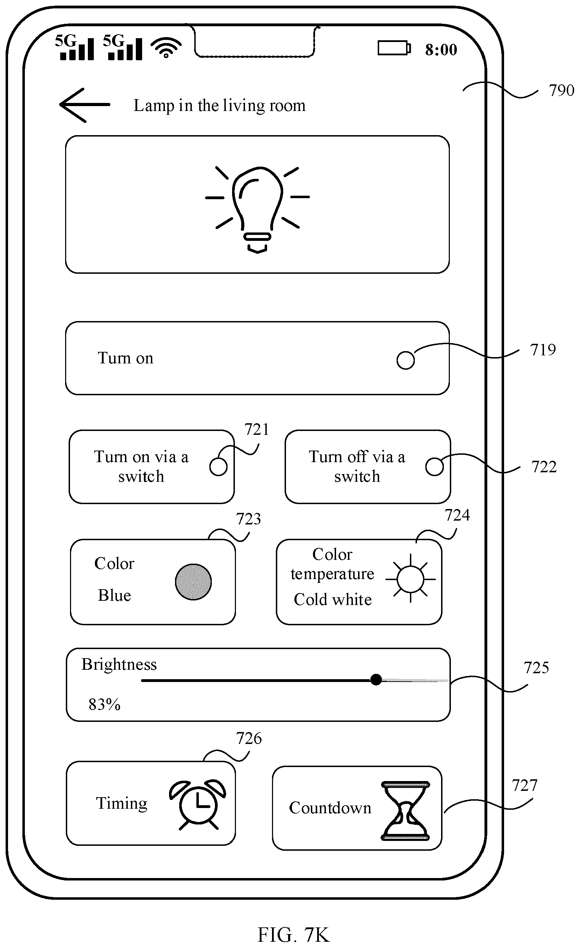

For example, when the user adds the lamp in the living room as a smart home device associated with the scene mode, the electronic device 100 may receive an input operation of the user on a control of the lamp in the living room, and in response to the input operation of the user, the electronic device 100 displays a user interface 790 shown in FIG. 7K for setting the lamp in the living room. The user interface 790 may include a turn-on control 719, a switch turn-on control 721, a switch turn-off control 722, a color adjustment control 723, a color temperature adjustment control 724, a brightness adjustment area 725, a timing control 726, and a countdown control 727. The user may set an operating mode of the lamp in the living room in the user interface 790, for example, set a condition for turning on the lamp in the living room (turning on via a switch or turning on not via a switch), set a color (blue, yellow, or green), a color temperature (cold white, warm white, or positive white), and brightness of the lamp in the living room, and set a time point for turning on the lamp in the living room. Setting an operating mode of the lamp in the living room is similar to setting the operating mode of the air conditioner in the living room. Details are not described in this embodiment of this application.

The user may further add and set operating modes of more other smart home devices. Details are not described in this embodiment of this application.

Optionally, a smart home device in the home may be bound to a home area, and permission for different family members to use bound smart home devices in different home areas may be set. For example, all family members may have permission to use a smart home device bound to a living room area. For use permission of a smart home device bound to the bedroom, only some family members have permission to use the smart home device bound to the bedroom, and other family members do not have permission to use the smart home device bound to the bedroom. In this way, use permission of a smart home device bound to each room area may correspond to the identity of the user, and other family members may be prevented from randomly adjusting parameter information of the smart home device bound to the room area. This improves association between the identity of the user and use permission of the smart home device bound to the home area.

As shown in Table 3, Table 3 shows an example of association between a user identity and use permission of a bound smart home device to a home area.

**Table 3**

| Identity of the user | Home area bound to the identity of the user | Smart home device |
|---|---|---|
| First user | Living room and bedroom 1 | Air conditioner in the living room, air purifier in the living room, curtain in the living room, smart television in the living room, electric lamp in the living room, and air conditioner in the bedroom 1 |
| Second user | Living room, kitchen, and bedroom 1 | Air conditioner in the living room, air purifier in the living room, curtain in the living room, smart television in the living room, electric lamp in the living room, microwave oven in the kitchen, and air conditioner in the bedroom 1 |
| Third user | Living room and bedroom 2 | Air conditioner in the living room, air purifier in the living room, curtain in the living room, smart television in the living room, electric lamp in the living room, and air conditioner in the bedroom 2 |

As shown in Table 3, the first user has permission to use the smart home devices bound to a living room area and a bedroom 1 area. The smart home devices include the air conditioner in the living room, the air purifier in the living room, the curtain in the living room, the smart television in the living room, the lamp in the living room, and the air conditioner in the bedroom 1. The second user has permission to use the smart home device bound to the living room area, the kitchen area, and the bedroom 1 area. The smart home devices include the air conditioner in the living room, the air purifier in the living room, the curtain in the living room, the smart television in the living room, the lamp in the living room, the microwave oven in the kitchen, and the air conditioner in the bedroom 1. The third user has permission to use the smart home devices bound to a living room area and a bedroom 2 area. The smart home devices include the air conditioner in the living room, the air purifier in the living room, the curtain in the living room, the smart television in the living room, the lamp in the living room, and the air conditioner in the bedroom 2.

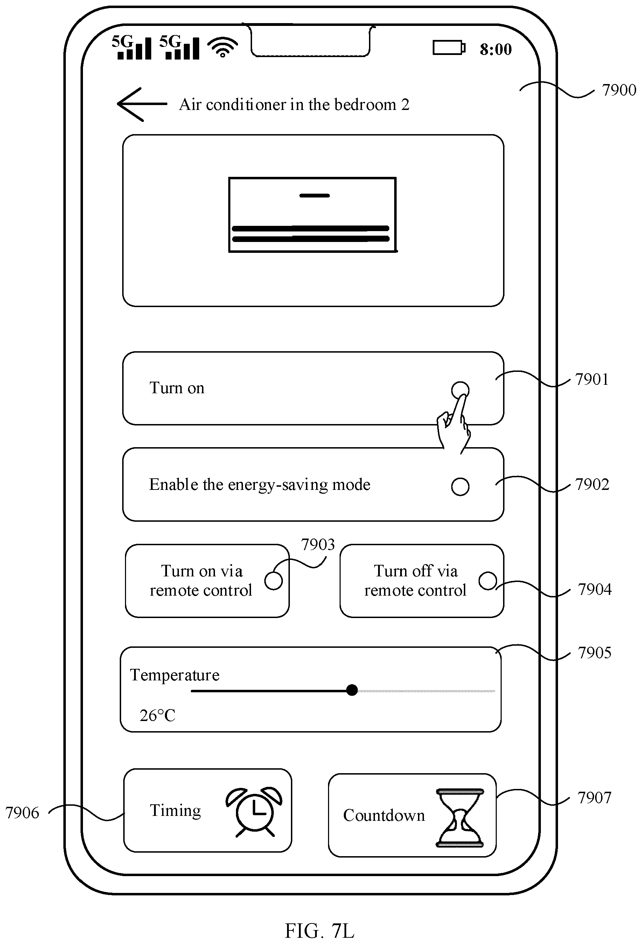

For example, FIG. 7L shows an example of a user interface 7900 for setting the air conditioner in the bedroom 2 by the first user. The user interface 7900 may include a turn-on control 7901, an energy-saving mode enabling control 7902, a remote control turn-on control 7903, a remote control turn-off control 7904, a temperature adjustment area 7905, a timing control 7906, and a countdown control 7907.

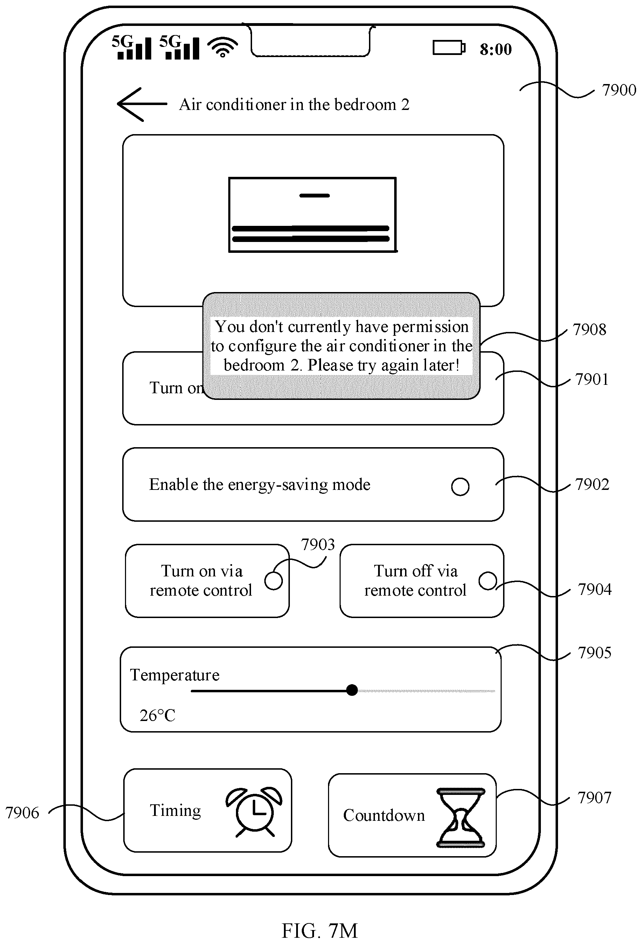

When the first user needs to add the air conditioner in the bedroom 2 to a scene mode (for example, "Go home") created by the first user, as shown in FIG. 7L, when the user taps the turn-on control 7901, because the first user does not have permission to use the air conditioner in the bedroom 2, the electronic device 100 displays prompt information 7908 shown in FIG. 7M. The prompt information 7908 may be "You don't currently have permission to configure the air conditioner in the bedroom 2. Please try again later!". The prompt information 7908 is used to prompt the first user that the first user does not have permission to use the air conditioner in the bedroom 2, and the first user cannot add the air conditioner in the bedroom 2 to the scene mode (for example, "Go home") created by the first user.

The foregoing embodiment describes a case in which the user may create an application scene, add a condition and an executed task, and the like. In another embodiment, one or more recommended scenes may be set in the AI Life application. Trigger conditions and to-be-executed tasks in the one or more recommended scenes have been set, and the user does not need to manually create an application scene, and add a condition and a to-be-executed task. This reduces user operations.

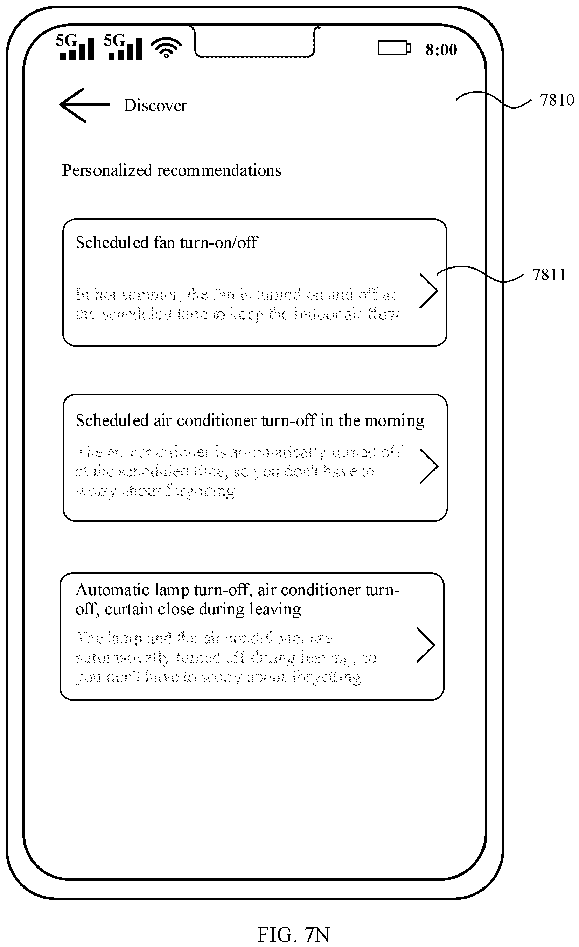

FIG. 7N is a schematic diagram of an example of a recommended scene displayed by the electronic device 100.

FIG. 7N shows an example of a user interface 7810 in the recommended scene. In the user interface 7810, examples of several recommended scenes are shown, including a "Scheduled fan turn-on/off" scene, a "Scheduled air conditioner turn-off in the morning" scene, and an "Automatic lamp turn-off, air conditioner turn-off, curtain close during leaving" scene. In another embodiment, more different types of recommended scenes may be further included. This is not limited in embodiments of this application.

The electronic device 100 may receive an input operation of the user on a control 7811 of the "Scheduled fan turn-on/off" scene, and in response to the input operation of the user, the electronic device 100 may display a user interface for setting the "Scheduled fan turn-on/off" scene. The electronic device 100 may receive a time point for automatically turning off the fan, an automatic turn-off manner, and the like that are set by the user in the user interface for setting the "Scheduled fan turn-on/off" scene. Details are not described in this embodiment of this application. Similarly, the electronic device 100 may also receive a user operation for setting a time point for automatically turning off the air conditioner, an automatic turn off manner, and the like in a user interface for setting the "Scheduled air conditioner turn-on/off in the morning" scene. Details are not described in this embodiment of this application.

Similarly, the electronic device 100 may also receive a user operation for setting a time point for automatically turning off the lamp and the air conditioner and closing the curtain, an automatic turn-off/close manner, and the like in a user interface for setting the "Automatic lamp turn-off, air conditioner turn-off, and curtain close during leaving" scene. Details are not described in this embodiment of this application.

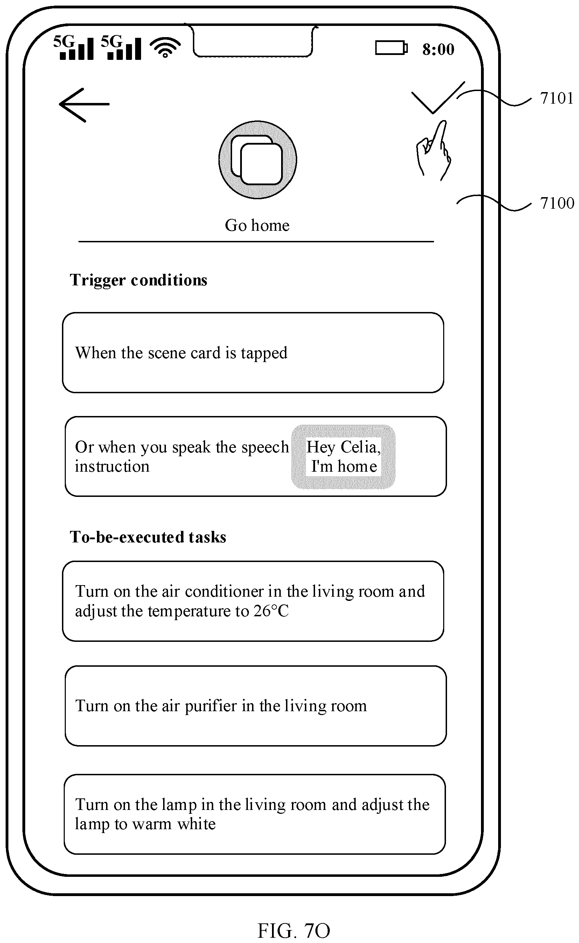

For example, after the user sets the trigger condition and the to-be-executed task in the scene mode, the electronic device 100 displays a user interface 7100 shown in FIG. 7O. The user interface 7100 may include a name (for example, "Go home") of the scene mode created by the user, and the trigger condition may include "When the scene card is tapped" or "Speak the speech instruction "Hey Celia, I'm home". When the trigger condition is met, the to-be-executed task may include "Turn on the air conditioner in the living room and adjust the temperature to 26°C", "Turn on the air purifier in the living room", and "Turn on the lamp in the living room and adjust the lamp to warm white".

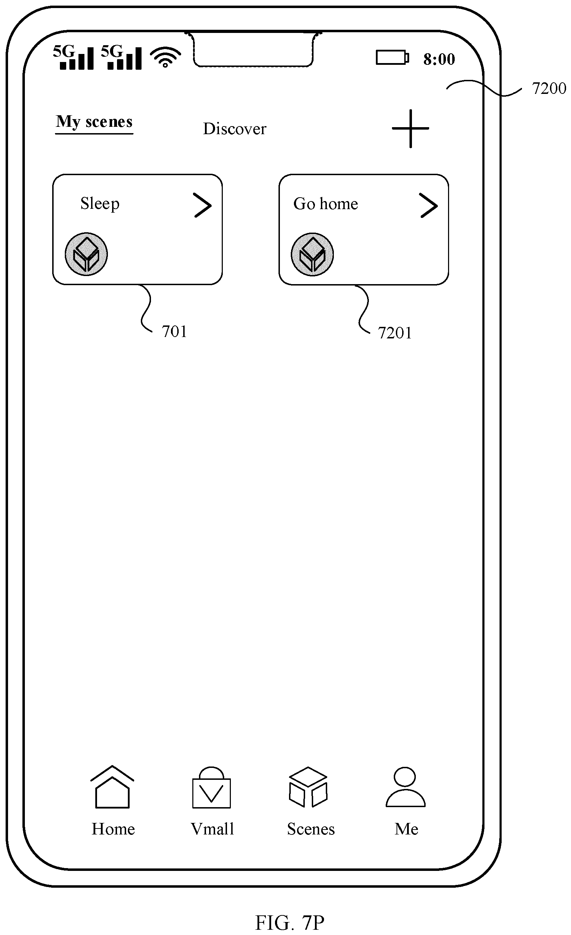

As shown in FIG. 7O, a determining control 7101 may receive an input operation (for example, a tap operation) of the user, and the electronic device 100 stores the smart home linkage solution in the "Go home" mode. Then, the electronic device 100 displays a user interface 7200 shown in FIG. 7P.

The user interface 7200 includes the card 701 of the created scene (for example, "Sleep"), and the user interface 7200 further includes a card 7201 of a newly created scene (for example, "Go home"). The foregoing embodiment describes how the user sets the smart home linkage solutions in different scene modes for the user. The user may alternatively set smart home linkage solutions for other family members in different scene modes. In this way, when some family members (for example, an older parent or a younger child) are not familiar with a process of setting a smart home linkage solution, a family member who is familiar with an operation process may help set smart home linkage solutions in different scene modes.

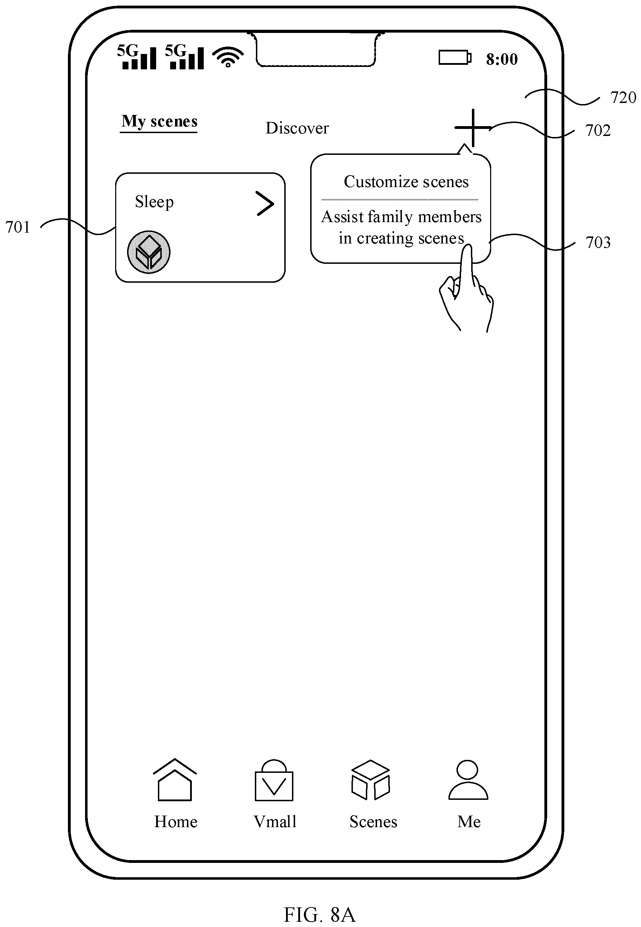

FIG. 8A to FIG. 8J show examples of schematic diagrams of helping, by a first user, a second user set smart home linkage solutions in different scene modes.

It may be understood that the public smart home device in the home is added to the home accounts of the first user and the second user. In this way, the first user may help the second user set the smart home linkage solutions in different scene modes.

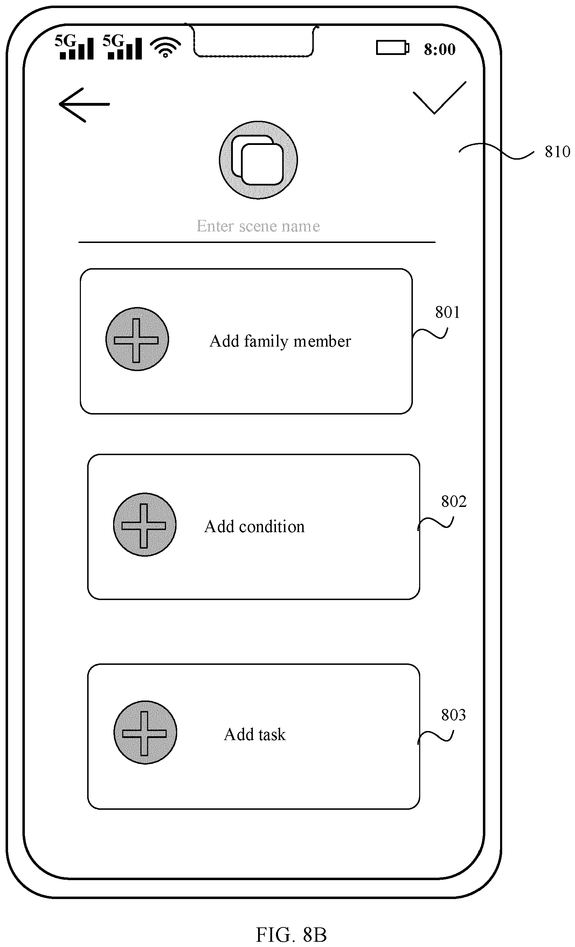

When the user wants to help another family member (for example, the second user) create a smart home linkage solution, as shown in FIG. 8A, the electronic device 100 may receive an input operation of the user on the "Assist family members in creating scenes" control in the prompt bar 703, and in response to the input operation of the user, the electronic device 100 displays a user interface 810 shown in FIG. 8B.

The user interface 810 includes a family member add control 801, a condition add control 802, and a task add control 803. The user interface 730 may further include an input area for adding a name of a scene mode, a return control, a determining control, and the like.

The electronic device 100 may receive an input operation of the user on the family member add control 801, and then the user may enter a family account of the family member that the user wants to help, or another account (for example, a mobile number or WeChat) bound to the family account. The electronic device 100 may also receive an input operation of the user on the condition add control 802 for adding a trigger condition in the scene mode for the second user. For details, refer to the related descriptions in FIG. 7E to FIG. 7F. Details are not described in this embodiment of this application again.

After the trigger condition is added, the electronic device 100 may also receive a user operation for adding an executed task in the scene mode for the second user. For details, refer to the related descriptions in FIG. 7G to FIG. 7J. Details are not described in this embodiment of this application again.

Optionally, when the first user adds a smart home device for the second user, if the second user does not meet a use condition of the smart home device, the electronic device 100 outputs a prompt, and the prompt is used to prompt the first user be prohibited from forbid adding the smart home device for the second user. In this way, it can be ensured that the user uses some dangerous smart home devices within a safe range. This improves rationality and security of using some dangerous smart home devices.

The dangerous smart home devices include but are not limited to the microwave oven in the kitchen, a smart socket, and the like. The user may set a dangerous smart home device to be used only by some family members, or to be used when a specific condition is met. When the second user is a child or an elderly person, use permission of the dangerous smart home device is not allowed to be configured for this type of people.

For example, FIG. 8C is a schematic diagram of an example in which the first user sets an operating mode of the microwave oven in the kitchen for the second user.

A user interface 820 shown in FIG. 8C may include a turn-on control 8201, an energy-saving mode enabling control, a switch turn-on control, a switch turn-off control, a temperature adjustment area, a timing control, and a countdown control. The user may set an operating mode of the microwave oven in the kitchen in the user interface 820, for example, set a condition for turning on the microwave oven in the kitchen (turning on via a switch or turning on not via a switch), set a temperature at which the microwave oven in the kitchen is turned on, and set a time point for turning on the microwave oven in the kitchen.

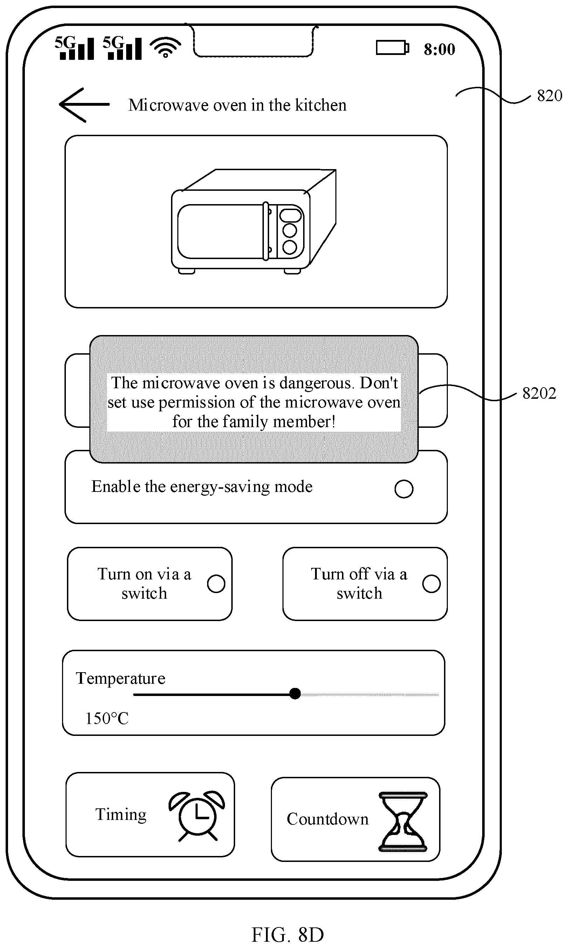

For example, when the user taps the turn-on control 8201, that is, the first user configures use permission of the microwave oven in the kitchen in the scene mode for the second user, but if the second user does not have use permission of the microwave oven in the kitchen, or the age of the second user does not meet an age specified by the microwave oven in the kitchen during use, the electronic device 100 displays a prompt bar 8202 shown in FIG. 8D. Prompt content of the prompt bar 8202 may be "The microwave oven is dangerous. Don't set use permission of the microwave oven for the family member!". The prompt content in the prompt bar 8202 is used to prompt the first user that the second user does not have use permission of the microwave oven in the kitchen. In other words, the prompt content in the prompt bar 8202 is used to prompt the first user that the first user cannot set use permission of the microwave oven in the kitchen for the second user. Optionally, when the first user adds a smart home device for the second user, the first user may set, for the second user, some specific smart home devices to display, in a fixed time period, content set by the first user. In this way, after detecting that the second user goes home, the specific smart home device may automatically display the content set by the first user. This improves user experience. For example, on the birthday of the second user, the first user may set a large screen device (for example, the smart television) in the home to display a picture of "Happy Birthday" on a display after the user goes home, and play a song of "Happy Birthday".

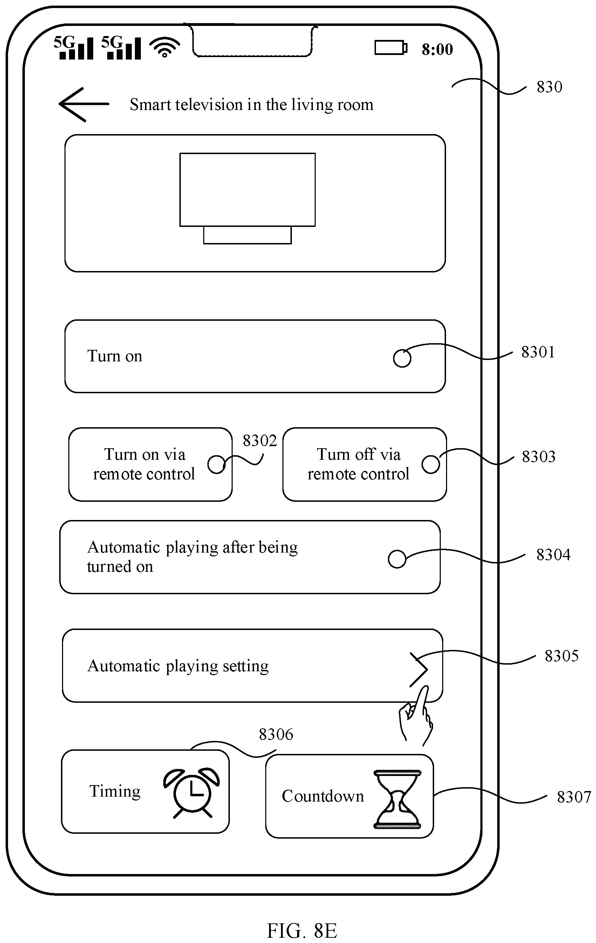

FIG. 8E to FIG. 8G show examples of schematic diagrams of setting an operating mode of the large screen device for the second user by the first user.

FIG. 8E shows an example of a user interface 830 for setting the operating mode of the large screen device (for example, the smart television).

The user interface 830 may include a turn-on control 8301, a remote control turn-on control 8302, a remote control turn-off control 8303, an automatic playing enabling control 8304, an automatic playing setting control 8305, a timing control 8306, and a countdown control 8307. The user may set the operating mode of the smart television in the living room in the user interface 830, for example, a condition for turning on and off the smart television in the living room (turning on via remote control or turning off via remote control), set a condition for turning on the smart television in the living room (automatic playing after being turned on), set content automatically played by the smart television in the living room, and set a time point for turning on the smart television in the living room. Setting the operating mode of the smart television in the living room is similar to setting the operating mode of the air conditioner in the living room. Details are not described in this embodiment of this application.

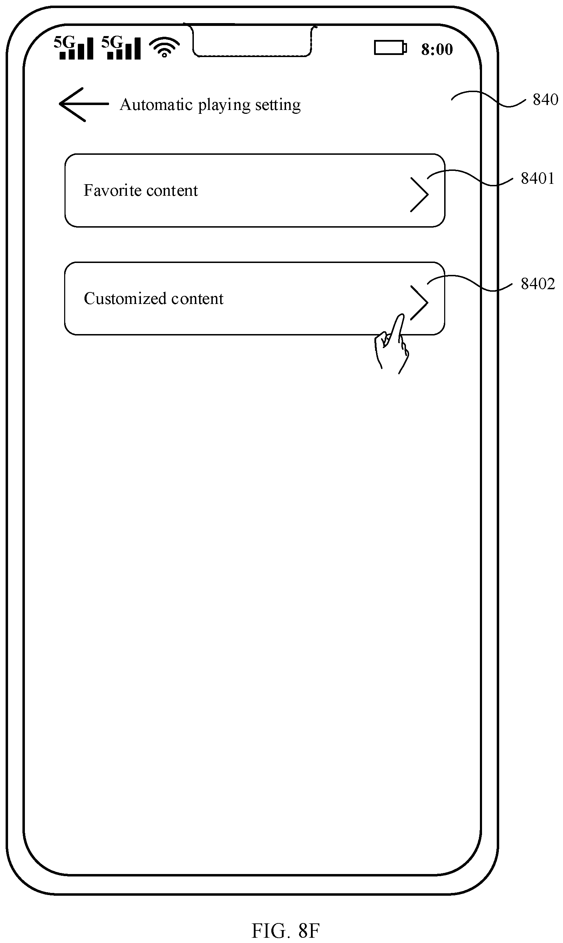

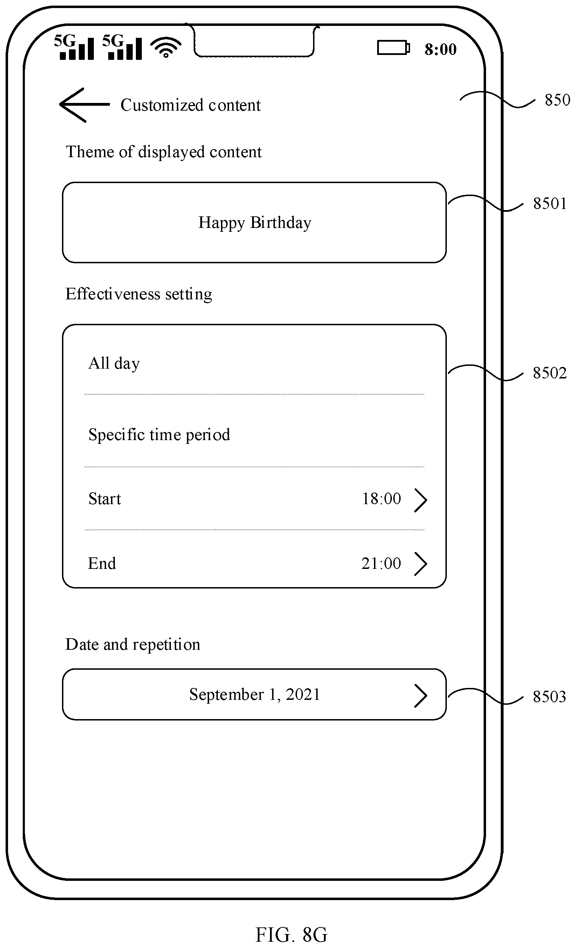

For example, as shown in FIG. 8E, the electronic device 100 may receive an input operation (for example, a tap operation) of the user on the automatic playing setting control 8305, and in response to the input operation of the user, the electronic device 100 may display a user interface 840 shown in FIG. 8F. The user may set, in the user interface 840, content played by the smart television in the living room during automatic playing. The user interface 840 may include a favorite content setting control 8401 and a customized content setting control 8402. The electronic device 100 may receive an input operation of the user on the favorite content setting control 8401 for setting the smart television in the living room to automatically play the favorite content of the user after the smart television is turned on. The electronic device 100 may also receive an input operation of the user on the customized content setting control 8402 for setting the smart television in the living room to automatically play content preselected by the user after the smart television is turned on. For example, in response to the input operation of the user on the customized content setting control 8402, the electronic device 100 displays a user interface 850 shown in FIG. 8G. The user may set, in the user interface 850, content that the user wants to play after the smart television is turned on. The user interface 850 may include a theme setting area 8501, an effective setting area 8502, and a date and repetition setting area 8503. The electronic device 100 may receive an input operation of the user on the theme setting area 8501. The user may set a theme of content played by the smart television in the living room during automatic playing, for example, the theme may be "Happy Birthday (Happy Birthday)". The electronic device 100 may receive an input operation of the user on the effective setting area 8502. The user may set a play time period of the content that is played by the smart television in the living room during automatic playing. The time period may be all day or in a specific time period (for example, between 18:00 and 21 :00). The electronic device 100 may receive an input operation of the user on the date and repetition setting area 8503, and the user may set a date of the content played by the smart television in the living room during automatic playing. The date may be a specific day (for example, September 1, 2021) or several consecutive days (for example, September 2, 2021 to September 5, 2021).

According to the foregoing descriptions, the electronic device 100 may receive an operation of the first user for setting the smart television in the living room to display, on a specific date and in a specific time period, the theme content set by the user. On the specific date and in the specific time period, after the second user goes home, the smart television in the living room may automatically play the theme content set by the first user. For example, between 18:00 p.m. to 21:00 p.m. on September 1, 2021, after detecting that the second user goes home, the smart television in the living room automatically displays the picture of "Happy Birthday" on the display, and/or plays the song of "Happy Birthday". This improves user experience.

Optionally, the first user may further set another smart home device in the home to display, on the specific date and in the specific time period, the theme content set by the first user. For example, after detecting that the second user goes home, the smart television in the living room automatically displays the picture of "Happy Birthday" on the display, and/or when the picture and the song of "Happy Birthday" are played, the lamp in the living room may be turned on and the color is adjusted to blue, and the curtain in the living room is closed. In this way, even if the first user is not at home, after detecting that the second user goes home, the smart home device may automatically create good atmosphere. This improves user experience.

Optionally, after a specific time period (for example, 3 minutes) after the second user goes home, the lamp in the living room is adjusted to warm white, and the curtain of the living room is opened. The smart television in the living room may stop displaying the theme content set by the first user. In this case, the smart home device may also be automatically turned off, to save energy consumption.

The foregoing embodiment describes a case in which the first user sets, for the second user, the specific smart home devices to display, in the fixed time period, the content set by the first user. In another embodiment, one or more recommended themes may be set in the AI Life application. Trigger conditions and displayed content in the one or more recommended themes have been set, and the user does not need to perform an operation, for example, manually adding a theme or a condition. This reduces user operations.

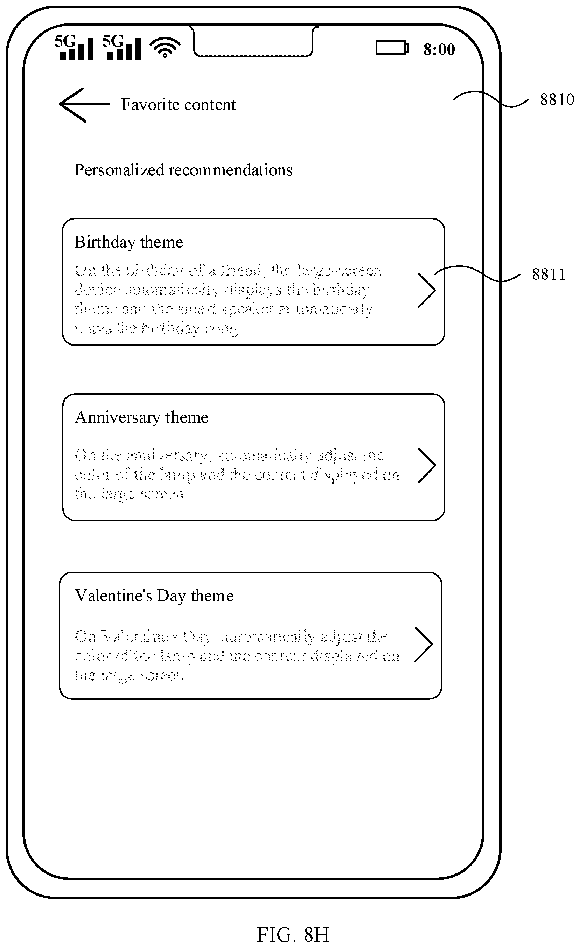

FIG. 8H is a schematic diagram of an example of a recommended theme displayed by the electronic device 100.

The electronic device 100 may alternatively receive and respond to an input operation of the user on the favorite content setting control 8401, and the electronic device 100 displays a user interface 8810 shown in FIG. 8H. In the user interface 8810, examples of several recommended themes are shown, including a "Birthday theme", an "Anniversary theme", a "Valentine's Day theme", and the like. In another embodiment, more different types of themes may be further included. This is not limited in embodiments of this application.

The electronic device 100 may receive an input operation of the user on a control 8811 of the "Birthday theme", and in response to the input operation of the user, the electronic device 100 may display a user interface for setting the "Birthday theme". The electronic device 100 may receive a user operation for setting, in the user interface for setting the "Birthday theme", time points for turning on the large screen device and the smart speaker, operating time periods of the large screen device and the smart speaker. Details are not described in this embodiment of this application. Similarly, the electronic device 100 may alternatively receive a user operation for setting, in the user interface for setting the "Anniversary theme", time points for turning on the large screen device and the lamp, operating time periods of the large screen device and the lamp. Details are not described in this embodiment of this application.

Similarly, the electronic device 100 may alternatively receive a user operation for setting, in the user interface for setting the "Valentine's Day theme", time points for turning on the large screen device and the smart speaker, operating time periods of the large screen device and the smart speaker. Details are not described in this embodiment of this application.

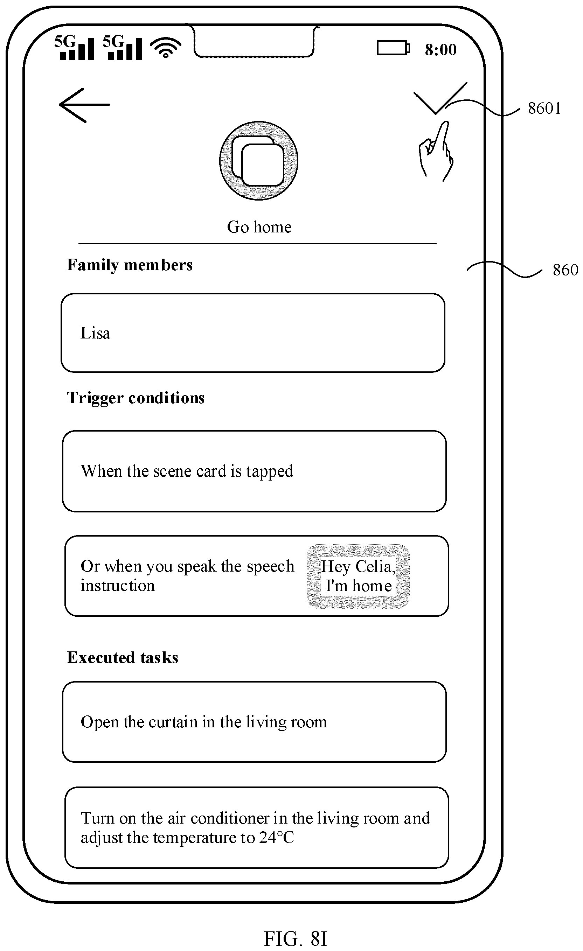

For example, after the first user helps the second user create a trigger condition and an executed task in the scene mode, the electronic device 100 displays a user interface 860 shown in FIG. 8I. The user interface 860 may include a name (for example, "Go home") of the scene mode created by the first user for the second user, a family member is the second user (for example, the second user may be referred to as Lisa), and the trigger condition may include "When the scene card is tapped" or "Speak the speech instruction "Hey Celia, I'm home". When the trigger condition is met, the executed task may include "Open the curtain of the living room" and "Turn on the air conditioner in the living room and adjust the temperature to 24°C".

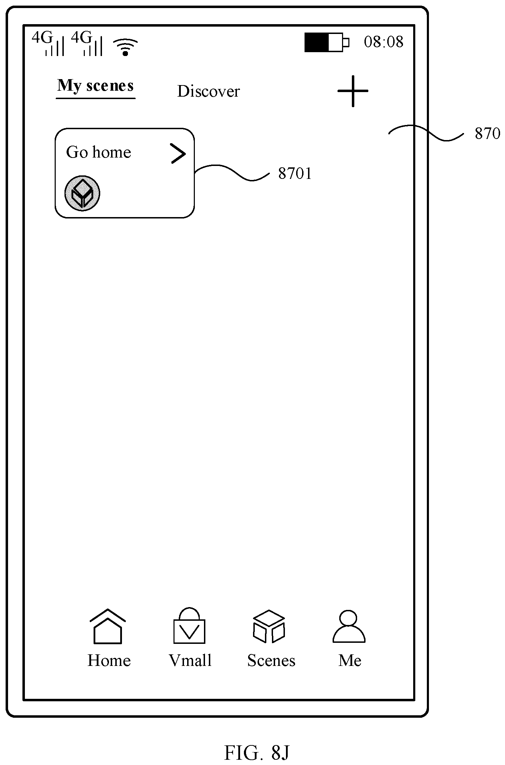

As shown in FIG. 8I, the electronic device 100 may receive an input operation of the user on a control 8601, and in response to the input operation of the user, an electronic device 200 displays a user interface 870 shown in FIG. 8J. The electronic device 200 may be understood as a terminal device, for example, a mobile phone or a tablet of the second user. The user interface 870 includes a card 8701 of a scene (for example, "Go home") newly created by the first user for the second user.

With reference to the related descriptions in FIG. 7A to FIG. 7P and FIG. 8A to FIG. 8J, the first user may create a smart home linkage solution for the first user, or the first user may create a smart home linkage solution for another user.

As shown in Table 4, Table 4 shows an example of a correspondence between identities of different family members and smart home linkage solutions.

**Table 4**

| Identity of the user | Name of the scene mode | Trigger Condition | Smart home linkage solution |
|---|---|---|---|
| First user | "Go home" | Tap the card or speak the wakeup word "Hey Celia, I'm home" | "Turn on the air conditioner in the living room and adjust the temperature to 26°C", "Turn on the air purifier in the living room", and "Turn on the lamp in the living room and adjust the lamp to warm white" |
| Second user | | Tap the card or speak the wakeup word "Hey Celia, I'm home" | "Turn on the air conditioner in the living room and adjust the temperature to 24°C" and "Open the curtain in the living room" |
| Third user | | Tap the card or speak the wakeup word "Hey Celia, I'm home" | "Turn on the air conditioner in the bedroom 2 and adjust the temperature to 25°C" and "Turn on the air conditioner in the living room and adjust the temperature to 24°C" |

As shown in Table 4, it can be learned that different user identities may correspond to different smart home linkage solutions. Difference between identities of users in controlling the smart home device is reflected.

In the "Go home" scene mode, the first user, the second user, and the third user speak the same wakeup word "Hey Celia, I'm home", and the smart home device enters different operating modes. Specifically, when it is identified that the identity of the user is the first user, the smart home linkage solution is "Turn on the air conditioner in the living room and adjust the temperature to 26°C", "Turn on the air purifier in the living room", and "Turn on the lamp in the living room and adjust the lamp to warm white". When it is identified that the identity of the user is the second user, the smart home linkage solution is "Turn on the air conditioner in the living room and adjust the temperature to 24°C" and "Open the curtain in the living room". When it is identified that the identity of the user is the third user, the smart home linkage solution is "Turn on the air conditioner in the bedroom 2 and adjust the temperature to 25°C" and "Turn on the air conditioner in the living room and adjust the temperature to 24°C".

With reference to the related descriptions in FIG. 7A to FIG. 7P and FIG. 8A to FIG. 8J, the first user may create, for the first user, a smart home linkage solution associated with a plurality of scene mode, or the first user may create, for another user, a smart home linkage solution associated with a plurality of scene mode.

**Table 5**

| Identity of the user | Name of the scene mode | Trigger Condition | Smart home linkage solution |
|---|---|---|---|
| First user | "Go home" | Tap the card or speak the wakeup word "Hey Celia, I'm home" | "Turn on the air conditioner in the living room and adjust the temperature to 26°C", "Turn on the air purifier in the living room", and "Turn on the lamp in the living room and adjust the lamp to warm white" |
| | "Video watching" | Tap the card or speak the wakeup word "Hey Celia, enter the video watching mode" | "Turn on the projector in the living room", "Turn off the lamp in the living room", and "Close the curtain in the living room" |
| | "Leave home" | Tap the card or speak the wakeup word "Hey Celia, I'm leaving home" | "Turn off the air conditioner in the living room", "Turn off the air conditioner in bedroom 1, "Close the curtain in the living room", "Turn off the air purifier in the living room", and "Start the floor sweeping robot" |

As shown in Table 5, it can be learned that a same user may create a smart home linkage solution associated with a plurality of different scene modes.

In the "Go home" scene mode, the first user taps the "Go home" card in the AI Life application or speaks the wakeup word "Hey Celia, I'm home", and the smart home device enters a different operating mode. Specifically, when it is identified that the identity of the user is the first user, the smart home linkage solution is "Turn on the air conditioner in the living room and adjust the temperature to 26°C", "Turn on the air purifier in the living room", and "Turn on the lamp in the living room and adjust the lamp to warm white". The first user taps the "Video watching" card in the AI Life application or speaks the wakeup word "Hey Celia, enter the video watching mode", and the smart home device enters a different operating mode. Specifically, when it is identified that the identity of the user is the first user, the smart home linkage solution is "Turn on the projector in the living room", "Turn off the lamp in the living room", and "Close the curtain in the living room". The first user taps the "Leave home" card in the AI Life application or speaks the wakeup word "Hey Celia, I'm leaving home", and the smart home device enters a different operating mode. Specifically, when it is identified that the identity of the user is the first user, the smart home linkage solution is "Turn off the air conditioner in the living room", "Turn off the air conditioner in bedroom 1, "Close the curtain in the living room", "Turn off the air purifier in the living room", and "Start the floor sweeping robot".

**Table 6**

| Identity of the user | Name of the scene mode | Trigger Condition | Smart home linkage solution |
|---|---|---|---|
| Second user | "Go home" | Tap the card or speak the wakeup word "Hey Celia, I'm home" | "Turn on the air conditioner in the living room and adjust the temperature to 24°C" and "Open the curtain in the living room" |
| | "Video watching" | Tap the card or speak the wakeup word "Hey Celia, enter the video watching mode" | "Turn on the projector in the living room", "Adjust the brightness of the lamp in the living room to 30%", and "Close the curtain in the living room" |
| | "Leave home" | Tap the card or speak the wakeup word "Hey Celia, I'm leaving home" | "Turn off the air conditioner in the living room", "Turn off the air conditioner in bedroom 1, "Close the curtain in the living room", and "Turn off the air purifier in the living room" |

As shown in Table 6, it can be learned that a same user may create a smart home linkage solution associated with a plurality of different scene modes.

In the "Go home" scene mode, the second user taps the "Go home" card in the AI Life application or speaks the wakeup word "Hey Celia, I'm home", and the smart home device enters a different operating mode. Specifically, when it is identified that the identity of the user is the second user, the smart home linkage solution is "Turn on the air conditioner in the living room and adjust the temperature to 24°C" and "Open the curtain in the living room". The second user taps the "Video watching" card in the AI Life application or speaks the wakeup word "Hey Celia, enter the video watching mode", and the smart home device enters a different operating mode. Specifically, when it is identified that the identity of the user is the second user, the smart home linkage solution is "Turn on the projector in the living room", "Adjust the brightness of the lamp in the living room to 30%", and "Close the curtain in the living room". The second user taps the "Leave home" card in the AI Life application or speaks the wakeup word "Hey Celia, I'm leaving home", and the smart home device enters a different operating mode. Specifically, when it is identified that the identity of the user is the second user, the smart home linkage solution is "Turn off the air conditioner in the living room", "Turn off the air conditioner in bedroom 1, "Close the curtain in the living room", and "Turn off the air purifier in the living room".

For a method for controlling the smart home device by the third user, refer to the method for controlling the smart home device by the first user or the second user. Details are not described in this embodiment of this application again.

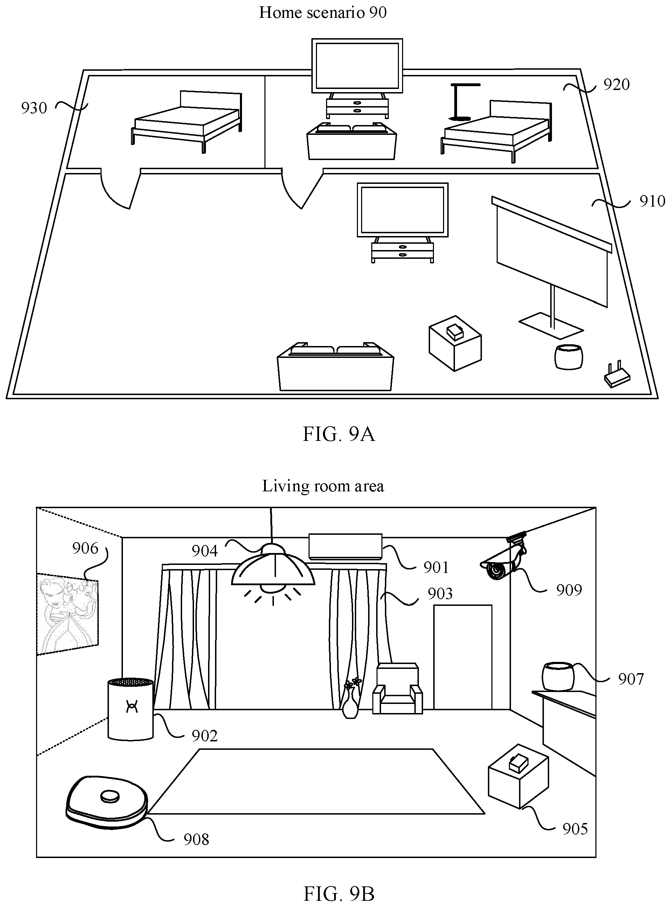

FIG. 9A shows an example of a schematic diagram of a home scenario 90.

The home scenario 90 may include a living room area 910, a bedroom 1 area 920, and a bedroom 2 area 930. Smart home devices included in the living room area 910 include an air conditioner (not shown in FIG. 9A), an air purifier (not shown in FIG. 9A), a curtain (not shown in FIG. 9A), a lamp (not shown in FIG. 9A), a smart projector, a smart television, a smart speaker, a router, a floor sweeping robot, a camera, and the like. Smart home devices included in the bedroom 1 area 920 include a lamp, a smart television, and an air conditioner (not shown in FIG. 9A). Smart home devices included in the bedroom 2 area 930 include a lamp and an air conditioner (not shown in FIG. 9A). The home scenario 90 may further include a kitchen area (not shown in FIG. 9A), and smart home devices included in the kitchen area include a microwave oven (not shown in FIG. 9A), a refrigerator (not shown in FIG. 9A), a range hood (not shown in FIG. 9A), and the like.

FIG. 9B is a specific schematic diagram of a scenario of the living room area 910.

Smart home devices included in the living room area 910 include an air conditioner 901, an air purifier 902, a curtain 903, a lamp 904, a smart projector 905, a smart television 906, a smart speaker 907, a floor sweeping robot 908, a camera 909, and the like.

Smart home devices in areas in the home can be linked to form a smart home linkage solution. How to set the smart home linkage solution is described in detail in the foregoing embodiments. For details, refer to the related descriptions in FIG. 7A to FIG. 7O and FIG. 8A to FIG. 8H. Details are not described in this embodiment of this application again.

In different scene modes, the central control device may identify an identity of a user and start a smart home linkage solution based on the identity of the user. The scene modes may include but is not limited to "Go home", "Sleep", "Video watching", "Leave home", and the like. Different scene modes may be associated with different smart home linkage solutions.

The central control device identifies the identity of the user.

The central control device may identify the identity of the user in the following manners. Manner 1: The central control device collects and identifies the identity of the user based on biological information of the user.

That the central control device identifies the identity of the user based on biological information of the user may include the following steps.

Step 1: The central control device collects the biological information of the user.

The biological information of the user includes but is not limited to fingerprint information, face image information, voiceprint information, and the like of the user.

Step 2: The central control device extracts a biological feature of the user.

Step 3: The central control device determines the identity of the user based on the voiceprint feature of the user.

After extracting the biological feature of the user, the central control device matches the biological feature with a locally stored biological feature corresponding to the identity of the user, to determine the identity of the user.

The identity of the user may be previously stored in the central control device, for example, the first user, the second user, and the third user.

Manner 2: The central control device receives the biological information of the user sent by another device having a capability of collecting biological information of a user, and identifies the identity of the user based on the biological information of the user.

When the central control device does not have a capability of collecting biological information of a user, but the central control device has a capability of determining an identity of a user based on biological information of the user, the another device having the capability of collecting biological information of a user may collect the biological information of the user, and then send the biological information to the central control device.

Manner 2 may include the following steps.

Step 1: The another device having the capability of collecting biological information of a user collects the biological information of the user.

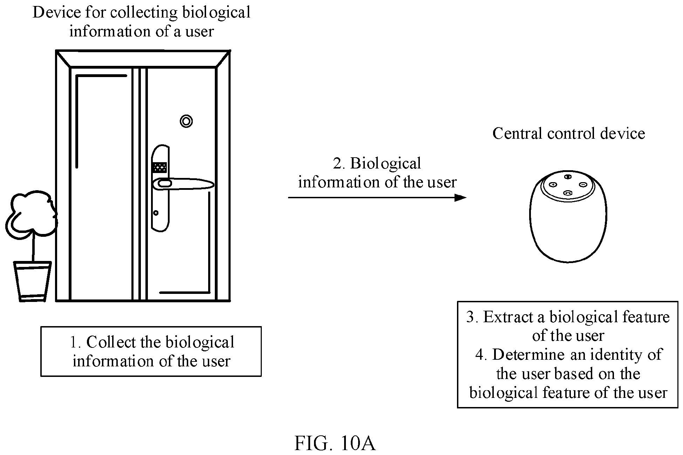

As shown in FIG. 10A, the another device having the capability of collecting biological information of a user may be a smart door, and the central control device may be a smart speaker. A fingerprint collection module on the smart door may collect the fingerprint information of the user, a face image recognition module on the intelligent door may collect the face image information of the user, and a voice recognition module on the intelligent door may collect the voiceprint information of the user. Alternatively, a user identity identification device installed beside the smart door may collect the fingerprint information, the face image information, and the voiceprint information of the user. In this embodiment of this application, a type of another device having a capability of collecting biological information of a user is not limited.

Step 2: The another device having the capability of collecting biological information of a user sends the biological information of the user to the central control device.

Step 3: The central control device receives the biological information of the user, and extracts the biological feature of the user.

Step 4: The central control device determines the identity of the user based on the biological feature of the user.

The identity of the user may be previously stored in the central control device, for example, the first user, the second user, and the third user.

Manner 3: The central control device receives an identifier of the user sent by another device having a capability of collecting biological information of a user, and determines the identity of the user based on the identifier of the user.

When the central control device does not have a capability of collecting biological information of a user, and does not have a capability of determining an identity of a user based on biological information of a user, after collecting the biological information of the user, the another device having the capability of collecting biological information of a user may determine the identity of the user based on the biological information of the user. Then, the another device having the capability of collecting biological information of a user sends the identifier of the user to the central control device, and the central control device determines the identity of the user after receiving the identifier of the user.

Manner 3 may include the following steps.

Step 1: The another device having the capability of collecting biological information of a user collects the biological information of the user.

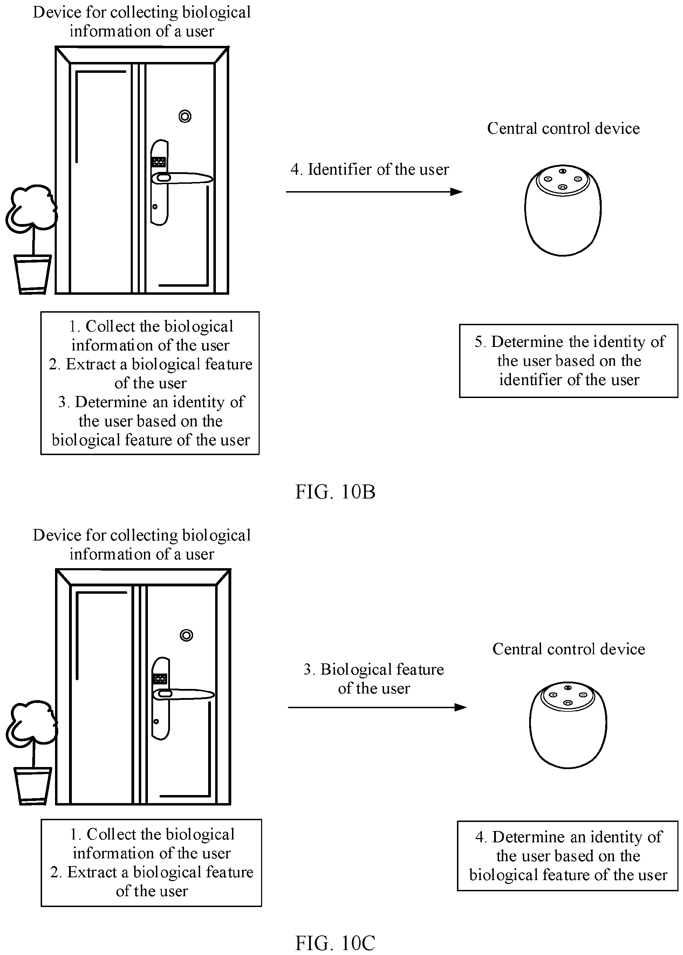

As shown in FIG. 10B, the another device having the capability of collecting biological information of a user may be a smart door, and the central control device may be a smart speaker. A fingerprint collection module on the smart door may collect the fingerprint information of the user, a face image recognition module on the intelligent door may collect the face image information of the user, and a voice recognition module on the intelligent door may collect the voiceprint information of the user. Alternatively, a user identity identification device installed beside the smart door may collect the fingerprint information, the face image information, and the voiceprint information of the user. In this embodiment of this application, a type of another device having a capability of collecting biological information of a user is not limited.

Step 2: The another device having the capability of collecting biological information of a user extracts the biological feature of the user.

Step 3: The another device having the capability of collecting biological information of a user determines the identity of the user based on the biological feature of the user.

Step 4: The another device having the capability of collecting biological information of a user sends the identifier of the user to the central control device.

Step 5: The central control device determines the identity of the user based on the identifier of the user.

The identity of the user may be previously stored in the central control device, for example, the first user, the second user, and the third user.

Manner 4: The central control device receives the biological feature of the user sent by another device having a capability of collecting biological information of a user, and determines the identity of the user based on the biological feature of the user.

When the central control device does not have a capability of collecting biological information of a user, but has a capability of determining an identity of a user based on biological information of a user, after collecting the biological information of the user, the another device having the capability of collecting biological information of a user may extract the biological feature of the user based on the biological information of the user. Then, the another device having the capability of collecting biological information of a user sends the biological feature of the user to the central control device, and the central control device determines the identity of the user after receiving the biological feature of the user.

Manner 4 may include the following steps.

Step 1: The another device having the capability of collecting biological information of a user collects the biological information of the user.

As shown in FIG. 10C, the another device having the capability of collecting biological information of a user may be a smart door, and the central control device may be a smart speaker. A fingerprint collection module on the smart door may collect the fingerprint information of the user, a face image recognition module on the intelligent door may collect the face image information of the user, and a voice recognition module on the intelligent door may collect the voiceprint information of the user. Alternatively, a user identity identification device installed beside the smart door may collect the fingerprint information, the face image information, and the voiceprint information of the user. In this embodiment of this application, a type of another device having a capability of collecting biological information of a user is not limited.

Step 2: The another device having the capability of collecting biological information of a user extracts the biological feature of the user.

Step 3: The another device having the capability of collecting biological information of a user sends the biological feature of the user to the central control device.

Step 4: The central control device determines the identity of the user based on the biological feature of the user.

The identity of the user may be previously stored in the central control device, for example, the first user, the second user, and the third user.

Manner 5: The central control device identifies the identity of the user based on a home account associated with the identity of the user.

In specific implementation, the electronic device 100 sends information to the central control device by using an application (for example, the AI Life application) of the home account associated with the identity of the user. After receiving the information, the central control device determines the identity of the user.

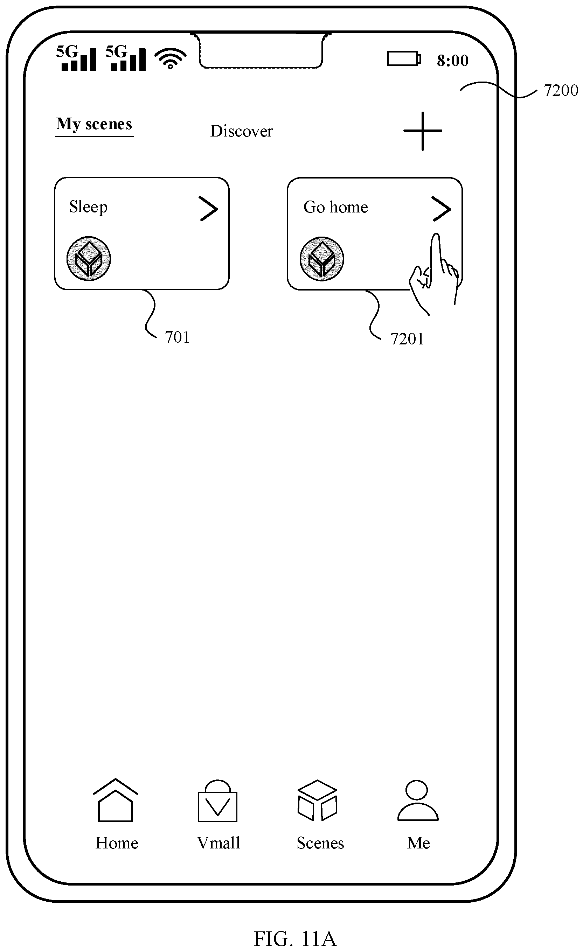

For example, FIG. 11A shows an example of the user interface 7200 of the application (for example, the AI Life application) of the home account associated with the identity of the user. As shown in FIG. 11A, the electronic device 100 receives an input operation (for example, a tap operation) of the user on the card 701 or the card 7201 in the user interface 7200, and in response to the input operation of the user, the electronic device 100 sends an instruction 1 to an AI Life application server. After receiving the instruction 1, the AI Life application server determines the identity of the user (for example, the first user). Then, the AI Life application server sends an identifier of the user to the central control device, and the central control device determines the identity of the user after receiving the identifier of the user.

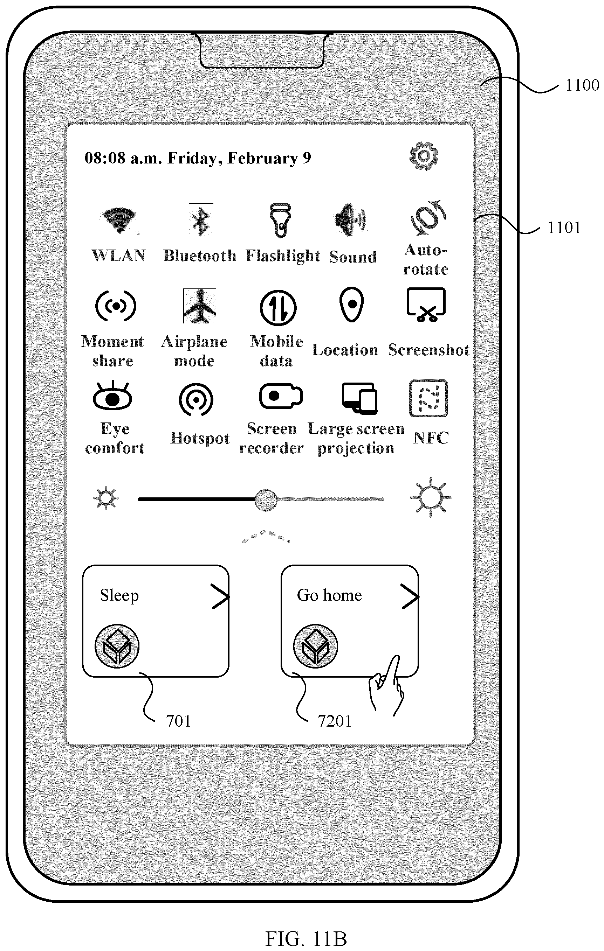

FIG. 11B shows an example of another user interface 1100 of the application (for example, the AI Life application) of the home account associated with the identity of the user.

As shown in FIG. 11A, after the electronic device 100 receives a user operation for creating the card 701 of the "Sleep" scene mode and the card 7201 of the "Go home" scene mode in the AI Life application, the electronic device 100 may display the card 701 and the card 7201 in a notification bar 1101 shown in FIG. 11B. As shown in FIG. 11B, the electronic device 100 receives an input operation (for example, a tap operation) of the user on the card 7201, and the electronic device 100 sends an instruction 1 to an AI Life application server. After receiving the instruction 1, the AI Life application server determines the identity of the user (for example, the first user). Then, the AI Life application server sends an identifier of the user to the central control device, and the central control device determines the identity of the user after receiving the identifier of the user. Manner 6: The central control device identifies the identity of the user based on an electronic device associated with the identity of the user.

In specific implementation, when the electronic device associated with the identity of the user is connected to a home local area network, a server corresponding to the local area network determines the identity of the user (for example, the first user) associated with the electronic device connected to the local area network. Then, the server corresponding to the local area network sends an identifier of the user to the central control device. After the central control device receives the identifier of the user, the central control device determines the identity of the user.

Optionally, when a head unit associated with the identity of the user is connected to a home local area network, a server corresponding to the local area network determines the identity of the user (for example, the first user) of the head unit connected to the local area network. Then, the server corresponding to the local area network sends an identifier of the user to the central control device. After the central control device receives the identifier of the user, the central control device determines the identity of the user.

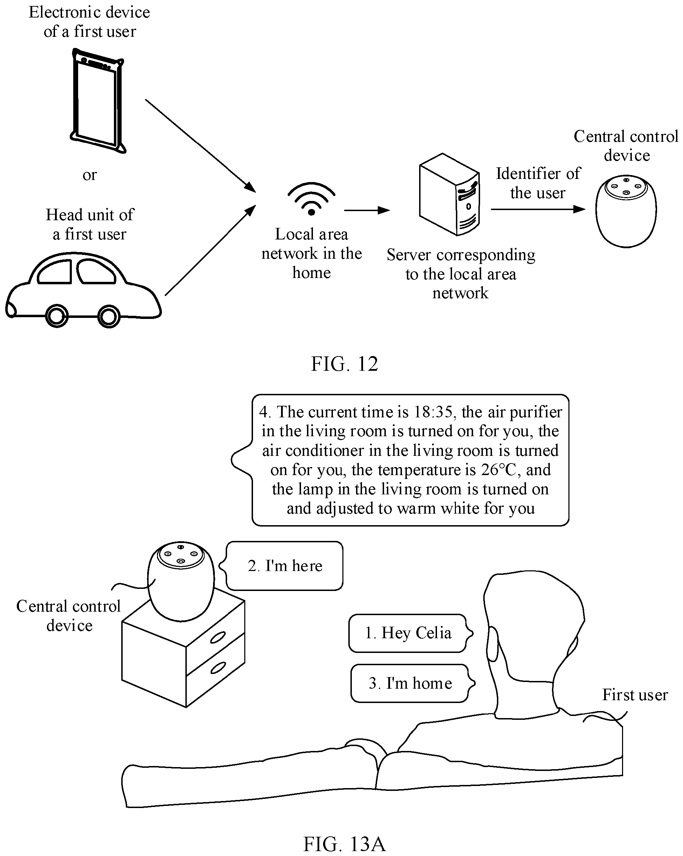

As shown in FIG. 12, when the user is near home and is closer to home, and a distance between the electronic device or the head unit associated with the identity of the user and home is within a preset distance, the electronic device or the head unit associated with the identity of the user (for example, the first user) is connected to the home local area network. The server corresponding to the home local area network identities the identity of the user by using the electronic device or the head unit connected to the local area network. Then, the server corresponding to the local area network sends the identifier of the user to the central control device (for example, the smart speaker). After the central control device receives the identifier of the user, the central control device determines the identity of the user (for example, the first user).

Manner 7: The central control device identifies the identity of the user based on a user action associated with the identity of the user.

The central control device stores a correspondence between a user action and an identity of a user. In this case, the central control device may identify the identity of the user based on the detected user action.

For example, a user action of the first user may be hand clapping, foot stamping, or the like. First hand clapping frequency may be two consecutive times of hand clapping. First foot stamping frequency may be two consecutive times of foot stampings. In this way, when the central control device detects that the user performs two consecutive times of hand clapping or two consecutive times of foot stampings, the central control device identifies that the identity of the user is the first user.

For example, a user action of the second user may be hand clapping, foot stamping, or the like. Second hand clapping frequency may be three consecutive times of hand clapping. Second foot stamping frequency may be three consecutive times of foot stampings. In this way, when the central control device detects that the user performs three consecutive times of hand clapping or three consecutive times of foot stampings, the central control device identifies that the identity of the user is the second user.

For example, a user action of the second user may be hand clapping, foot stamping, or the like. Third hand clapping frequency may be four consecutive times of hand clapping. Third foot stamping frequency may be four consecutive times of foot stampings. In this way, when the central control device detects that the user performs four consecutive times of hand clapping or four consecutive times of foot stampings, the central control device identifies that the identity of the user is the third user.

Optionally, action types of different users may alternatively be different. For example, an action type corresponding to the identity of the first user is hand clapping, an action type corresponding to the identity of the second user is foot stamping, and an action type corresponding to the identity of the third user is hand clapping and foot stamping. When action types of different users are different, execution frequency of different actions may not be limited, and execution frequency of different actions may be one time, two times, or more times. This is not limited in embodiments of this application.

For example, when the user action of the first user is hand clapping, and the central control device identifies that the user action is hand clapping, the central control device identifies that the identity of the user is the first user.

For example, the user action of the second user is foot stamping, and the central control device identifies that the user action is foot stamping, the central control device identifies that the identity of the user is the second user.

For example, the user action of the first user is hand clapping and foot stamping, and the central control device identifies that the user action is hand clapping with foot stamping, the central control device identifies that the identity of the user is the third user. In addition to the foregoing seven manners, the central control device may further identify the identity of the user in another manner. This is not limited in embodiments of this application.

The central control device may identify the identity of the user according to any one of Manners 1 to 7, and determine, based on the identity of the user, the scene mode corresponding to the identity of the user. The scene mode includes a smart home linkage solution of at least one controlled device. The smart home linkage solution may be understood as a method in which the central control device controls an operating mode of the at least one controlled device based on state information of the at least one controlled device. The smart home linkage solution is described in detail in the foregoing embodiments. Details are not described herein again.

After determining the identity of the user, the central control device determines a scene mode 1 from at least one scene mode associated with the identity of the user, and the central control device controls, based on a smart home linkage solution corresponding to the scene mode 1, at least one smart home device to enter a preset operating mode.

The central control device may determine, according to any one of the following manners, the scene mode 1 from the at least one scene mode associated with the identity of the user.

Manner 1: The central control device determines, based on a preset instruction, the scene mode 1 from the at least one scene mode associated with the identity of the user.

After obtaining a speech of the user, the central control device recognizes the preset instruction from a speech recognition result, and the central control device obtains a preset scene mode identifier through matching based on the preset instruction. Then, the central control device determines, based on the preset scene mode identifier, that a scene mode triggered by the user is the scene mode 1.

For example, the scene mode 1 may be the "Go home" scene mode.

As shown in FIG. 13A, after the first user goes home, the first user outputs a speech "Hey Celia". The central control device recognizes a speech result "Hey Celia", and the central control device performs voiceprint feature extraction on the speech, and determines, based on a voiceprint feature, that the identity of the user is the first user. After the central control device identifies that the identity of the user is the first user, the central control device sends response information to the user. The response information is used to prompt the user that the central control device has identified the identity of the user. The response information may be a speech "I'm here". After the central control device outputs the speech "I'm here", the first user continues to output a speech "I'm home", the central control device recognizes a speech result "I'm home", and obtains a preset instruction "Go home" through matching from the speech result "I'm home", and the central control device obtains the preset scene mode identifier, for example, an identifier of the "Go home" scene mode, through matching based on the preset instruction "Go home". Then, the central control device determines, based on the identifier of the "Go home" scene mode, that the scene mode triggered by the user is the "Go home" scene mode. The central control device controls a smart home device associated with the "Go home" scene mode to enter a preset operating mode. Then, the central control device outputs a speech again, and the speech is used to prompt the user of the operating mode of the smart home device associated with the "Go home" scene mode. The speech may be "The current time is 18:35, the air purifier in the living room is turned on for you, the air conditioner in the living room is turned on for you, the temperature is 26°C, and the lamp in the living room is turned on and adjusted to warm white for you".

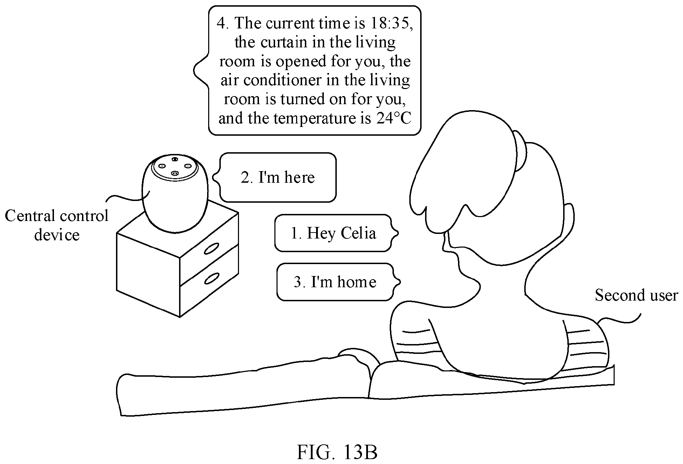

As shown in FIG. 13B, after the second user goes home, the first user outputs a speech "Hey Celia". The central control device recognizes a speech result "Hey Celia", and the central control device performs voiceprint feature extraction on the speech, and determines, based on a voiceprint feature, that the identity of the user is the second user. After the central control device identifies that the identity of the user is the second user, the central control device sends response information to the user. The response information is used to prompt the user that the central control device has identified the identity of the user. The response information may be a speech "I'm here". After the central control device outputs the speech "I'm here", the second user continues to output a speech "I'm home", the central control device recognizes a speech result "I'm home", and obtains a preset instruction "Go home" through matching from the speech result "I'm home", and the central control device obtains the preset scene mode identifier, for example, an identifier of the "Go home" scene mode, through matching based on the preset instruction "Go home". Then, the central control device determines, based on the identifier of the "Go home" scene mode, that the scene mode triggered by the user is the "Go home" scene mode. The central control device controls a smart home device associated with the "Go home" scene mode to enter a preset operating mode. Then, the central control device outputs a speech again, and the speech is used to prompt the user of the operating mode of the smart home device associated with the "Go home" scene mode. The speech may be "The current time is 18:35, the curtain in the living room is opened for you, the air conditioner in the living room is turned on for you, and the temperature is 24°C".

The foregoing describes a case in which the central control device determines, based on the preset instruction, the scene mode 1 from the at least one scene mode associated with the identity of the user. The preset instruction may be associated with a scene mode identifier. For example, when the scene mode is the "Go home" scene mode, the preset instruction may be "Go home". When the scene mode is the "Video watching" scene mode, the preset instruction may be "Video watching". Optionally, accuracy of a speech recognition result of the central control device is not too high, and a recognition error may occur. This affects user experience. Therefore, to improve accuracy of the speech recognition result of the central control device, and to increase interest in scene mode identification, the preset instruction may be obtained based on features such as a melody, a tempo, a rhythm, and a tone of music. Different scene modes correspond to different preset instructions, and different preset instructions correspond to different features such as a melody, a tempo, a rhythm, and a tone of music.

For example, the preset instruction corresponding to the "Go home" scene mode may be a first type of music melody. The preset instruction corresponding to the "Video watching" scene mode may be a second type of music melody. The preset instruction corresponding to the "Leave home" scene mode may be a third type of music melody. The first type of music melody, the second type of music melody, and the third type of music melody are different from each other. In this way, the user only needs to hum songs of different types of music melody, so that the central control device can identify a corresponding scene mode. This increases user's interest in smart home control. Optionally, a same type of music melody may correspond to a plurality of songs. The user may hum different songs to trigger the central control device to identify a same scene mode. This further increases user's interest in smart home control. For example, after the first user goes home, the first user hums a first song, and a music melody of the first song is a first type of music melody. The central control device recognizes a voice of the user, extracts a voiceprint feature, and determines, based on the voiceprint feature, that the identity of the user is the first user. Then, the central control device identifies a type of the music melody of the first song hummed by the user. When the central control device identifies that the type of the music melody is the first type of music melody, the central control device determines that the scene mode triggered by the user is the "Go home" scene mode. Then, the central control device controls the smart home device associated with the "Go home" scene mode to enter the preset operating mode. Then, the central control device outputs a speech again, and the speech is used to prompt the user of the operating mode of the smart home device associated with the "Go home" scene mode. The speech may be "The current time is 18:35, the air purifier in the living room is turned on for you, the air conditioner in the living room is turned on for you, the temperature is 26°C, and the lamp in the living room is turned on and adjusted to warm white for you".

For example, after the second user goes home, the second user hums a first song, and a music melody of the first song is a first type of music melody. The central control device recognizes a voice of the user, extracts a voiceprint feature, and determines, based on the voiceprint feature, that the identity of the user is the second user. Then, the central control device identifies a type of the music melody of the first song hummed by the user. When the central control device identifies that the type of the music melody is the first type of music melody, the central control device determines that the scene mode triggered by the user is the "Go home" scene mode. Then, the central control device controls the smart home device associated with the "Go home" scene mode to enter the preset operating mode. Then, the central control device outputs a speech again, and the speech is used to prompt the user of the operating mode of the smart home device associated with the "Go home" scene mode. The speech may be "The current time is 18:35, the curtain in the living room is opened for you, the air conditioner in the living room is turned on for you, and the temperature is 24°C".

Manner 2: The central control device determines the scene mode 1 based on a scene mode identifier sent by the server.

For example, the scene mode 1 may be the "Go home" scene mode.

Specifically, the electronic device 100 sends the scene mode identifier to the central control device by using an application (for example, the AI Life application) of a home account associated with the identity of the user. After receiving the scene mode identifier, the central control device determines the identity of the user.

For example, FIG. 11A shows an example of the user interface 7200 of the application (for example, the AI Life application) of the home account associated with the identity of the user. As shown in FIG. 11A, the electronic device 100 receives an input operation (for example, a tap operation) of the user on the card 701 or the card 7201 in the user interface 7200, and in response to the input operation of the user, the electronic device 100 sends an instruction 1 to an AI Life application server. After receiving the instruction 1, the AI Life application server determines that a scene mode triggered by the user is the "Go home" scene mode. Then, the AI Life application server sends the scene mode identifier to the central control device. After receiving the scene mode identifier, the central control device determines that the scene mode 1 is the "Go home" scene mode.

FIG. 11B shows an example of another user interface 1100 of the application (for example, the AI Life application) of the home account associated with the identity of the user.

As shown in FIG. 11A, after the electronic device 100 receives a user operation for creating the card 701 of the "Sleep" scene mode and the card 7201 of the "Go home" scene mode in the AI Life application, the electronic device 100 may display the card 701 and the card 7201 in a notification bar 1101 shown in FIG. 11B. As shown in FIG. 11B, the electronic device 100 receives an input operation (for example, a tap operation) of the user on the card 7201, and the electronic device 100 sends an instruction 1 to an AILife application server. After receiving the instruction 1, the AILife application server determines that a scene mode triggered by the user is the "Go home" scene mode. Then, the AI Life application server sends the scene mode identifier to the central control device. After receiving the scene mode identifier, the central control device determines that the scene mode 1 is the "Go home" scene mode.

Manner 3: The central control device determines the scene mode 1 based on an electronic device associated with the identity of the user.

In specific implementation, when the electronic device associated with the identity of the user changes from a state of being disconnected from a home local area network to a state of being connected to the home local area network, a server corresponding to the local area network determines that the electronic device connected to the local area network is near home, and may determine that the user (for example, the first user) of the electronic device connected to the local area network is about to go home. In this case, the server corresponding to the local area network may send a scene mode identifier (for example, an identifier of the "Go home" scene mode) to the central control device. After receiving the scene mode identifier, the central control device determines that the scene mode 1 is the "Go home" scene mode.

Optionally, when the electronic device associated with the identity of the user changes from a state of being connected to a home local area network to a state of being disconnected from the home local area network, a server corresponding to the local area network determines that the electronic device connected to the local area network is away from home, and may determine that the user (for example, the first user) of the electronic device connected to the local area network is away from home. In this case, the server corresponding to the local area network may send a scene mode identifier (for example, an identifier of the "Leave home" scene mode) to the central control device. After receiving the scene mode identifier, the central control device determines that the scene mode 1 is the "Leave home" scene mode.

In some embodiments, to avoid misjudgment by the server corresponding to the local area network, the central control device may switch the scene mode after a specific time period or query the user whether to switch the scene mode. For example, when the user only goes out for picking up a package or carrying out garbage, the electronic device carried by the user changes from the state of being connected to the home local area network to the state of being disconnected from the home local area network, and the central control device mistakenly considers that the user is away from home, and switches the scene mode from the "Go home" scene mode to the "Leave home" scene mode. To avoid misjudgment, after the state of the electronic device changes from being connected to the home local area network to being disconnected from the home local area network for a specific time period (for example, 10 minutes), the central control device may prompt, in the following manners, the user whether the scene mode needs to be switched: The server outputs prompt information to the electronic device, the central control device outputs a speech prompt, or the like.

In addition to the foregoing three manners, the central control device may further determine, in another manner, the scene mode 1 from the at least one scene mode associated with the identity of the user. This is not limited in embodiments of this application.

After the central control device determines the identity of the user and the scene mode 1 associated with the identity of the user, the central control device controls, based on the smart home linkage solution corresponding to the scene mode 1, the at least one controlled device to enter the preset operating mode.

It can be learned from the foregoing embodiments that the smart home linkage solutions in different scene modes are different. That smart home linkage solutions in different scene modes are different includes: Types of at least one controlled device are different, or at least one controlled device enters different preset operating modes. The smart home linkage solutions in different scene modes are described in detail in the foregoing embodiments. Details are not described in this embodiment of this application again.

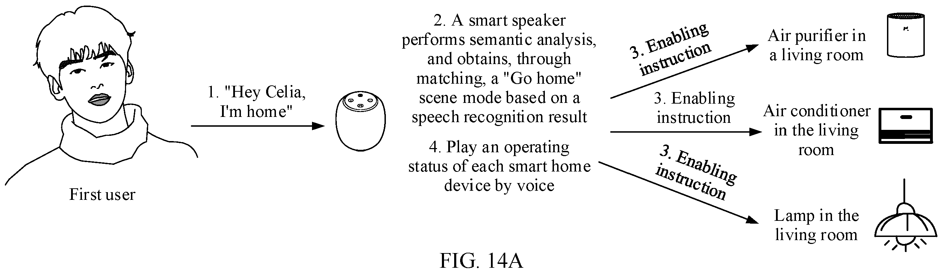

For example, as shown in FIG. 14A, the first user speaks the wakeup word "Hey Celia, I'm home", the central control device identifies that the identity of the user is the first user, and the scene mode triggered by the first user is the "Go home" scene mode. The central control device controls the smart home device in the "Go home" scene mode to enter the preset operating mode. Then, the central control device sends an enabling instruction to another smart home device in the "Go home" scene mode. The instruction is used to trigger the another smart home device in the "Go home" scene mode to enable a corresponding operating mode. For example, the central control device sends a start instruction to the air conditioner in the living room. The start instruction indicates the air conditioner in the living room to enable an operating mode corresponding to the "Go home" scene mode, for example, the temperature of the air conditioner is adjusted to 26°C. For another example, the central control device sends a start instruction to the air purifier in the living room. The start instruction indicates the air purifier in the living room to enable an operating mode corresponding to the "Go home" scene mode, for example, the air purifier in the living room is turned on. For another example, the central control device sends a start instruction to the lamp in the living room. The start instruction indicates the lamp in the living room to enable an operating mode corresponding to the "Go home" scene mode, for example, the lamp in the living room is turned on and adjusted to warm white. After the another smart home device enables the corresponding operating mode, the another smart home device sends information in response to the start instruction to the smart speaker. The information indicates that the corresponding operating mode of the another smart home device is enabled to the central control device. Then, the central control device may broadcast an operating state of the another smart home device in a voice manner.

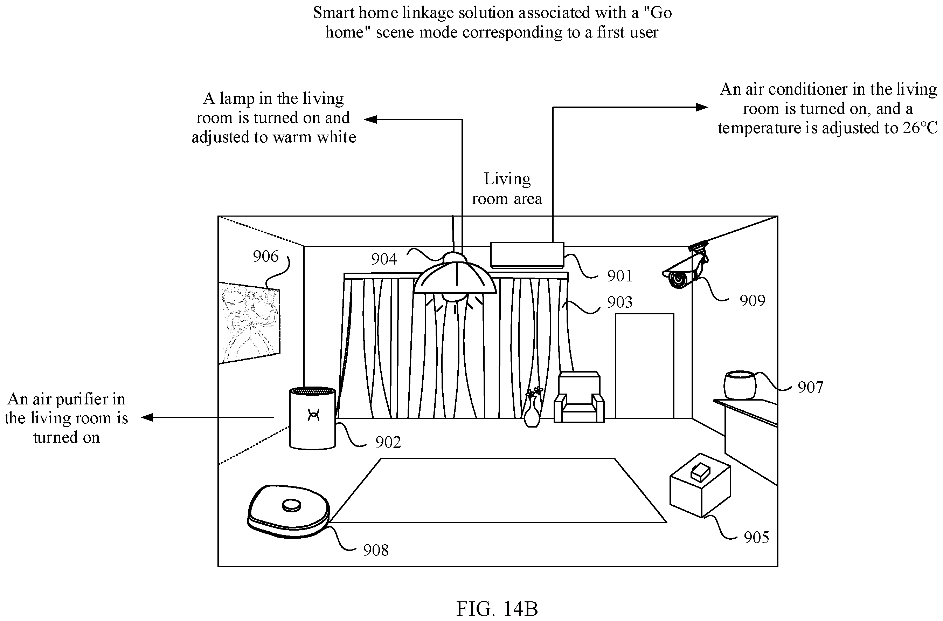

FIG. 14B shows a schematic diagram of an example of controlling, by the central control device when the central control device identifies that the identity of the user is the first user and the scene mode triggered by the first user is the "Go home" scene mode, the at least one controlled device to enter the preset operating mode.

In FIG. 14B, the air conditioner of the living room is turned on, and the temperature is adjusted to 26°C. The air purifier in the living room is turned on. The lamp in the living room is turned on and adjusted to warm white.

Optionally, when the central control device detects that a distance between an electronic device (for example, a mobile phone or a head unit) of the user and the central control device is increasingly close, and the distance between the electronic device of the user and the central control device is within a preset distance, the central control device determines that the user is about to go home, and the central control device may control some smart home devices to enter a preset operating mode. This brings good home entrance experience to the user. After the user goes home, the central control device reidentifies the identity of the user, and the central control device controls the another smart home device to enter the preset operating mode. This reduces energy consumption.

For example, when the central control device detects that a distance between an electronic device (for example, a mobile phone or a head unit) of the first user and the central control device is less than the preset distance, the central control device may control some smart home devices (for example, the air conditioner in the living room and the air purifier in the living room) to enter an operating mode in the "Go home" mode in advance. In this way, after the user goes home, the room temperature and air quality are good. This can bring good home entrance experience to the user. Optionally, before the central control device controls some smart home devices (for example, the air conditioner in the living room and the air purifier in the living room) to enter the operating mode in the "Go home" mode in advance, the central control device may output prompt information by using the electronic device of the first user, and the prompt information is used to prompt the first user whether some smart home devices (for example, the air conditioner in the living room and the air purifier in the living room) need to be turned on in advance. In this way, misidentification by the central control device can be avoided.

Then, after the user goes home, the central control device identifies that the identity of the user is the first user, and the scene mode is the scene mode 1. In this case, the central control device may control some other smart home devices (for example, the lamp in the living room) to enter an operating mode in the "Go home" mode. In this way, the lamp in the living room is turned on after the user goes home. This can save energy consumption.

In this way, different smart home devices are turned on in phases. This can bring good home entrance experience to the user and reduce energy consumption.

Optionally, after the central control device controls some other smart home devices (for example, the lamp in the living room) to enter the operating mode in the "Go home" mode for a specific time period (for example, 3 minutes), the central control device may control the other smart home devices to enter an operating mode in the "Go home" mode.

For example, after the first user goes home, the central control device controls the lamp in the living room to enter the operating mode in the "Go home" mode. After a period of time, the central control device controls the other smart home devices (for example, the television in the living room) to enter the operating mode in the "Go home" mode. After the user goes home, the user may delay a period of time in changing shoes, changing clothes, putting a bag, and putting a key. After the user is ready, the central control device controls the television in the living room to be turned on. In this way, after the user goes home, different smart home devices are turned on in sequence. This further reduces energy consumption.

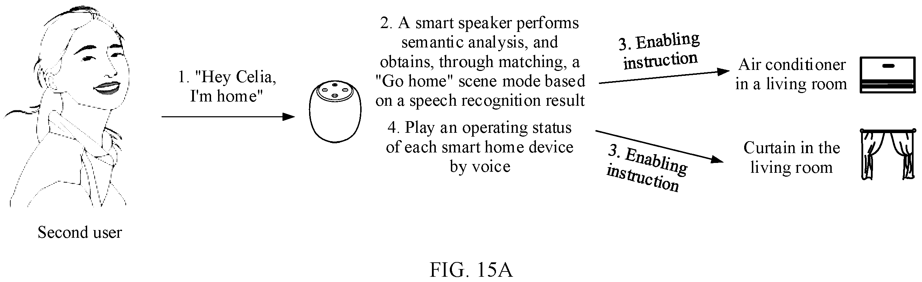

For example, as shown in FIG. 15A, the second user speaks the wakeup word "Hey Celia, I'm home", the central control device identifies that the identity of the user is the second user, and a scene mode triggered by the second user is the "Go home" scene mode. The central control device controls the smart home device in the "Go home" scene mode to enter the preset operating mode. Then, the central control device sends an enabling instruction to another smart home device in the "Go home" scene mode. The instruction is used to trigger the another smart home device in the "Go home" scene mode to enable a corresponding operating mode. For example, the central control device sends a start instruction to the air conditioner in the living room. The start instruction indicates the air conditioner in the living room to enable an operating mode corresponding to the "Go home" scene mode, for example, the temperature of the air conditioner is adjusted to 24°C. For another example, the central control device sends a start instruction to the curtain in the living room. The start instruction indicates the curtain in the living room to enable an operating mode corresponding to the "Go home" scene mode, for example, the curtain in the living room is opened. After the another smart home device enables the corresponding operating mode, the another smart home device sends information in response to the start instruction to the smart speaker. The information indicates that the corresponding operating mode of the another smart home device is enabled to the central control device. Then, the central control device may broadcast an operating state of the another smart home device in a voice manner.

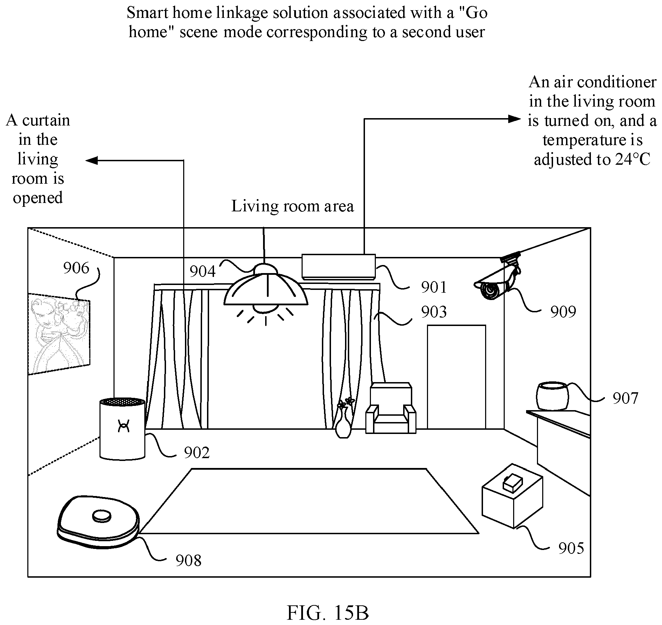

FIG. 15B shows a schematic diagram of an example of controlling, by the central control device when the central control device identifies that the identity of the user is the second user and the scene mode triggered by the second user is the "Go home" scene mode, the at least one controlled device to enter the preset operating mode.

In FIG. 15B, the air conditioner of the living room is turned on, and the temperature is adjusted to 24°C. The curtain in the living room is opened.

It can be learned from FIG. 14A and FIG. 14B and FIG. 15A and FIG. 15B that the central control device may determine, based on different identities of users, a smart home linkage solution associated with an identity of a user.

According to the method, the public smart home device can enable, based on different family members, operating modes corresponding to different family members. In this way, the smart home linkage solution can reflect difference in controlling the smart home device by the users. This improves user experience.

Optionally, after the central control device determines the identity of the user and the scene mode 1 associated with the identity of the user, and detects a first action of the user, the central control device controls, based on the smart home linkage solution corresponding to the scene mode 1, the at least one controlled device to enter the preset operating mode.

After detecting the first action of the user, the central control device controls, based on the smart home linkage solution corresponding to the scene mode 1, the at least one controlled device to enter the preset operating mode. In this way, the user performs the first action, that is, after the central control device solicits consent from the user, the central control device controls the at least one controlled device to enter the preset operating mode. In this way, accuracy of executing, by the central control device, the smart home linkage solution corresponding to the scene mode 1 is improved.

In other words, after the central control device identifies the identity of the user and the scene mode 1 associated with the identity of the user, the central control device sends an operating parameter of the at least one controlled device in the scene mode 1 associated with the identity of the user to the at least one controlled device. After receiving the operating parameter, the at least one controlled device does not immediately enter a preset operating state. After the central control device detects the first action of the user, the central control device separately sends an enabling instruction to the at least one controlled device. After receiving the enabling instruction, the at least one controlled device enters the preset operating state based on the previously received operating parameter. The central control device determines the identity of the user and the central control device determines the scene mode 1 associated with the identity of the user in any manner described in the foregoing embodiments. In the following embodiments of this application, an example in which the central control device determines the identity of the user and the central control device determines the scene mode 1 associated with the identity of the user by using a speech of the user is used for description.

If the user goes home, the first action of the user may be an action of opening an entrance door, an action of turning on a switch of the lamp in the living room, an action of turning on the air conditioner in the living room, an action of opening the curtain in the living room, or the like. That is, the central control device may control the at least one controlled device to enter the preset operating mode after the central control device determines the identity of the user and the "Go home" scene mode and detects the first action of the user. In this way, a case in which unnecessary power consumption is increased because the central control device immediately controls the at least one controlled device to enter the preset operating mode after determining the identity of the user and the "Go home" scene mode, but the user does not go home at this time, or the central control device controls the at least one controlled device to enter the preset operating mode (for example, turn on) due to an accidental touch of the user can be avoided.

If the user leaves home, the first action of the user may be an action of closing the entrance door, an action of turning off the switch of the lamp in the living room, an action of turning off the air conditioner in the living room, an action of closing the curtain in the living room, or the like. That is, the central control device may control the at least one controlled device to enter the preset operating mode after the central control device determines the identity of the user and the "Leave home" scene mode and detects the first action of the user. In this way, a case in which user experience is affected because the central control device immediately controls the at least one controlled device to enter the preset operating mode after determining the identity of the user and the "Leave home" scene mode, but the user does not leave home at this time, or the central control device controls the at least one controlled device to enter the preset operating mode (for example, turn off) due to an accidental touch of the user can be avoided.

If the user enters a sleep mode, the first action of the user may be an action of turning off a light in the bedroom, an action of turning off an air conditioner in the bedroom, an action of closing a curtain in the bedroom, or the like.

If the user enters a video watching mode, the first action of the user may be an action of turning off the lamp in the living room, an action of closing the curtain in the living room, or the like.

It should be noted that correspondences between different scene modes and the first action of the user may be different, or may be the same, or may be customized by the user, or may be preset. This is not limited in embodiments of this application.

The following describes the first action corresponding to the user going home.

FIG. 16 shows an example of a schematic diagram of controlling, by the central control device, at least one controlled device to enter the preset operating mode after identifying the first user and the "Go home" scene mode, and detecting the first action.

FIG. 16 is similar to FIG. 14A. For details, refer to the related descriptions in FIG. 14A. A difference lies in that in FIG. 16, after the central control device identifies that the identity of the user is the first user, and that the scene mode triggered by the first user is the "Go home" scene mode, the central control device separately sends, to the at least one controlled device, the operating parameter of the at least one controlled device (for example, the air purifier in the living room, the air conditioner in the living room, and the lamp in the living room) in the "Go home" scene mode associated with the first user. The air purifier in the living room, the air conditioner in the living room, and the lamp in the living room do not immediately enter preset operating states after receiving their respective operating parameters. Then, the central control device detects a first action of the user, for example, the first action may be an action of opening the door of the living room. The central control device separately sends the enabling instructions to the air purifier in the living room, the air conditioner in the living room, and the lamp in the living room. After receiving the enabling instruction, each of the air purifier in the living room, the air conditioner in the living room, and the lamp in the living room enters the preset operating state based on the previously received operating parameter. In this way, it is equivalent to that the central control device controls the at least one controlled device to enter the preset operating mode when the central control device determines that the user goes home after detecting the first action of the user. This can avoid a case in which energy consumption is increased because the central control device controls the at least one controlled device to enter the preset operating mode in advance before the user goes home.

Optionally, after the central control device determines the identity of the user and the scene mode 1 associated with the identity of the user, the central control device controls, based on the smart home linkage solution corresponding to the scene mode 1, some controlled devices associated with the scene mode 1 to enter preset operating modes. The other controlled devices enter preset operating modes after receiving the first action of the user. In this way, the central control device can ensure that some controlled devices automatically enter preset operating modes. This reduces a user operation.

In other words, after the central control device identifies the identity of the user and the scene mode 1 associated with the identity of the user, the central control device sends the operating parameter of the at least one controlled device in the scene mode 1 associated with the identity of the user to the at least one controlled device. After the at least one controlled device receives the operating parameter, some controlled devices enter preset operating states based on the received operating parameters. After receiving operating parameters, the other controlled devices do not immediately enter preset operating states. Instead, after the central control device detects the first action of the user, the central control device separately sends enabling instructions to the other controlled devices. After receiving the enabling instructions, the other controlled devices enter the preset operating states based on the previously received operating parameters.

As shown in FIG. 17, after the central control device determines that the identity of the user is the first user, and that the scene mode 1 associated with the identity of the user is the "Go home" scene mode, the central control device controls some controlled devices (for example, the air purifier in the living room, the air conditioner in the living room, and the lamp in the living room) associated with the "Go home" scene mode to enter the preset operating modes. For specific implementation, refer to the descriptions in FIG. 14A. Details are not described in this embodiment of this application again.

As shown in FIG. 17, after the central control device determines that the identity of the user is the first user, and that the scene mode 1 associated with the identity of the user is the "Go home" scene mode, the central control device separately sends the operating parameters of the other controlled devices (for example, the television in the living room) in the "Go home" scene mode associated with the first user to the television in the living room. After receiving the operating parameter, the television in the living room does not immediately enter a preset operating state. Then, the central control device detects the first action of the user, for example, the first action may be an action of opening the door of the living room. The central control device sends an enabling instruction to the television in the living room. After the television in the living room receives the enabling instruction, the television in the living room enters the preset operating state based on the previously received operating parameter.

In this way, after determining the identity of the user and the scene mode 1 associated with the identity of the user, the central control device first controls some functional home devices to enter the preset operating modes, for example, turning on the air conditioner and the air purifier in advance, so that the user can have a good sense of motion after going home. This improves user experience. The other smart home devices may be turned on after the central control device detects that the user goes home. For example, after detecting that the user goes home, the central control device controls to turn on the television in the living room. This can reduce energy consumption. Optionally, the central control device may set an effective time period of the first action of the user. That is, after the central control device sends the operating parameters of the other controlled devices to the other controlled devices respectively, if the central control device does not receive the first action of the user within a specific time period, but the central control device detects the first action of the user after a specific time period, the central control device does not send the enabling instructions to the other controlled devices. The central control device sends the enabling instructions to the other controlled devices when the central control device receives the first action of the user within a specific time period and the central control device detects the first action of the user.

For example, after the central control device separately sends the operating parameters of the other controlled devices (for example, the television in the living room) in the "Go home" scene mode associated with the first user to the television in the living room, the central control device does not detect the first action of the user within a specific time period (for example, 3 minutes). After a specific time period (for example, 3 minutes), the central control device detects the first action of the user. In this case, the central control device does not send the enabling instruction to the television in the living room.

Optionally, after the central control device determines the identity of the user and the scene mode 1 associated with the identity of the user, and before the central control device controls some controlled devices in the at least one controlled device to enter the preset operating modes, if the central control device detects that the operating modes of the controlled devices are inappropriate, the central control device may prompt the user whether to modify the operating modes of these controlled devices. Alternatively, prompt information is output on the electronic device 100, to prompt the user whether the operating modes of the controlled devices need to be modified. In this way, intelligent control of the central control device on the smart home device is reflected, and energy consumption is reduced.

The central control device may obtain a current weather condition in real time, for example, a temperature, humidity, atmospheric pressure, wind, cloud, fog, rain, flash, snow, frost, thunder, hail, and haze. When the central control device detects that the operating modes of some controlled devices are not applicable to the current weather condition, the central control device provides an adjustment suggestion.

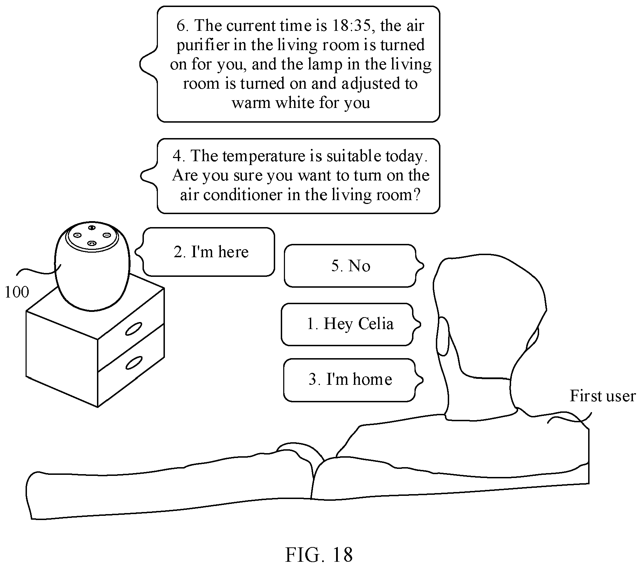

FIG. 18 shows an example of a schematic diagram of providing the adjustment suggestion by the central control device.

In FIG. 18, the first user speaks the wakeup word "Hey Celia, I'm home", the central control device identifies that the identity of the user is the first user, and the scene mode triggered by the first user is the "Go home" scene mode. The central control device controls the smart home device in the "Go home" scene mode to enter the preset operating mode. Then, the central control device sends an enabling instruction to another smart home device in the "Go home" scene mode. The instruction is used to trigger the another smart home device in the "Go home" scene mode to enable a corresponding operating mode. Before the central control device separately sends the enabling instruction to the another smart home device in the "Go home" scene mode, the central control device detects that the operating modes of some controlled devices not applicable to the current weather condition. For example, the central control device detects that a preset temperature of the air conditioner in the living room is equivalent to a current temperature. In this case, the central control device may output a speech "The temperature is suitable today. Are you sure you want to turn on the air conditioner in the living room?". The speech is used to prompt the user whether to adjust the operating mode of the air conditioner in the living room. This can save energy consumption. The first user may output a speech "No". After recognizing a speech result of the user, the central control device determines that the user does not need to turn on the air conditioner of the living room. Then, the central control device may output the operating mode of the another controlled device by voice. Voice content may be "The current time is 18:35, the air purifier in the living room is turned on for you, and the lamp in the living room is turned on and adjusted to warm white for you". In this way, when the temperature is appropriate, the central control device may prompt the user to turn off the air conditioner in the living room, to reduce energy consumption. Optionally, after determining the first user and the scene mode 1 associated with the first user, the central control device controls the at least one controlled device to enter the preset operating mode in the scene mode 1. Then, the central control device further identifies the second user and a scene mode 2 associated with the second user, and before the central control device controls at least one controlled device to enter a preset operating mode in the scene mode 2, when a first condition is met, the central control device controls the at least one controlled device to switch from the preset operating mode in the scene mode 1 to the preset operating mode in the scene mode 2.

The first condition may be a time period, an indication of a user, or the like.

The scene mode 2 may be the same as or different from the scene mode 1. This is not limited in embodiments of this application.

The at least one controlled device corresponding to the scene mode 1 may be the same as or different from the at least one controlled device corresponding to the scene mode 2. This is not limited in embodiments of this application.

When the first condition is a time period, that is, after the central control device controls the at least one controlled device to enter the preset operating mode in the scene mode 1 for a first time period (for example, three hours), when the central control device identifies the second user and the scene mode 2 associated with the second user, the central control device automatically switches the at least one controlled device from the preset operating mode in the scene mode 1 associated with the first user to the preset operating mode in the scene mode 2 associated with the second user.

When the first condition is an indication of a user, that is, after the central control device controls the at least one controlled device to enter the preset operating mode in the scene mode 1, when the central control device identifies the second user and the scene mode 2 associated with the second user, the central control device outputs prompt information (for example, a speech prompt). The prompt information is used to prompt the first user or the second user whether to switch the operating mode of the controlled device. After the first user or the second user receives the prompt information, the first user or the second user may output a speech "OK", "Yes", "Switch", or the like. When the central control device recognizes, from the speech of the first user or the second user, that the first user or the second user determines to switch the operating mode of the at least one controlled device, the central control device switches the at least one controlled device from the preset operating mode in the scene mode 1 associated with the first user to the preset operating mode in the scene mode 2 associated with the second user.

Optionally, before the central control device controls the at least one controlled device to enter the preset operating mode in the scene mode 2, when the at least one controlled device corresponding to the scene mode 2 is the same as the at least one controlled device corresponding to the scene mode 1, the central control device may output prompt information. The prompt information is used to prompt the first user or the second user whether to switch the operating mode of the same controlled device. After the first user or the second user receives the prompt information, the first user or the second user may output a speech "OK", "Yes", "Switch", or the like. The central control device controls the same controlled device to switch the operating mode after the central control device receives a response message of the first user or the second user.

Optionally, before the central control device controls the at least one controlled device to enter the preset operating mode in the scene mode 2, when the at least one controlled device corresponding to scene mode 2 is different from the at least one controlled device corresponding to scene mode 1, the central control device may directly control the at least one controlled device corresponding to scene mode 2 to enter the preset operating mode in the scene mode 2. In this way, user operations can be reduced.

In this way, in some cases, for example, the first user first goes home, and the second user also goes home, after the central control device first determines the first user and the scene mode 1 associated with the first user, the central control device controls the at least one controlled device to enter the preset operating mode in the scene mode 1. However, the second user does not know that the first user triggers the scene mode 1, and the second user controls the central control device to enter the preset operating mode in the scene mode 2. In this way, the at least one controlled device switches the operating mode a plurality of times within a short time period. A plurality of times of switching the operating mode by the at least one controlled device causes an increase in energy consumption, and affects user experience. When the first condition is met, the central control device controls the at least one controlled device to switch from the preset operating mode in the scene mode 1 to the preset operating mode in the scene mode 2. In this way, an increase in energy consumption caused by a plurality of times of switching the operating mode by the at least one controlled device can be avoided. In addition, convenience and comfort for the user are improved.

Optionally, the electronic device may output prompt information. The prompt information is used to prompt the user to add/delete a scene mode, or change a smart home linkage solution associated with the scene mode. In this way, some scene modes that are not used within a specific time period may be deleted, to release memory of a smart home system, and improve a running speed of the smart home system. In addition, when an operating mode of at least one controlled device in smart home linkage solutions associated with some scene modes is not appropriate, the electronic device may prompt the user to modify operating modes of some controlled devices. This improves convenience and comfort for the user.

When the first user does not use, within a specific time period, some scene modes created before, the electronic device 100 may output prompt information. The prompt information is used to prompt the user to delete the scene mode that is not used within the specific time period.

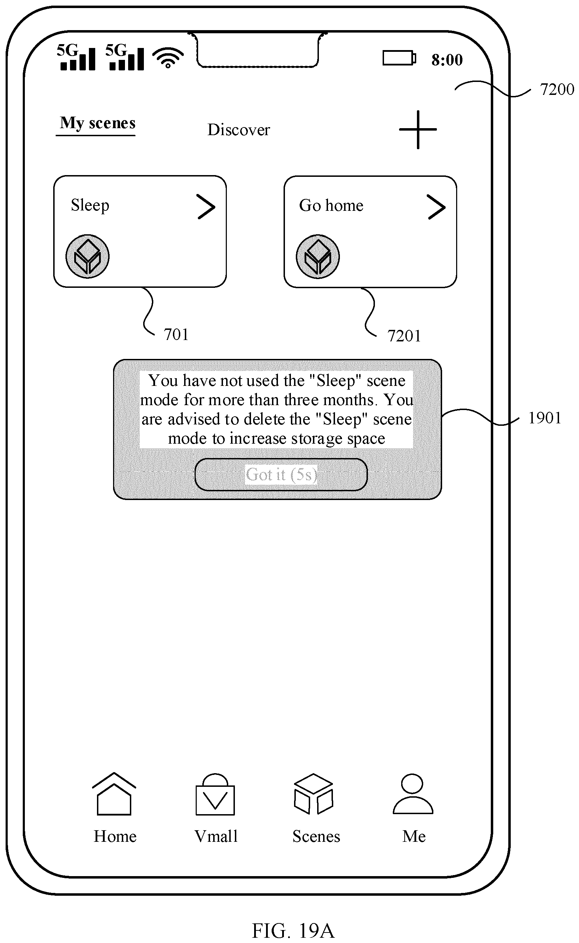

For example, as shown in FIG. 19A, when the first user does not use the "Sleep" scene mode within a specific time period (for example, three months), the electronic device 100 outputs prompt information 1901 in the user interface 7200. Content of the prompt information 1901 may be "You have not used the "Sleep" scene mode for more than three months. You are advised to delete the "Sleep" scene mode to increase storage space". In this way, the electronic device 100 outputs the prompt information 1901, so that the user can delete the scene mode that is not used within the specific time period, to release the memory of the smart home system, and improve the running speed of the smart home system.

In the smart home linkage solution associated with the scene mode previously created by the user, the operating mode of the at least one controlled device is preset. As time changes and seasons change, operating modes of some controlled devices in the at least one controlled device are inappropriate. The electronic device 100 provides prompt information. The prompt information is used to prompt the user to change operating modes of some controlled devices in some scene modes.

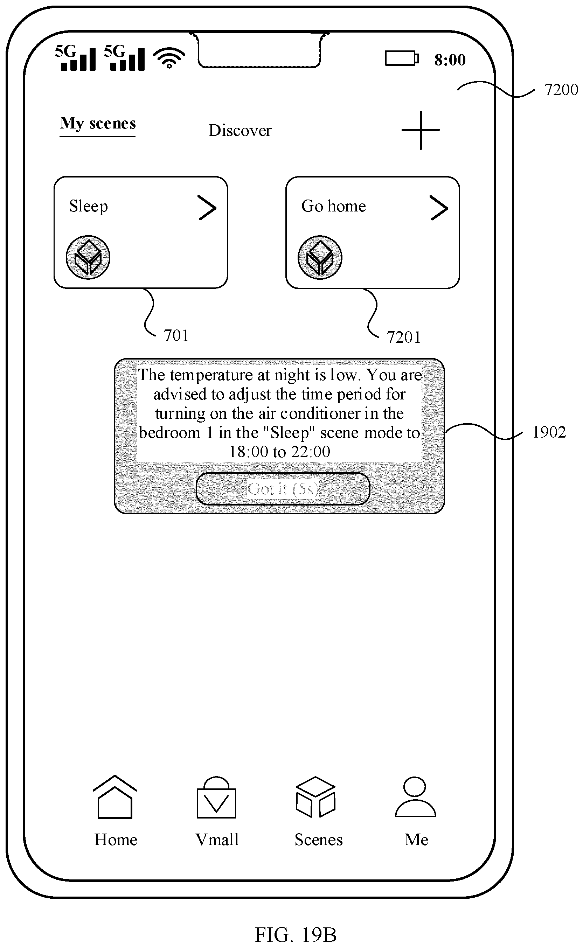

For example, if the scene mode previously created by the user is the "Sleep" scene mode, a time period for turning on the air conditioner in the bedroom 1 in the "Sleep" scene mode is set to 18:00 to 02:00, and a temperature at which the air conditioner in the bedroom 1 is turned on is 22°C. The central control device learns, by using big data, that a temperature from 22:00 to 02:00 at night is low. As shown in FIG. 19B, the electronic device 100 may provide prompt information 1902. Prompt content of the prompt information 1902 is "The temperature at night is low. You are advised to adjust the time period for turning on the air conditioner in the bedroom 1 in the "Sleep" scene mode to 18:00 to 22:00". The prompt information 1902 is used to prompt the user to shorten the time period for turning on the air conditioner in the bedroom 1. In this way, energy consumption can be reduced.

Optionally, when a specific condition is met, the central control device may automatically switch a scene mode, and control associated smart home devices in different scene modes to switch operating modes. The first condition may be a time period, temperature, humidity, playing progress, operating duration, or the like.

In a possible implementation, when the central control device detects that some controlled devices (for example, the television in the living room) are about to switch from the scene mode 1 to the scene mode 2, the central control device may control the other controlled devices (for example, the lamp in the living room) to operate by using operating parameters corresponding to the scene mode 2.

For example, the scene mode 1 may be the "Video watching" scene mode. If the television in the living room is playing a movie, both the lamp and the speaker in the living room operate in the "Video watching" scene mode. For example, the lamp in the living room is turned off, and the speaker in the living room is turned on. When the movie played by the television in the living room is about to be played, the television in the living room may send an instruction to the central control device. The instruction is used to prompt the television in the living room to switch to the operating mode corresponding to the scene mode 2 after a specific time period (for example, one minute). In this case, after receiving the instruction, the central control device may immediately control the other controlled devices (for example, the lamp in the living room) to operate by using the operating parameters corresponding to the scene mode 2. Alternatively, after receiving the instruction, the central control device may control, after a specific time period (for example, one minute), the other controlled devices (for example, the lamp in the living room) to operate by using the operating parameters corresponding to the scene mode 2

In another possible implementation, after the central control device detects that time reaches preset time, the central control device may control the smart home device to switch from the operating mode in the scene mode 1 to the operating mode in the scene mode 2.

For example, if the air conditioner in the bedroom 1 operates by using an operating parameter in the "Go home" scene mode, for example, the temperature of the air conditioner in the bedroom 1 is 24°C, after a specific time period, when the central control device detects that time reaches 10:00 p.m., and usually the user sleeps at 10:00 p.m., the central control device may control the air conditioner in the bedroom 1 to operate by using an operating parameter in the "Sleep" scene mode, for example, the temperature of the air conditioner in the bedroom 1 is 26°C. After the air conditioner in the bedroom 1 operates for a period of time, for example, when the time reaches 02:00 a.m., and the central control device detects that the outdoor temperature is about 26°C, the central control device can control the air conditioner in the bedroom 1 to be turned off. This reduces energy consumption.

The foregoing embodiments describe how the central control device determines the identity of the user and the scene mode associated with the identity of the user, and how the central control device controls the at least one controlled device associated with the scene mode to enter the preset operating mode. In another embodiment, the central control device may not be included, that is, the public smart home device in the home may independently identify the identity of the user and the scene mode associated with the identity of the user, and enter the preset operating mode.

A principle of how the public smart home device identifies the identity of the user is similar to a principle of how the central control device identifies the identity of the user. For details, refer to the embodiments in FIG. 10A, FIG. 10B, FIG. 10C, FIG. 11A and FIG. 11B, and FIG. 12. Details are not described in this embodiment of this application again.

A principle of how the public smart home device identifies the scene mode associated with the identity of the user is similar to a principle of how the central control device identifies the scene mode associated with the identity of the user. For details, refer to the embodiment in FIG. 13A and FIG. 13B. Details are not described in this embodiment of this application again.

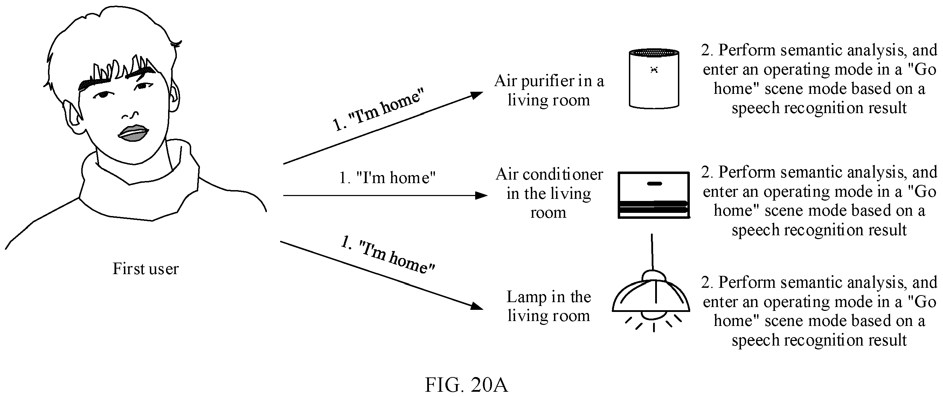

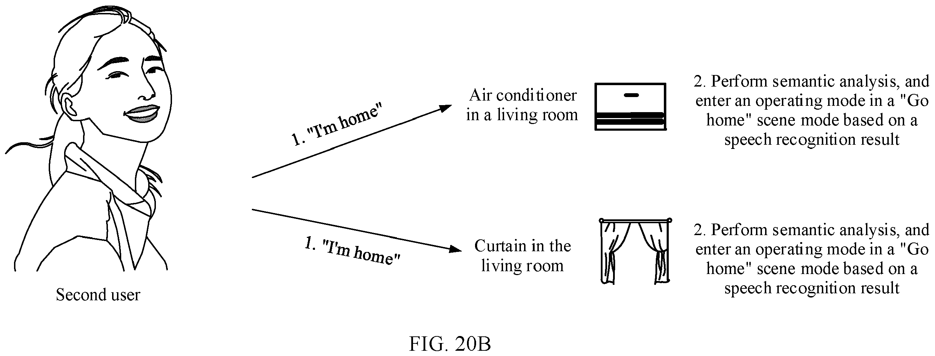

FIG. 20A and FIG. 20B show examples of schematic diagrams of entering, by the public smart home device, a preset operating mode by identifying an identity of a user and a scene mode.

For example, as shown in FIG. 20A, the first user speaks a wakeup word "I'm home", and the public smart home device performs semantic analysis on a voice of the user, and identifies that the identity of the user is the first user, and a scene mode triggered by the first user is the "Go home" scene mode. The public smart home device enters a preset operating mode in the "Go home" scene mode. Public smart home devices include but are not limited to the air purifier in the living room, the air conditioner in the living room, and the lamp in the living room. For example, the air purifier in the living room performs speech analysis on the speech content "I'm home", identifies that the identity of the user is the first user, and that the scene mode triggered by the first user is the "Go home" scene mode. Then, the air purifier in the living room enters a preset operating mode in the "Go home" scene mode, for example, the air purifier in the living room is turned on. For another example, the air conditioner in the living room performs speech analysis on the speech content "I'm home", identifies that the identity of the user is the first user, and that the scene mode triggered by the first user is the "Go home" scene mode. Then, the air conditioner in the living room enters a preset operating mode in the "Go home" scene mode, for example, the air conditioner in the living room is turned on, and the temperature is adjusted to 26°C. For another example, the lamp in the living room performs speech analysis on the speech content "I'm home", identifies that the identity of the user is the first user, and that the scene mode triggered by the first user is the "Go home" scene mode. Then, the lamp in the living room enters a preset operating mode in the "Go home" scene mode, for example, the lamp in the living room is turned on, and is adjusted to warm white.

For example, as shown in FIG. 20B, the second user speaks a wakeup word "I'm home", and the public smart home device performs semantic analysis on a voice of the user, and identifies that the identity of the user is the second user, and a scene mode triggered by the second user is the "Go home" scene mode. The public smart home device enters a preset operating mode in the "Go home" scene mode. Public smart home devices include but are not limited to the air conditioner in the living room and the curtain in the living room. For example, the air conditioner in the living room performs speech analysis on the speech content "I'm home", identifies that the identity of the user is the second user, and that the scene mode triggered by the second user is the "Go home" scene mode. Then, the air conditioner in the living room enters a preset operating mode in the "Go home" scene mode, for example, the air conditioner in the living room is turned on, and the temperature is adjusted to 24°C. For another example, the curtain in the living room performs speech analysis on the speech content "I'm home", identifies that the identity of the user is the second user, and that the scene mode triggered by the second user is the "Go home" scene mode. Then, the curtain in the living room enters a preset operating mode in the "Go home" scene mode, for example, the curtain in the living room is opened.

Optionally, after identifying the identity of the user, some public smart home devices may automatically enable and play content preferred by the user for the user based on previous behavior habits of the user.

The foregoing public smart home devices may include but are not limited to a large screen device (for example, a smart projector, a smart television, or a tablet), a smart speaker, and the like.

For example, the large screen device may analyze a video watching habit of the first user based on a video watching record of the first user, to determine a video type preferred by the first user. Then, when the large screen device identifies that the identity of the user is the first user, and that the scene mode triggered by the first user is the "Go home" scene mode, the large screen device may automatically play video content preferred by the first user, or the large screen device may automatically play, for the user based on a latest video watching record of the first user, video content played last time.

For example, the smart speaker may analyze a music playing record of the first user, to determine a type of music preferred by the first user to or music of a singer preferred by the first user. Then, when the smart speaker identifies that the identity of the user is the first user, and that the scene mode triggered by the first user is the "Go home" scene mode, the smart speaker may automatically play the type of music preferred by the first user or automatically play the music of the singer preferred by the first user, or the smart speaker may automatically play, for the user based on a latest music play record of the first user, music played last time.

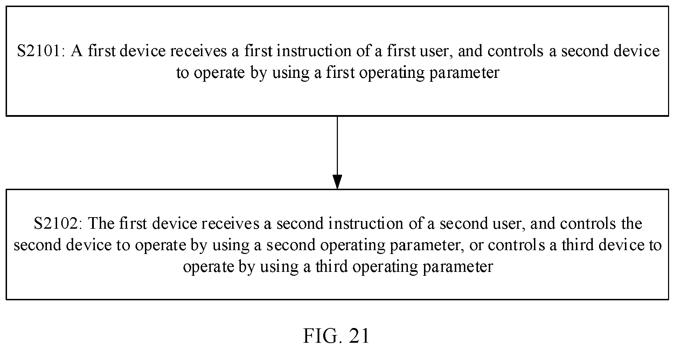

FIG. 21 shows an example of a schematic diagram of a smart home control method according to an embodiment of this application.

S2101: A first device receives a first instruction of a first user, and controls a second device to operate by using a first operating parameter.

S2102: The first device receives a second instruction of a second user, and controls the second device to operate by using a second operating parameter, or controls a third device to operate by using a third operating parameter.

That semantic content of the first instruction is the same as that of the second instruction may mean that text information of the first instruction is the same as that of the second instruction. For example, the semantic content of the first instruction and the semantic content of the second instruction are "Hey Celia, I'm home".

That semantic content of the first instruction is the same as that of the second instruction may alternatively mean that an identifier of the first instruction is the same as that of the second instruction. For example, both the identifier of the first instruction and the identifier of the second instruction are a "Go home" identifier.

The first instruction and the second instruction may be collected and obtained by the first device, or may be sent by a server to the first device after the server identifies an identity of a user.

According to the method in the first aspect, a smart home device can enable, based on different family members, operating modes corresponding to the different family members. In this way, the smart home linkage solution can reflect difference in controlling the smart home device by the users. This improves user experience.

Optionally, before the first device receives the first instruction of the first user, the method further includes: When the first device detects that a spatial distance between a geographical location of a fourth device of the first user and a geographical location of the second device is within a preset distance, or a time period required for the fourth device to reach a geographical location of the second device is within a preset time period, the first device controls a fifth device to operate by using a fourth operating parameter. The second device is different from the fifth device.

The geographical location of the second device may be understood as a home location of the first user. When the first user is about to go home and is near home (for example, entering a residential community), or the fourth device of the first user estimates, by using navigation software, that the user is about to go home within a preset time period (for example, 5 minutes), before the first user goes home, the first device requests to control the second device to operate by using the first operating parameter, for example, control an air conditioner in a living room to be turned on, or control an air purifier in a living room to be turned on. In this way, the user can have good home entrance experience after the user goes home.

Optionally, after the first device controls the second device to operate by using the first operating parameter, the method further includes: After the first device controls the second device to operate, for a first time period, by using the first operating parameter, the first device controls a sixth device to operate by using a fifth operating parameter. The sixth device is different from the second device, and the sixth device is different from the fifth device. In this way, the first device may control different devices to be turned on in sequence. For example, after the user goes home, the user first turns on a lamp and then turns on a television. Compared with a case in which the lamp and the television are turned on at the same time, energy consumption can be reduced.

Optionally, that a first device receives a first instruction of a first user, and controls a second device to operate by using a first operating parameter specifically includes: The first device receives the first instruction of the first user, detects a first operation of the first user, and controls the second device to operate by using the first operating parameter. For details, refer to the embodiment described in FIG. 16.

For example, the first operation may be an operation of turning on a lamp in a living room. The first device controls the air conditioner in the living room to be turned on when the first device detects the operation of turning on the lamp by the user. In this way, misidentification by the first device can be prevented, and accuracy of controlling, by the first device, the smart home device to operate can be improved.

Optionally, after the first device receives the first instruction of the first user, the method further includes: The first device detects a second operation of the first user, and controls a seventh device to operate by using a sixth operating parameter. In this way, the first device may control some devices to automatically enter operating modes. This reduces user operations. The other devices can enter operating modes after the second operation of the user is received, to prevent misidentification by the first device, and improve accuracy of controlling, by the first device, the smart home device to operate. For details, refer to the embodiment described in FIG. 17. Optionally, that a first device receives a first instruction of a first user, and controls a second device to operate by using a first operating parameter specifically includes: The first device receives the first instruction of the first user, and determines a seventh operating parameter that is of the second device and that is indicated by the first instruction; the first device outputs first prompt information when the seventh operating parameter does not meet a first condition; and the first device receives the first operating parameter entered by the first user, and controls the second device to operate by using the first operating parameter. In this way, in an operating start phase, the first device may provide prompt information for an inappropriate operating parameter, to avoid increasing energy consumption when the second device operates by using the inappropriate operating parameter. For details, refer to the embodiment described in FIG. 18.

Optionally, after the first device controls the second device to operate by using the first operating parameter, the method further includes: When the first device detects that the first operating parameter does not meet a second condition, the first device controls the second device to operate by using an eighth operating parameter. The second condition may be a time period, a temperature, humidity, operating duration, or the like. In this way, the first device can automatically control the second device to switch the operating mode. This reflects that the first device can intelligently control the smart home device.

Optionally, after the first device controls the second device to operate by using the first operating parameter, the method further includes: When the first device detects that the first device is about to switch from a first scene mode to a second scene mode, the first device controls an eighth device to operate by using the eighth operating parameter corresponding to the second scene mode. In this way, the first device may control the eighth device to switch the operating mode in advance. This brings better user experience to the user.

Optionally, after the first device receives the first instruction of the second user, and before the first device controls the second device to operate by using the second operating parameter, the method further includes: The first device outputs second prompt information, where the second prompt information is used to prompt the user whether to modify an operating parameter of the second device; and the first device receives a third instruction entered by the first user or the second user, and controls the second device to operate by using the second operating parameter. In this way, when different users trigger a same smart home device to enter different operating modes, the first device may prompt the user whether to switch the operating mode. This improves user experience.

Optionally, before the first device receives the first instruction of the first user, the method further includes: The first device receives the eighth parameter that is of the second device and that is entered by the first user; the first device outputs third prompt information when the eighth operating parameter does not meet the second condition; and the first device receives and stores the first operating parameter that is of the second device and that is entered by the first user. The second condition may be a time period, a temperature, humidity, operating duration, or the like. In this way, in a setting phase, for an inappropriate setting, the first device may provide prompt information to prompt the user of the inappropriate setting, to avoid an increase in energy consumption caused by the inappropriate setting. For details, refer to the embodiment described in FIG. 7J.

Optionally, before the first device receives the first instruction of the first user, the method further includes: The first device receives the second parameter that is of the second device and that is entered by the first user or the third operating parameter that is of the third device and that is entered by the first user; and the first device stores the second operating parameter that is of the second device and that is entered by the first user or the third operating parameter that is of the third device and that is entered by the first user. In this way, the first user may help the second user who is not familiar with a setting process set a smart home linkage solution that belongs to the second user. For details, refer to the embodiment described in FIG. 8A to FIG. 8J.

Optionally, that a first device receives a first instruction of a first user, and controls a second device to operate by using a first operating parameter specifically includes: The first device receives the first instruction of the first user; the first device obtains identity information of the first user based on the first instruction, where the identity information includes one or more of a fingerprint feature, a voiceprint feature, a facial feature, or a body action type; and the first device determines the second device and the first operating parameter based on the identity information of the first user. In another possible implementation, that a first device receives a first instruction of a first user, and controls a second device to operate by using a first operating parameter specifically includes: The first device receives the first instruction of the first user; the first device obtains identity information of the first user and the first scene mode based on the first instruction, where the identity information includes one or more of a fingerprint feature, a voiceprint feature, a facial feature, or a body action type; and the first device determines the second device and the first operating parameter based on the identity information of the first user and the first scene mode. The body action type includes but is not limited to foot stamping frequency and hand clapping frequency. For details, refer to the embodiments described in FIG. 10A to FIG. 10C, FIG. 11A and FIG. 11B, and FIG. 12.

Optionally, the first instruction includes one or more of the following: a speech signal, face image information, fingerprint image information, an identifier, and a scene mode identifier.

Optionally, that a first device receives a first instruction of a first user specifically includes: The first device receives a first speech signal of the first user; and the first device performs semantic analysis on the first speech signal to obtain the first instruction; or the first device determines the first instruction based on an audio feature of the first speech signal. The audio feature includes one or more of the following: a tempo, a rhythm, a pitch, or a melody. In this way, the first device may not only obtain the first instruction based on semantic analysis, but also obtain the first instruction based on the audio feature. This improves interest of user identity identification.

Optionally, the first device is any one of the following: a smart speaker, a robot housekeeper, a large screen device, a smart door, a mobile phone, a tablet, a smartwatch, a smart band, and a server. The fifth device is any one of the following: a smart air conditioner, a smart fan, an air purifier, and a floor sweeping robot. The second device is any one of the following: a smart lamp. The sixth device is any one of the following: a smart television and a projector.

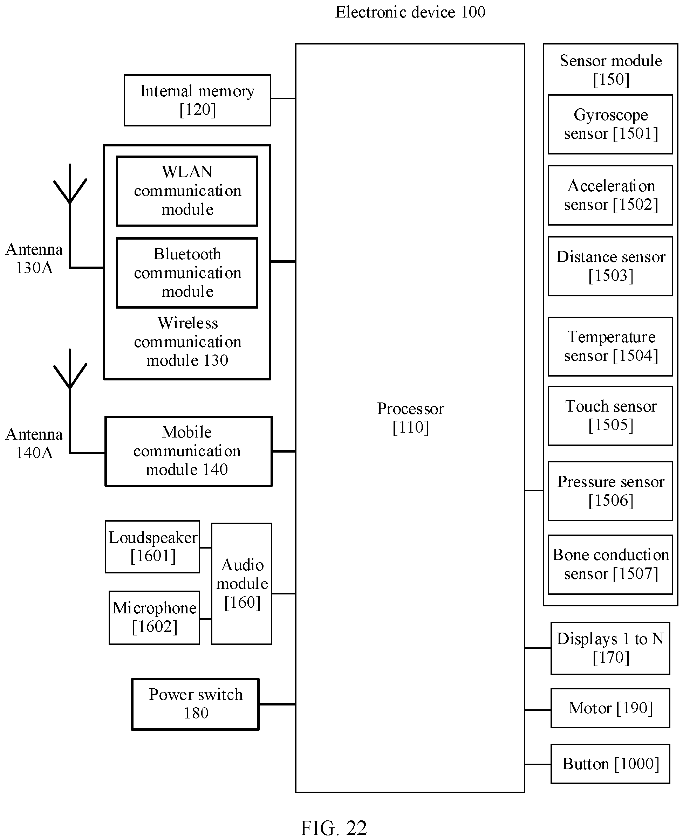

FIG. 22 shows an example of a schematic diagram of a structure of the electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (a smartwatch or a smart band), a vehicle-mounted device, a smart home device, and/or a smart city device. A specific type of the electronic device is not limited in the embodiment of this application.

The electronic device 100 may include a processor 110, an internal memory 120, a wireless communication module 130, a mobile communication module 140, a sensor module 150, an audio module 160, a display 170, a power switch 180, a motor 190, and a button 1000.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The internal memory 120 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as DDR5 SDRAM), or the like. The non-volatile memory may include a magnetic disk storage device and a flash memory (flash memory).

The flash memory may be classified, based on an operation principle, into an NOR flash, an NAND flash, a 3D NAND flash, and the like, may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like, or may be classified, based on storage specifications, into a universal flash storage (English: universal flash storage, UFS), an embedded multimedia card (embedded multimedia Card, eMMC), and the like.

The random access memory may be directly read and written by using the processor 110. The random access memory may be configured to store executable programs (such as machine instructions) in an operating system or another running program, and may be further configured to store data of a user, data of an application, and the like.

The non-volatile memory may also store executable programs, data of a user, data of an application, and the like, which may be loaded into the random access memory in advance for directly reading and writing by the processor 110.

A wireless communication function of the electronic device 100 may be implemented by using the antenna 130A, the antenna 140A, the wireless communication module 130, the mobile communication module 140, the modem processor, the baseband processor, and the like.

The antenna 130A and the antenna 140A are configured to send and receive electromagnetic wave signals. Each antenna in the electronic device 100 may be configured to cover one or more communication bands. Different antennas may further be multiplexed to improve antenna utilization.

The wireless communication module 130 may provide a wireless communication solution that is applied to the electronic device 100 and that includes a wireless local area network (wireless local area network, WLAN), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 130 may be one or more components integrating at least one communication processing module. The wireless communication module 130 receives an electromagnetic wave through the antenna 130A, performs frequency modulation and filtering processing on an electromagnetic wave signal, and sends a processed signal to the processor 110. The wireless communication module 130 may further receive a to-be-sent signal from the processor 110, perform frequency modulation and amplification on the to-be-sent signal, and convert the signal into an electromagnetic wave through the antenna 130A for radiation. The mobile communication module 140 may provide a solution, applied to the electronic device 100, to wireless communication including 2G, 3G, 4G, 5G, and the like. The mobile communication module 140 may include at least one filter, a switch, a power amplifier, a low noise amplifier (low noise amplifier, LNA), and the like. The mobile communication module 140 may receive an electromagnetic wave through the antenna 140A, perform filtering, amplification, or the like on the received electromagnetic wave, and transmit the electromagnetic wave to the modem processor for demodulation. The mobile communication module 140 may further amplify a signal modulated by the modem processor, and convert an amplified signal into an electromagnetic wave through the antenna 140A for radiation.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device, or displays an image or a video by using the display 170.

In some embodiments, the mobile communication module 140 and the wireless communication module 130 may be configured to: establish a connection to another device, and obtain exercise data collected by the another device, where the exercise data includes a heart rate, calories, breathing frequency, and the like; or control the another device to prompt a user to breathe, adjust an action, pause or continue exercise, and the like. The another device may be a mobile phone, a band, a body fat scale, a computer, a notebook computer, or the like.

The sensor module 150 includes a gyroscope sensor 1501, an acceleration sensor 1502, a distance sensor 1503, a temperature sensor 1504, a touch sensor 1505, a pressure sensor 1506, and a bone conduction sensor 1507.

The gyroscope sensor 1501 may be configured to determine a moving posture of the electronic device 100. In some embodiments, an angular velocity of the electronic device 100 around three axes (namely, axes x, y, and z) may be determined through the gyroscope sensor 1501. The gyroscope sensor 1501 may be configured to implement image stabilization during photographing. For example, when the shutter is pressed, the gyroscope sensor 1501 detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 1501 may also be used in a navigation scenario and a somatic game scenario.

The acceleration sensor 1502 may be configured to detect accelerations in various directions (usually on three axes) of the electronic device 100. When the electronic device 100 is still, a magnitude and a direction of gravity may be detected. The acceleration sensor 1502 may be further configured to identify a posture of the electronic device, and is used in an application, for example, switching between a landscape mode and a portrait mode or a pedometer.

The distance sensor 1503 may be configured to measure a distance. The electronic device 100 may measure the distance in an infrared manner or a laser manner. In some embodiments, in a photographing scenario, the electronic device 100 may measure a distance through the distance sensor 1503 to implement quick focusing.

The temperature sensor 1504 may be configured to detect a temperature. In some embodiments, the electronic device 100 executes a temperature processing policy by using the temperature detected by the temperature sensor 1504. For example, when the temperature reported by the temperature sensor 1504 exceeds a threshold, the electronic device 100 degrades performance of a processor near the temperature sensor 1504, to reduce power consumption and implement thermal protection. In some other embodiments, when the temperature is less than another threshold, the electronic device 100 heats a battery to prevent the electronic device 100 from being shut down abnormally due to a low temperature. In some other embodiments, when the temperature is lower than still another threshold, the electronic device 100 boosts an output voltage of a battery to avoid abnormal shutdown caused by a low temperature.

The touch sensor 1505 is also referred to as a "touch component". The touch sensor 1505 may be disposed on the display 170, and a touchscreen, also referred to as a "touchscreen", is formed by the touch sensor 1505 and the display 170. The touch sensor 1505 is configured to detect a touch operation performed on or near the touch sensor 1505. The touch sensor 1505 may transfer the detected touch operation to the application processor, to determine a type of a touch event. A visual output related to the touch operation may be provided through the display 170. In some other embodiments, the touch sensor 1505 may be alternatively disposed on a surface of the electronic device 100, and is located at a location different from that of the display 170.

The pressure sensor 1506 is configured to sense a pressure signal, and can convert the pressure signal into an electrical signal. In some embodiments, the pressure sensor 1506 may be disposed on the display 170. There are a plurality of types of pressure sensors 1506, such as a resistive pressure sensor, an inductive pressure sensor, and a capacitive pressure sensor. The capacitive pressure sensor may include at least two parallel plates made of conductive materials. When a force is applied to the pressure sensor 1506, capacitance between electrodes changes. The electronic device 100 determines pressure intensity based on the change in the capacitance. When a touch operation is performed on the display 170, the electronic device 100 detects intensity of the touch operation through the pressure sensor 1506. The electronic device 100 may also calculate a touch position based on a detection signal of the pressure sensor 1506. In some embodiments, touch operations that are performed in a same touch location but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on the icon of Messages, an instruction for creating an SMS message is executed.

The bone conduction sensor 1507 may obtain a vibration signal. In some embodiments, the bone conduction sensor 1507 may obtain a vibration signal of a vibration bone of a human vocal-cord part. The bone conduction sensor 1507 may alternatively be in contact with a human pulse to receive a blood pressure beating signal. In some embodiments, the bone conduction sensor 1507 may alternatively be disposed in a headset to form a bone conduction headset. The audio module 160 may obtain a speech signal through parsing based on the vibration signal that is of the vibration bone of the vocal-cord part and obtained by the bone conduction sensor 1507, to implement a speech function. The application processor may parse heart rate information based on the blood pressure beating signal obtained by the bone conduction sensor 1507, to implement a heart rate detection function.

The audio module 160 is configured to convert digital audio information into an analog audio signal output, and is also configured to convert an analog audio input into a digital audio signal. The audio module 160 may be further configured to: encode and decode an audio signal. In some embodiments, the audio module 160 may be disposed in the processor 110, or some functional modules in the audio module 160 are disposed in the processor 110.

The loudspeaker 1601, also referred to as a "horn", is configured to convert an electrical audio signal into a sound signal. The electronic device 100 may be configured to listen to music or answer a hands-free call by using the loudspeaker 1601.

The microphone 1602, also referred to as a "mike" or a "mic", is configured to convert a sound signal into an electrical signal. When making a call or sending a voice message, a user may make a sound by moving a human mouth close to the microphone 1602 to input a sound signal to the microphone 1602. At least one microphone 1602 may be disposed in the electronic device 100. In some other embodiments, two microphones 1602 may be disposed in the electronic device 100, to collect a sound signal and implement a noise reduction function. In some other embodiments, three, four, or more microphones 1602 may alternatively be disposed in the electronic device 100, to collect a sound signal, implement noise reduction, and identify a sound source, so as to implement a directional recording function and the like.

The electronic device 100 implements a display function through the GPU, the display 170, the application processor, and the like. The GPU is a microprocessor for image processing, and is connected to the display 170 and the application processor. The GPU is configured to: perform mathematical and geometric computation, and render an image. The processor 110 may include one or more GPUs, which execute program instructions to generate or change display information. The display 170 is configured to display an image, a video, and the like. The display 170 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, QLED), or the like. In some embodiments, the electronic device 100 may include one or N displays 170, where N is a positive integer greater than 1.

The power switch 180 may be configured to control a power supply to supply power to the electronic device 100.

The motor 190 may generate a vibration prompt. The motor 190 may be used for an incoming call vibration prompt, or may be used for a touch vibration feedback. For example, touch operations performed on different applications (for example, photographing and audio playing) may correspond to different vibration feedback effect. The motor 190 may also correspond to different vibration feedback effect for touch operations performed on different areas of the display 170. Different application scenarios (for example, a time reminder, information receiving, an alarm clock, and a game) may also correspond to different vibration feedback effect. Touch vibration feedback effect may further be customized.

The button 1000 includes a power button, a volume button, and the like. The button 1000 may be a mechanical button, or may be a touch button. The electronic device 100 may receive a button input, and generate a button signal input related to a user setting and function control of the electronic device 100.

It may be understood that the structure shown in this embodiment of the present invention does not constitute a specific limitation on the electronic device 100. In some other embodiments of this application, the electronic device 100 may have more or fewer components than those shown in the figure, or combine some of the components, or split some of the components, or have different component arrangements. The components shown in the figure may be implemented by hardware, software, or a combination of software and hardware.

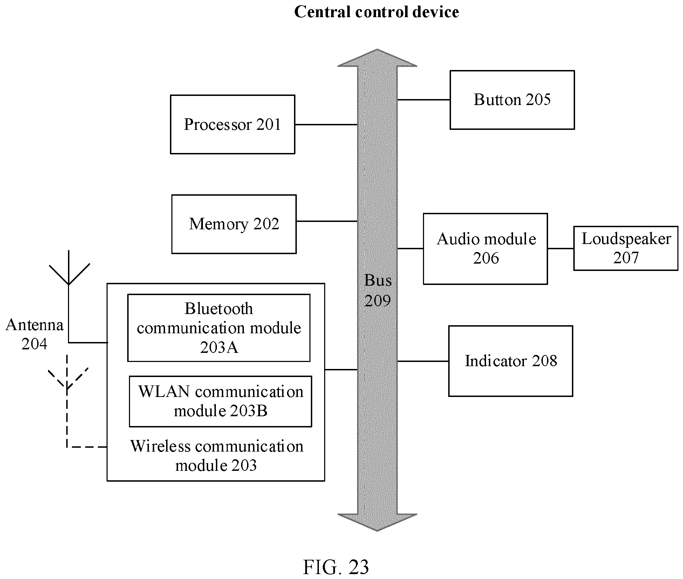

FIG. 23 shows an example of a schematic diagram of a structure of a central control device.

It should be noted that the central control device shown in FIG. 23 is merely an example, and the central control device may have more or fewer components than those shown in FIG. 23, or combine two or more components, or have different component configurations. The components shown in FIG. 23 may be implemented in hardware including one or more signal processors and/or application-specific integrated circuits, software, or a combination of hardware and software.

As shown in FIG. 23, the central control device may include a processor 201, a memory 202, a wireless communication processing module 203, a button 205, an antenna 204, an audio module 206, a loudspeaker 207, an indicator 208, and a bus 209. The processor 201, the memory 202, the wireless communication processing module 203, the button 205, the audio module 206, and the indicator 208 may be connected through the bus 209.

The processor 201 may be configured to: read and execute computer-readable instructions. During specific implementation, the processor 201 may mainly include a controller, an arithmetic unit, and a register. The controller is mainly responsible for instruction decoding, and sends a control signal for an operation corresponding to the instruction. The arithmetic unit is mainly responsible for storing a register operand, an intermediate operation result, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

A memory may be further disposed in the processor 201, and is configured to store instructions and data. In some embodiments, the memory in the processor 201 is a cache. The memory may store instructions or data just used or cyclically used by the processor 201. If the processor 201 needs to use the instructions or the data again, the processor may directly invoke the instruction or the data from the memory. This avoids repeated access and reduces a waiting time period of the processor 201, to improve system efficiency.

The memory 202 is coupled to the processor 201, and is configured to store various software programs and/or a plurality of groups of instructions. The memory 202 may be configured to store computer-executable program code. The executable program code includes instructions. The processor 201 runs the instructions stored in the memory 202, to implement various functional applications and data processing of the central control device. The memory 202 may include a program storage area and a data storage area. The program storage area may store an operating system, an application required by at least one function (for example, a sound playing function or an image playing function), and the like. The data storage area may store data (for example, an audio frame) and the like created when the central control device is used. In addition, the memory 202 may include a high-speed random access memory, and may further include a non-volatile memory, for example, at least one magnetic disk storage device, a flash memory device, or a universal flash storage (universal flash storage, UFS).

The wireless communication module 203 may provide a wireless communication solution that includes a wireless local area network (wireless local area network, WLAN) (for example, a wireless fidelity (wireless fidelity, Wi-Fi) network), Bluetooth (Bluetooth, BT), and the like and that is applied to the central control device.

In some embodiments, the wireless communication processing module 203 may include a Bluetooth (BT) communication processing module 203A and a WLAN communication processing module 203B. One or more of the Bluetooth (BT) communication processing module 203A and the WLAN communication processing module 203B may monitor a signal transmitted by another device, for example, a probe request or a scan signal, and may send a response signal, for example, a probe response or a scan response, so that the another device can discover the central control device, and the central control device establishes a wireless communication connection with the another device, and communicates with the another device by using one or more wireless communication technologies in Bluetooth or WLAN. The Bluetooth (BT) communication processing module 203A may provide a solution that includes one or more Bluetooth communication in classic Bluetooth (BR/EDR) or Bluetooth low energy (Bluetooth low energy, BLE). The WLAN communication processing module 203B may include one or more WLAN communication solutions in Wi-Fi direct, Wi-Fi LAN, or Wi-Fi SoftAP.

The antenna 204 may be configured to transmit and receive electromagnetic wave signals. Antennas of different communication modules may be multiplexed, or may be independent of each other, to improve antenna utilization.

The button 205 may include one or more of a power button, a volume button, a previous switch button, a next switch button, a play/pause button, and the like. The button 205 may be a mechanical button, or may be a touch button. The central control device may receive a button input, and generate a button signal input related to function control of the central control device. For example, when the central control device plays audio data broadcast by an electronic device 100, the central control device may receive an input of a user on the play/pause button, and in response to the input, the central control device may send a pause instruction to the electronic device 100 through a Wi-Fi direct connection established with the electronic device 100, to trigger the electronic device 100 to pause broadcasting the audio data to the central control device.

In some embodiments, the central control device may further include a battery, a charging management module, and a power management module. The battery may be configured to supply power to the central control device. The charging management module is configured to receive a charging input from a charger. The charger may be a wireless charger or a wired charger. In some embodiments of wired charging, the charging management module may receive a charging input of a wired charger through a USB port. In some embodiments of wireless charging, the charging management module may receive a wireless charging input through a wireless charging coil of the central control device. When charging the battery, the charging management module may further supply power to the electronic device through the power management module. The power management module is configured to connect to the battery, the charging management module, and the processor 201. The power management module receives an input from the battery and/or the charging management module, and supplies power to the processor 201, the memory 202, the wireless communication module 203, and the like. The power management module may be further configured to monitor parameters such as a battery capacity, a quantity of battery cycles, and a battery health status (electric leakage or impedance). In some other embodiments, the power management module may alternatively be disposed in the processor 201. In some other embodiments, the power management module and the charging management module may alternatively be disposed in a same component.

The audio module 206 may be configured to convert digital audio information into an analog audio signal output, and is also configured to convert an analog audio input into a digital audio signal. The audio module 206 may be further configured to: encode and decode an audio signal. In some embodiments, the audio module 206 may be disposed in the processor 201, or some functional modules in the audio module 206 are disposed in the processor 201.

The loudspeaker 207 may be connected to the audio module 206, and the loudspeaker 207 may be configured to convert an audio electrical signal into a sound signal.

Optionally, the central control device may further include a microphone (not shown in FIG. 23), and the microphone may be configured to convert a sound signal into an electrical signal. When the user controls the central control device by using a speech instruction, the user may make a sound near the microphone through the mouth of the user, to input a sound signal to the microphone. The indicator 208 may be an indicator light, and may be configured to indicate a charging status and a power change, or may be configured to indicate a message, a notification, and the like. The implementations of this application may be randomly combined, to achieve different technical effect.

Persons of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A smart home control method, wherein the method comprises:
receiving, by a first device, a first instruction of a first user, and controlling a second device to operate by using a first operating parameter; and
receiving, by the first device, a second instruction of a second user, and controlling the second device to operate by using a second operating parameter, or controlling a third device to operate by using a third operating parameter, wherein
semantic content of the first instruction is the same as that of the second instruction, the first operating parameter is different from the second operating parameter, and the second device is different from the third device.

2. The method according to claim 1, wherein before the receiving, by a first device, a first instruction of a first user, the method further comprises:
when the first device detects that a spatial distance between a geographical location of a fourth device of the first user and a geographical location of the second device is within a preset distance, or a time period required for the fourth device to reach a geographical location of the second device is within a preset time period, controlling, by the first device, a fifth device to operate by using a fourth operating parameter, wherein
the second device is different from the fifth device.

3. The method according to claim 2, wherein the fourth device and the first device are a same device.

4. The method according to claim 2 or 3, wherein after the controlling, by the first device, a second device to operate by using a first operating parameter, the method further comprises:
after the first device controls the second device to operate, for a first time period, by using the first operating parameter, controlling, by the first device, a sixth device to operate by using a fifth operating parameter, wherein
the sixth device is different from the second device, and the sixth device is different from the fifth device.

5. The method according to any one of claims 1 to 4, wherein the receiving, by a first device, a first instruction of a first user, and controlling a second device to operate by using a first operating parameter specifically comprises:
receiving, by the first device, the first instruction of the first user, detecting a first operation of the first user, and controlling the second device to operate by using the first operating parameter.

6. The method according to any one of claims 1 to 5, wherein after the receiving, by a first device, a first instruction of a first user, the method further comprises:
detecting, by the first device, a second operation of the first user, and controlling a seventh device to operate by using a sixth operating parameter.

7. The method according to any one of claims 1 to 6, wherein the receiving, by a first device, a first instruction of a first user, and controlling a second device to operate by using a first operating parameter specifically comprises:
receiving, by the first device, the first instruction of the first user, and determining a seventh operating parameter that is of the second device and that is indicated by the first instruction;
outputting, by the first device, first prompt information when the seventh operating parameter does not meet a first condition; and
receiving, by the first device, the first operating parameter entered by the first user, and controlling the second device to operate by using the first operating parameter.

8. The method according to any one of claims 1 to 7, wherein after the controlling, by the first device, a second device to operate by using a first operating parameter, the method further comprises:
when the first device detects that the first operating parameter does not meet a second condition, controlling, by the first device, the second device to operate by using an eighth operating parameter.

9. The method according to any one of claims 1 to 8, wherein after the controlling, by the first device, a second device to operate by using a first operating parameter, the method further comprises:
when the first device detects that the first device is about to switch from a first scene mode to a second scene mode, controlling, by the first device, an eighth device to operate by using the eighth operating parameter corresponding to the second scene mode.

10. The method according to any one of claims 1 to 9, wherein after the receiving, by the first device, a first instruction of a second user, and before the controlling, by first device, the second device to operate by using a second operating parameter, the method further comprises:
outputting, by the first device, second prompt information, wherein the second prompt information is used to prompt a user whether to modify an operating parameter of the second device; and
receiving, by the first device, a third instruction entered by the first user or the second user, and controlling the second device to operate by using the second operating parameter.

11. The method according to any one of claims 1 to 10, wherein before the receiving, by a first device, a first instruction of a first user, the method further comprises:
receiving, by the first device, the eighth parameter that is of the second device and that is entered by the first user;
outputting, by the first device, third prompt information when the eighth operating parameter does not meet the second condition; and
receiving and storing, by the first device, the first operating parameter that is of the second device and that is entered by the first user.

12. The method according to any one of claims 1 to 11, wherein before the receiving, by a first device, a first instruction of a first user, the method further comprises:
receiving, by the first device, the second parameter that is of the second device and that is entered by the first user or the third operating parameter that is of the third device and that is entered by the first user; and
storing, by the first device, the second operating parameter that is of the second device and that is entered by the first user or the third operating parameter that is of the third device and that is entered by the first user.

13. The method according to any one of claims 1 to 12, wherein the receiving, by a first device, a first instruction of a first user, and controlling a second device to operate by using a first operating parameter specifically comprises:
receiving, by the first device, the first instruction of the first user;
obtaining, by the first device, identity information of the first user based on the first instruction, wherein the identity information comprises one or more of a fingerprint feature, a voiceprint feature, a facial feature, and a body action type; and
determining, by the first device, the second device and the first operating parameter based on the identity information of the first user.

14. The method according to any one of claims 1 to 13, wherein the first instruction comprises one or more of the following: a speech signal, face image information, fingerprint image information, an identifier, and a scene mode identifier.

15. The method according to any one of claims 1 to 13, wherein the first instruction is a first speech signal, and the receiving, by a first device, a first instruction of a first user specifically comprises:
receiving, by the first device, the first speech signal of the first user; and
performing, by the first device, semantic analysis on the first speech signal to obtain the first instruction; or
determining, by the first device, the first instruction based on an audio feature of the first speech signal, wherein the audio feature comprises one or more of the following: a tempo, a rhythm, a pitch, and a melody.

16. The method according to claim 4, wherein the first device is any one of the following: a smart speaker, a robot manager, a large screen device, a smart door, a mobile phone, a tablet, a smartwatch, a smart band, and a server;
the fifth device is any one of the following: a smart air conditioner, a smart fan, an air purifier, and a floor sweeping robot;
the second device is any one of the following: a smart lamp; and
the sixth device is any one of the following: a smart television and a projector.

17. An electronic device, wherein the electronic device is a first device, and the first device comprises one or more processors and one or more memories; the one or more memories are coupled to the one or more processors, the one or more memories are configured to store computer program code, and the computer program code comprises computer instructions; and the one or more processors invoke the computer instructions, to enable the first device to perform the method according to any one of claims 1 to 16.

18. A computer-readable storage medium, comprising instructions, wherein when the instructions are run on a first device, the first device is enabled to perform the method according to any one of claims 1 to 16.

19. A computer program product, wherein when the computer program product runs on a first device, the first device is enabled to perform the method according to any one of claims 1 to 16.
